# EUROPEAN PATENT SPECIFICATION

(11) **EP 4 439 071 B1**
(45) Date of publication and mention of the grant of the patent: **27.05.2026**
(21) Application number: 24165814.5
(22) Date of filing: 25.03.2024
(51) Int. Cl.: G01N 35/00, G01N 35/02, G01N 35/04

(54) **SPECIMEN MEASUREMENT APPARATUS AND SPECIMEN MEASUREMENT METHOD**
PROBENMESSVORRICHTUNG UND PROBENMESSVERFAHREN
APPAREIL DE MESURE D'ÉCHANTILLON ET PROCÉDÉ DE MESURE D'ÉCHANTILLON

(30) Priority: 29.03.2023 JP 2023053616
(43) Date of publication of application: 02.10.2024
(73) Proprietor: SYSMEX CORPORATION, Kobe-shi Hyogo 651-0073 (JP)
(72) Inventor: TADA, Masashi, Kobe-shi, Hyogo, 651-0073 (JP); KATSUMI, Hironori, Kobe-shi, Hyogo, 651-0073 (JP); OHFUCHI, Masashi, Kobe-shi, Hyogo, 651-0073 (JP)
(74) Representative: Becker Kurig & Partner Patentanwälte mbB

(56) References cited:
- EP-A1- 4 089 420
- JP-A- 2011 179 919
- US-A1- 2014 286 824

## Description

### FIELD OF THE INVENTION

The present invention relates to a specimen measurement apparatus and a specimen measurement method.

### BACKGROUND OF THE INVENTION

Conventionally, specimen measurement apparatuses each including a specimen transport device that transports a specimen rack to a measurement unit for measuring a specimen and that collects the transported specimen rack from the measurement unit have been known. In addition, specimen measurement apparatuses that can measure an urgent specimen that is highly urgent for measurement in preference to a normal ordinary specimen have also been proposed (see, for example, International Publication No. WO2016/017442 and Japanese Laid-Open Patent Publication No. 2009-8552). The apparatus in International Publication No. WO2016/017442 is configured to shunt a rack holding an ordinary specimen from a sampling line for performing specimen suction to a predetermined standby position when a measurement request for an urgent specimen is detected. In the apparatus in Japanese Laid-Open Patent Publication No. 2009-8552, a rack holding an urgent specimen is not drawn to a normal specimen suction position and is stopped on a main transport line, and the urgent specimen is suctioned.

In the apparatus in International Publication No. WO2016/017442, a rack for an ordinary specimen present on the sampling line needs to be shunted at the time of measuring an urgent specimen, and thus the efficiency of transport of specimen racks deteriorates. In addition, in the apparatus in Japanese Laid-Open Patent Publication No. 2009-8552, after a sampling probe of a specimen dispensing device suctions the urgent specimen on the main transport line, the sampling probe moves so as to pass through a position above the ordinary specimen suction position and dispenses the urgent specimen into a reaction container on a reaction disc, and thus there is a concern that the specimen having adhered on the sampling probe falls off at the ordinary specimen suction position so as to be mixed in a container for an ordinary specimen.

JP 2011 179919 A discusses a specimen processing device that includes a measuring instrument.

EP 4 089 420 A1 discusses a sample analysis system and a sample scheduling method therefor.

### SUMMARY OF THE INVENTION

The mentioned problems are solved by the subject-matter of the independent claims. Further preferred embodiments are defined in the dependent claims. Subject matter discussed throughout the following but not falling under the scope of the claims does not form part of the invention.

### BRIEF DESCRIPTION OF THE DRAWINGS

FIG. 1 is a schematic perspective view of a specimen measurement apparatus in the present embodiment;
FIG. 2 is a schematic perspective view showing a specimen rack;
FIG. 3 is a schematic perspective view showing a portion of a specimen transport unit;
FIG. 4 is a schematic side view showing an upper portion of the specimen transport unit in an enlarged manner;
FIG. 5 is a perspective view for explaining an internal structure of the specimen transport unit;
FIG. 6 is a perspective view for explaining an interruption specimen rack setting part;
FIG. 7 is a perspective view for explaining a first lifting/lowering part;
FIG. 8 is a perspective view for explaining a lifting/lowering placement part;
FIG. 9 is a perspective view schematically showing a rack fixation mechanism in a second lifting/lowering part;
FIG. 10 is a diagram for explaining an operation of a second reading part;
FIG. 11 is a plan view for explaining a configuration of a measurement unit;
FIG. 12 is a schematic cross-sectional view for explaining the configuration of the measurement unit;
FIG. 13 is a perspective view schematically showing a specimen dispensing part;
FIG. 14 is a block diagram showing a configuration regarding control of the specimen measurement apparatus;
FIG. 15 shows a transport path for an ordinary specimen rack;
FIG. 16 is a diagram for explaining an operation of the specimen transport unit performed at the time of transporting an ordinary specimen rack;
FIG. 17 is a flowchart for explaining an operation, of the specimen measurement apparatus, regarding an ordinary specimen process;
FIG. 18 is a flowchart for explaining an ordinary specimen rack sending-out process;
FIG. 19 is a flowchart for explaining a rack collection process;
FIG. 20 is a flowchart for explaining a specimen measurement process;
FIG. 21 is a diagram for explaining a flow of specimen measurement;
FIG. 22 shows a transport path for an urgent specimen rack;
FIG. 23 is a diagram for explaining the transport path for an urgent specimen rack and an operation of the specimen measurement apparatus performed in the case of interruption measurement of urgent specimens;
FIG. 24 is a diagram for explaining an operation of the specimen dispensing part;
FIG. 25 is a flowchart for explaining an urgent specimen interruption process;
FIG. 26 is a flowchart for explaining an urgent specimen rack sending-out process;
FIG. 27 is a schematic diagram for explaining a first modification;
FIG. 28 is a diagram for explaining a transport path for an urgent specimen rack and an operation of the specimen measurement apparatus performed in the case of interruption measurement of urgent specimens, in the first modification;
FIG. 29 is a schematic diagram for explaining a second modification;
FIG. 30 is a schematic diagram for explaining a third modification; and
FIG. 31 is a schematic diagram for explaining a fourth modification.

### DETAILED DESCRIPTION

Hereinafter, a specimen measurement apparatus and a specimen measurement method according to an exemplary embodiment of the present disclosure will be described in detail with reference to the drawings.

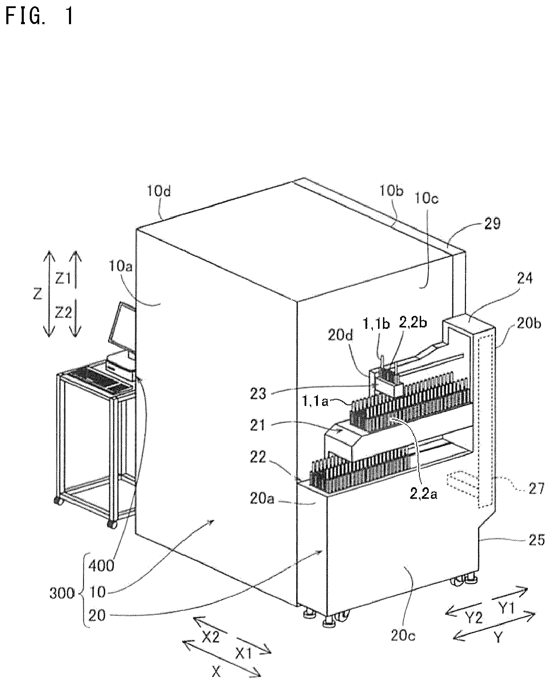

As shown in FIG. 1, a specimen measurement apparatus 300 includes a measurement unit 10, a specimen transport unit 20, and an analysis unit 400.

The measurement unit 10 is configured to suction a specimen from a specimen container 1 and measure the suctioned specimen. Specifically, the measurement unit 10 is an immunoassay device that detects an analyte in the specimen by utilizing an antigen-antibody reaction. The specimen is serum or plasma.

The measurement unit 10 has a front surface 10a, a rear surface 10b, and a pair of side surfaces 10c and 10d. The measurement unit 10 has a structure in which various mechanisms for performing specimen measurement are accommodated in a box-like housing. The front surface 10a, the rear surface 10b, and the pair of side surfaces 10c and 10d are respectively a front surface, a rear surface, and a pair of side surfaces of the housing.

Hereinafter, in a horizontal plane, a lateral direction extending along the front surface 10a of the measurement unit 10 is defined as an X direction, and directions to one side and another side in the X direction are respectively defined as an X1 direction and an X2 direction. In the horizontal plane, a front-rear direction extending along the side surfaces 10c and 10d of the measurement unit 10 is defined as a Y direction, and a direction to the farther side (rear surface 10b side) and a direction to the nearer side (front surface 10a side) in the Y direction are respectively defined as a Y1 direction and a Y2 direction. An up-down direction orthogonal to the X direction and the Y direction is defined as a Z direction, and an upward direction and a downward direction in the Z direction are respectively defined as a Z1 direction and a Z2 direction.

The specimen transport unit 20 is configured to transport a specimen container 1 to a position at which a specimen is to be suctioned by the measurement unit 10. The measurement unit 10 suctions a specimen from the specimen container 1 transported to the suction position by the specimen transport unit 20 and measures the suctioned specimen.

The specimen transport unit 20 allows a specimen rack 2, which holds a specimen container 1, to be set thereon. On the specimen transport unit 20, a specimen rack 2 holding a specimen container 1 having yet to be subjected to specimen suction by the measurement unit 10 is set by a user. The specimen transport unit 20 is configured to transport the specimen rack 2 having been set thereon toward the measurement unit 10. The specimen transport unit 20 is configured to collect and store thereon a specimen rack 2 holding a specimen container 1 having been subjected to specimen suction by the measurement unit 10 (hereinafter, referred to as a specimen rack 2 having been subjected to specimen suction). The specimen rack 2 having been subjected to specimen suction is taken out from the specimen transport unit 20 by the user.

The specimen transport unit 20 is disposed on the X1 side relative to the measurement unit 10 so as to be adjacent to the side surface 10c on one side (X1 side) of the measurement unit 10. The specimen transport unit 20 extends in the front-rear direction (Y direction) along the side surface 10c on the X1 side of the measurement unit 10. The specimen transport unit 20 has a front surface 20a, a rear surface 20b, and a pair of side surfaces 20c and 20d. The front surface 20a and the rear surface 20b are end surfaces in the long-side direction (Y direction) of the specimen transport unit 20. The pair of side surfaces 20c and 20d are end surfaces in the short-side direction (X direction) of the specimen transport unit 20.

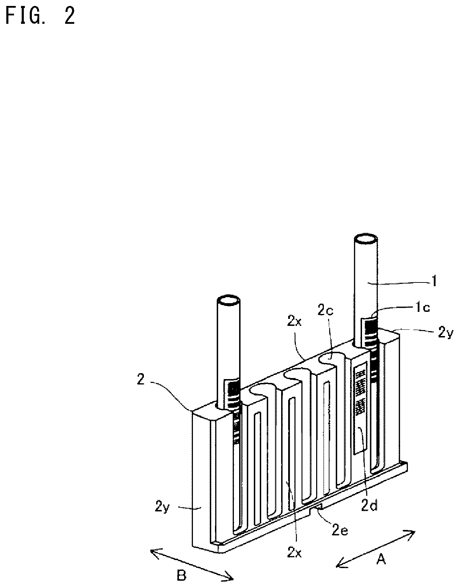

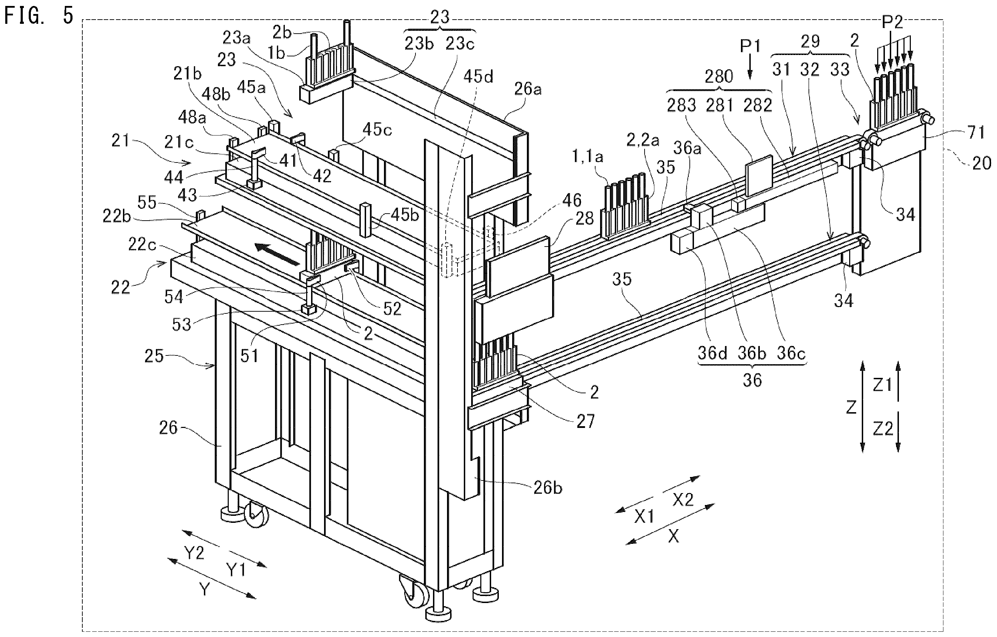

As shown in FIG. 2, the specimen rack 2 has the shape of a rectangular parallelepiped including a pair of long-side side surfaces 2x and a pair of short-side side surfaces 2y. The direction in which the long-side side surfaces 2x extend is a long-side direction A of the specimen rack 2, and the direction in which the short-side side surfaces 2y extend is a short-side direction B of the specimen rack 2. The specimen rack 2 has a plurality of holding holes 2c extending downward from the upper surface thereof. One specimen container 1 is inserted into one of the holding holes 2c so that the specimen container 1 is held. The plurality of holding holes 2c are linearly provided at intervals along the long-side direction A of the specimen rack 2. A barcode label 2d indicating identification information for identifying the specimen rack 2 is pasted on the long-side side surface 2x on one side. An engagement groove 2e to be engaged with an engagement piece 36a (see FIG. 5) of a laterally-sending mechanism 36 described later is formed in a bottom portion of the specimen rack 2.

The specimen container 1 is a cylindrical container having a cylindrical shape and having an opened upper end and a closed bottom portion. A specimen collected from a subject is contained inside the specimen container 1. A barcode label 1c indicating identification information for identifying the specimen container 1 is pasted on the side surface of the specimen container 1. Each of the holding holes 2c is in the form of a cut leading to the long-side side surface 2x on the one side, and the side surface of the corresponding specimen container 1 inserted into the holding hole 2c is partially exposed from the long-side side surface 2x on the one side. A user inserts the specimen container 1 into the holding hole 2c with the specimen container 1 being oriented such that the barcode label 1c of the specimen container 1 is exposed from the cut leading to the long-side side surface 2x.

As measurement targets for the specimen measurement apparatus 300, there are normal ordinary specimens and interruption specimens to be measured in preference to the ordinary specimens. As specifically described later, the specimen measurement apparatus 300 can swiftly measure an interruption specimen and swiftly restart measurement of an ordinary specimen after the interruption specimen is measured. Examples of the interruption specimen include: an urgent specimen as a specimen from a subject; a control specimen that contains a predetermined component in a predetermined amount and that is used for quality control of the measurement unit 10; a calibrator used for creating a calibration curve for converting a detection signal outputted from the measurement unit 10 into a concentration of the predetermined component; and the like.

In the present embodiment, each of these specimens is contained in the same type of specimen container 1 which is held by the same type of specimen rack 2, and this specimen rack 2 is transported to the measurement unit 10. Hereinafter, description will be given with the interruption specimen being an urgent specimen that is highly urgent for measurement. For convenience of description, a first specimen container containing an ordinary specimen is sometimes referred to as an "ordinary specimen container 1a", and a second specimen container containing an urgent specimen is sometimes referred to as an "urgent specimen container 2b". In addition, a first specimen rack holding the ordinary specimen container 1a is sometimes referred to as an "ordinary specimen rack 2a", and a second specimen rack holding the urgent specimen container 1b is sometimes referred to as an "urgent specimen rack 2b".

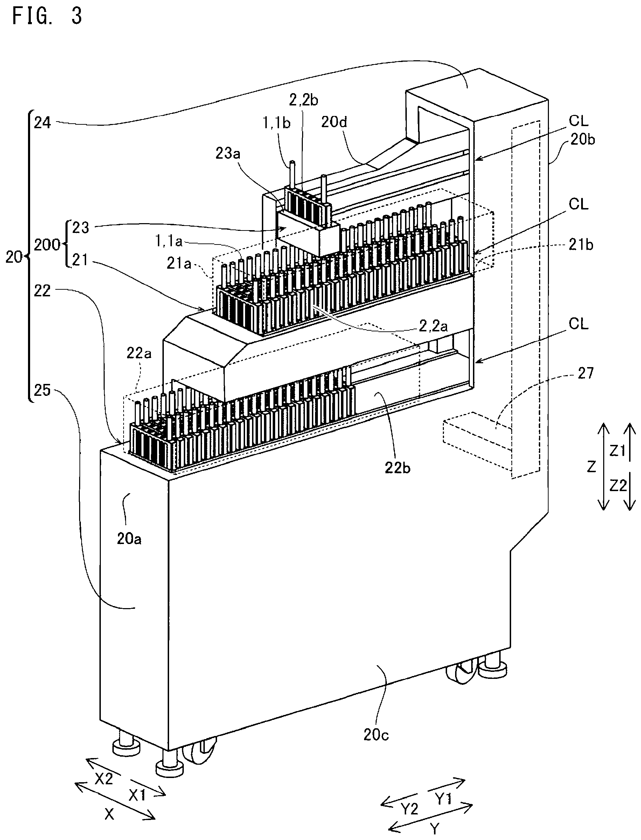

FIG. 3 is a perspective view schematically showing a portion of the specimen transport unit 20. As shown in FIG. 1 and FIG. 3, the specimen transport unit 20 includes a specimen rack setting part 200, a rack collection part 22, a first lifting/lowering part 27, and a transport mechanism 29 (see FIG. 5 described later). The specimen rack setting part 200 includes an ordinary specimen rack setting part 21 and an interruption specimen rack setting part 23. In addition, the specimen transport unit 20 includes a cover part 24. The cover part 24 is an exterior member of the specimen transport unit 20 and covers the first lifting/lowering part 27, the transport mechanism 29, and the like. In the present embodiment, a specimen rack setting part which allows an ordinary specimen rack 2a to be set thereon and a specimen rack setting part which allows an urgent specimen rack 2b to be set thereon are separately provided.

On the ordinary specimen rack setting part 21, an ordinary specimen rack 2a holding ordinary specimen containers 1a containing ordinary specimens is set. The ordinary specimen rack setting part 21 is configured to allow a plurality of the ordinary specimen racks 2a to be set thereon. The ordinary specimen rack setting part 21 is configured to sequentially transport the set ordinary specimen racks 2a toward the measurement unit 10. On the interruption specimen rack setting part 23, an urgent specimen rack 2b holding urgent specimen containers 1b containing urgent specimens to be measured in preference to the ordinary specimens is set. The number of racks that can be set on the interruption specimen rack setting part 23 is smaller than the number of racks that can be set on the ordinary specimen rack setting part 21. For example, the number of racks that can be set on the ordinary specimen rack setting part 21 is 25, and the number of racks that can be set on the interruption specimen rack setting part 23 is 1.

When there is an urgent specimen to be measured prior to the specimens of the ordinary specimen racks 2a set on the ordinary specimen rack setting part 21, a user sets, on the interruption specimen rack setting part 23, an urgent specimen rack 2b holding an urgent specimen container 1b containing the urgent specimen. When the urgent specimen rack 2b is set on the interruption specimen rack setting part 23, the ordinary specimen rack setting part 21 temporarily stops sending out the ordinary specimen racks 2a, and the interruption specimen rack setting part 23 preferentially (i.e., as an interruption process) sends out the set urgent specimen rack 2b toward the measurement unit 10.

The rack collection part 22 is configured to collect a specimen rack 2 holding a specimen container 1 having been subjected to specimen suction by the measurement unit 10. The rack collection part 22 is configured to be able to hold a plurality of the specimen racks 2 and store the specimen racks 2 until a user takes out the specimen racks 2. The number of racks that can be stored on the rack collection part 22 is equal to or larger than the number of racks that can be set on the ordinary specimen rack setting part 21 and is, for example, 30.

Each of the ordinary specimen rack setting part 21, the rack collection part 22, and the interruption specimen rack setting part 23 allows a specimen rack 2 to be set thereon so as to be oriented such that: the long-side direction A of the specimen rack 2 coincides with the X direction; and the short-side direction B of the specimen rack 2 coincides with the Y direction. On each of the ordinary specimen rack setting part 21 and the rack collection part 22, a plurality of specimen racks 2 are set side-by-side along the Y direction. Each of the ordinary specimen rack setting part 21, the rack collection part 22, and the interruption specimen rack setting part 23 is configured to transport a specimen rack 2 holding specimen containers 1 in the short-side direction of the specimen rack 2 (i.e., Y direction).

In the present embodiment, the interruption specimen rack setting part 23, the ordinary specimen rack setting part 21, and the rack collection part 22 are arranged in the up-down direction. That is, the specimen transport unit 20 has a layered structure composed of three layers, i.e., the interruption specimen rack setting part 23, the ordinary specimen rack setting part 21, and the rack collection part 22. Consequently, as compared to a case where all of the interruption specimen rack setting part 23, the ordinary specimen rack setting part 21, and the rack collection part 22 are arranged at different positions in a plan view, the installation area of the device can be decreased. In addition, three work positions for setting and collecting specimen racks 2 (the setting position for an urgent specimen, the setting position for an ordinary specimen, and the take-out position for a post-measurement specimen rack) can be set to coincide with one another, whereby load of a user's work regarding setting and collection of specimen racks 2 can be effectively reduced.

The interruption specimen rack setting part 23 is disposed above the ordinary specimen rack setting part 21 and the rack collection part 22. Since the interruption specimen rack setting part 23 which is subjected to work by a user less often is disposed on the upper side, the ordinary specimen rack setting part 21 and the rack collection part 22 which are subjected to work by a user more often can be disposed at lower height positions. In addition, since the ordinary specimen rack setting part 21 and the rack collection part 22 each of which allows a larger number of specimen racks 2 to be set thereon are disposed on the lower side, the center of gravity of the specimen transport unit 20 is present at a lower position, whereby the specimen transport unit 20 can be structurally stabilized.

In addition, the ordinary specimen rack setting part 21 is disposed above the rack collection part 22. That is, the rack collection part 22 at the first layer, the ordinary specimen rack setting part 21 at the second layer, and the interruption specimen rack setting part 23 at the third layer are arranged in this order from the lower side (in the Z2 direction) toward the upper side (in the Z1 direction). For a user, the first layer at the lowest position is the position for work of taking out specimen racks 2, and the second layer and the third layer are the positions for work of setting specimen racks 2.

The interruption specimen rack setting part 23, the ordinary specimen rack setting part 21, and the rack collection part 22 are provided so as to be adjacent to the side surface 10c (see FIG. 1) on the X1 direction side of the measurement unit 10 and so as to extend in the front-rear direction along the side surface 10c. Consequently, the specimen transport unit 20 has a configuration in which three layers of units (the interruption specimen rack setting part 23, the ordinary specimen rack setting part 21, and the rack collection part 22) each extending in the front-rear direction along the side surface 10c of the measurement unit 10 are arranged in the up-down direction, whereby the space occupied by the specimen transport unit 20 can be effectively made small.

In addition, each of the interruption specimen rack setting part 23, the ordinary specimen rack setting part 21, and the rack collection part 22 has a single transport lane CL on which a specimen rack 2 is transported. On the ordinary specimen rack setting part 21 and the rack collection part 22, specimen racks 2 are linearly arrayed along the Y direction. Consequently, the occupation areas, in the horizontal plane, of the interruption specimen rack setting part 23, the ordinary specimen rack setting part 21, and the rack collection part 22 can be made smaller than those in a case where the interruption specimen rack setting part 23, the ordinary specimen rack setting part 21, and the rack collection part 22 include a plurality of lanes in the horizontal plane. As a result, the installation area of the specimen transport unit 20 can be effectively decreased.

The specimen transport unit 20 in the present embodiment is configured to allow a specimen rack 2 to be taken out therefrom or set thereon even during operation of the specimen transport unit 20. To this end, the cover part 24 of the specimen transport unit 20 is provided such that a rack storing region 22a of the rack collection part 22 and a rack storing region 21a of the ordinary specimen rack setting part 21 are not covered and are exposed to outside.

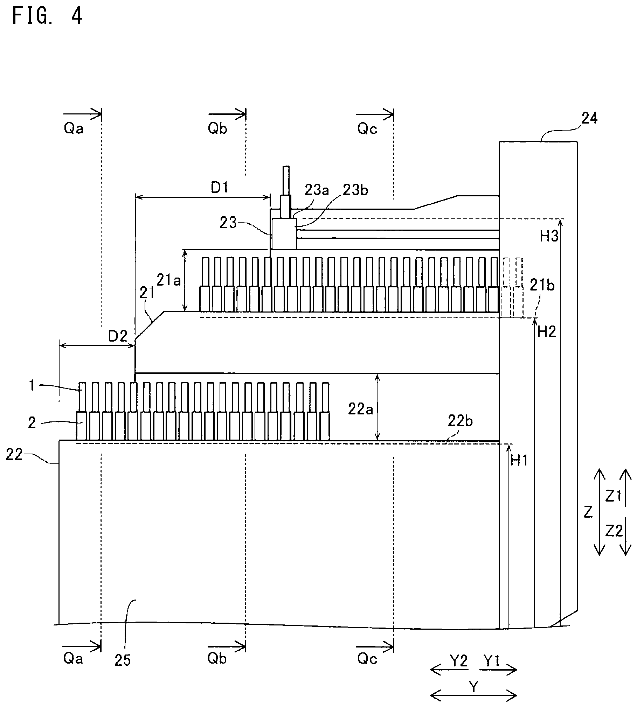

As shown in FIG. 4, a placement surface 22b, for specimen racks 2, of the rack collection part 22 is located at a height H1. A placement surface 21b of the ordinary specimen rack setting part 21 is located at a height H2. A placement surface 23a of the interruption specimen rack setting part 23 is located at a height H3. Each of the heights H1 to H3 means a height from the floor surface on which the specimen transport unit 20 is installed. The heights of the respective placement surfaces are in a relationship of height H1<height H2<height H3. For example, the height H1 is about 65 cm, and the height H3 is about 105 cm. Although the heights H1 to H3 are not limited, the height H1 may be preferably not lower than 35 cm and not higher than 95 cm and more preferably not lower than 45 cm and not higher than 85 cm from the viewpoint of making it easy to set and take out a specimen rack 2. From the same viewpoint, the height H3 may be preferably not lower than 75 cm and not higher than 135 cm and more preferably not lower than 85 cm and not higher than 125 cm.

The height range between the placement surface 22b of the rack collection part 22 and the lower surface of the ordinary specimen rack setting part 21 is the rack storing region 22a, on the placement surface 22b, in which a specimen rack 2 is stored. The height range between the placement surface 21b of the ordinary specimen rack setting part 21 and the lower surface of the interruption specimen rack setting part 23 is the rack storing region 21a, on the placement surface 21b, in which a specimen rack 2 is stored.

The cover part 24 is provided so as to cover the specimen transport unit 20 such that ranges, of the side surface 20c on the X1 side of the specimen transport unit 20, that correspond to the rack storing regions 21a and 22a on the placement surfaces 21b and 22b are exposed to outside. Consequently, in the present embodiment, each of the rack collection part 22 and the ordinary specimen rack setting part 21 is configured to allow a specimen rack 2 to be taken out therefrom or set thereon in the long-side direction A of the specimen rack 2 during operation of the specimen transport unit 20.

Each of the interruption specimen rack setting part 23, the ordinary specimen rack setting part 21, and the rack collection part 22 extends along the front-rear direction (Y direction) of the measurement unit 10, has a front end portion, and is configured to allow a specimen rack 2 to be set on or taken out from the front end portion. That is, the cover part 24 is provided such that front end portions (end portions on the Y2 direction side) of the respective rack storing regions 21a and 22a of the ordinary specimen rack setting part 21 and the rack collection part 22 are also exposed.

Furthermore, the front end portion of the interruption specimen rack setting part 23 is located on the rear side (in the Y1 direction) relative to the front end portion of the ordinary specimen rack setting part 21. Consequently, a space that is not covered by the interruption specimen rack setting part 23 can be ensured above the front end portion of the ordinary specimen rack setting part 21. Therefore, even though the interruption specimen rack setting part 23 is provided above the ordinary specimen rack setting part 21, a specimen rack 2 can be set on the front end portion of the ordinary specimen rack setting part 21 from above, whereby workability in setting a specimen rack 2 can be improved.

Likewise, the front end portion of the ordinary specimen rack setting part 21 is located on the rear side relative to the front end portion of the rack collection part 22. Consequently, a space that is not covered by the ordinary specimen rack setting part 21 can be ensured above the front end portion of the rack collection part 22. Therefore, even though the ordinary specimen rack setting part 21 is provided above the rack collection part 22, a specimen rack 2 can be taken out upward from the front end portion of the rack collection part 22, whereby workability in collecting a specimen rack 2 can be improved. In addition, the upper side relative to specimen racks 2 on the front end portion of the rack collection part 22 is not covered and is exposed, whereby visibility at the time of checking the specimen racks 2 by a user is improved.

Hereinafter, an internal structure of the specimen transport unit 20 will be described in detail with reference to FIG. 5 and FIG. 6 to FIG. 10. FIG. 5 schematically shows an internal structure of the specimen transport unit 20 and shows a state where the cover part 24 has been detached.

As shown in FIG. 5, the specimen transport unit 20 has a structure in which the ordinary specimen rack setting part 21, the rack collection part 22, and the interruption specimen rack setting part 23 are connected to the transport mechanism 29 via the first lifting/lowering part 27. That is, the specimen transport unit 20 has rack transport paths through which: specimen racks 2 set on the ordinary specimen rack setting part 21 and the interruption specimen rack setting part 23 are transported to the transport mechanism 29 so as to pass through the first lifting/lowering part 27; and the specimen racks 2 are collected on the rack collection part 22 after passing through the first lifting/lowering part 27 from the transport mechanism 29.

FIG. 5 shows a state where an urgent specimen rack 2b is set on the interruption specimen rack setting part 23 during measurement of ordinary specimens. In general, an urgent specimen rack 2b is set on the interruption specimen rack setting part 23 in a state where a plurality of ordinary specimen racks 2a are set on the ordinary specimen rack setting part 21. However, for convenience of description, such ordinary specimen racks 2a on the ordinary specimen rack setting part 21 are not shown.

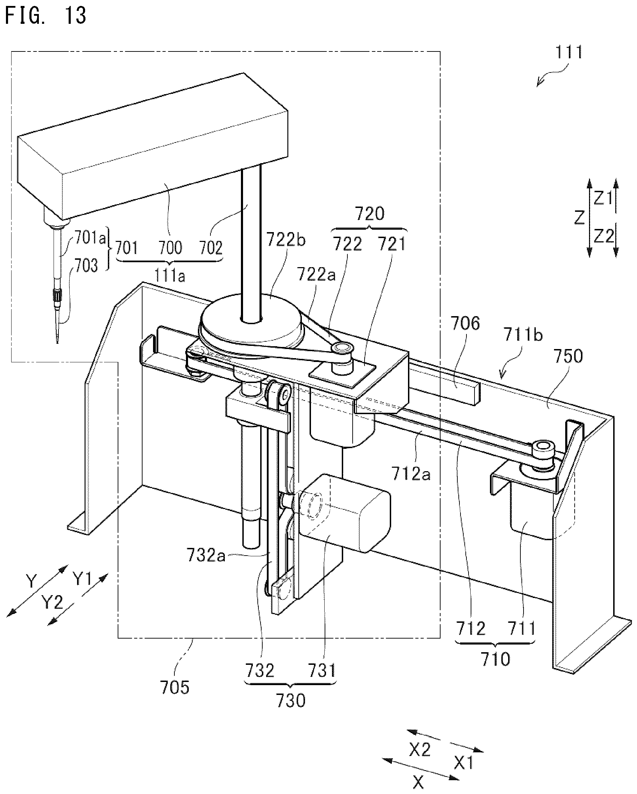

The transport mechanism 29 includes a first transport path 31, a second transport path 32, and a second lifting/lowering part 33. In the present embodiment, a first specimen suction position P1 at which a specimen is to be suctioned from an ordinary specimen container 1a is set on the first transport path 31. The first transport path 31 is disposed above the second transport path 32, and, through the first transport path 31, a specimen rack 2 is transported via the specimen suction position P1. In addition, a second specimen suction position P2 at which a specimen is to be suctioned from an urgent specimen container 1b is set at a position, on the upper side of the second lifting/lowering part 33, at the same height as that of the specimen suction position P1. The second transport path 32 is a transport path extending so as to be parallel to the first transport path 31, and, through the second transport path 32, an urgent specimen rack 2b is transported to the second lifting/lowering part 33. As described later, a specimen dispensing part 111 (see FIG. 13 described later) can move a suction tube 701 in the X direction and suctions a specimen from an ordinary specimen container 1a that has been transported through the first transport path 31 and that has been placed at the specimen suction position P1. The specimen dispensing part 111 sequentially moves the suction tube 701 in the X direction to the positions of urgent specimen containers 1b held by an urgent specimen rack 2b placed at the same height position as that of the first transport path 31 by the second lifting/lowering part 33 and sequentially suctions specimens from the respective urgent specimen containers 1b. In the present embodiment, the urgent specimen rack 2b can hold six urgent specimen containers 1b, and thus there are six specimen suction positions P2.

As described above, the ordinary specimen rack setting part 21, the rack collection part 22, and the interruption specimen rack setting part 23 each extend in the Y direction and are arranged side-by-side in the up-down direction (Z direction). The first transport path 31 and the second transport path 32 of the transport mechanism 29 each extend in the X direction, are arranged side-by-side in the up-down direction, and are provided so as to be perpendicular to the ordinary specimen rack setting part 21, the rack collection part 22, and the interruption specimen rack setting part 23. The first lifting/lowering part 27 is disposed so as to be adjacent to end portions in the X1 direction of the first transport path 31 and the second transport path 32, and the second lifting/lowering part 33 is disposed so as to be adjacent to end portions in the X2 direction of the first transport path 31 and the second transport path 32. In the present embodiment, the ordinary specimen rack setting part 21, the rack collection part 22, the interruption specimen rack setting part 23, the first transport path 31, and the second transport path 32 are located at respective different heights. The first transport path 31 has a transport surface (upper surface) located at a position that is higher than the position of the placement surface 22b of the rack collection part 22 and that is lower than the position of the placement surface 21b of the ordinary specimen rack setting part 21. The second transport path 32 has a transport surface (upper surface) located at a position that is lower than the position of the placement surface 22b of the rack collection part 22.

As specifically described later, the specimen transport unit 20 is operated such that: an ordinary specimen rack 2a set on the ordinary specimen rack setting part 21 is transported to the specimen suction position P1 on the first transport path 31 via the first lifting/lowering path 27; and an ordinary specimen rack 2a having been subjected to specimen suction is returned to the rack collection part 22 via the second lifting/lowering part 33 and the second transport path 32. For transporting an ordinary specimen rack 2a from the ordinary specimen rack setting part 21 to the specimen suction position P1 via the first lifting/lowering path 27, the first lifting/lowering path 27 is lifted or lowered to the height position of the ordinary specimen rack setting part 21, receives the ordinary specimen rack 2a from the ordinary specimen rack setting part 21, and then is lowered to the height position of the first transport path 31 so as to relay the ordinary specimen rack 2a to the first transport path 31. For returning an ordinary specimen rack 2a from the second transport path 32 to the rack collection part 22 via the first lifting/lowering path 27, the first lifting/lowering path 27 is lowered to the height position of the second transport path 32, receives the ordinary specimen rack 2a from the second transport path 32, and then is lifted to the height position of the rack collection part 22 so as to relay the ordinary specimen rack 2a to the rack collection part 22. In addition, the specimen transport unit 20 is operated such that: an urgent specimen rack 2b set on the interruption specimen rack setting part 23 is transported to the specimen suction positions P2 on the second lifting/lowering part 33 via the first lifting/lowering path 27 and the second transport path 32; and an urgent specimen rack 2b having been subjected to specimen suction is returned to the rack collection part 22 via the second lifting/lowering part 33 and the second transport path 32. For transporting an urgent specimen rack 2b from the interruption specimen rack setting part 23 to the specimen suction positions P2 via the first lifting/lowering path 27, the first lifting/lowering path 27 is lifted to the height position of the interruption specimen rack setting part 23, receives the urgent specimen rack 2b from the interruption specimen rack setting part 23, and then is lowered to the height position of the second transport path 32 so as to relay the urgent specimen rack 2b to the second transport path 32. For returning an urgent specimen rack 2b from the second transport path 32 to the rack collection part 22 via the first lifting/lowering path 27, the first lifting/lowering path 27 is lowered to the height position of the second transport path 32, receives the urgent specimen rack 2b from the second transport path 32, and then is lifted to the height position of the rack collection part 22 so as to relay the urgent specimen rack 2b to the rack collection part 22.

The specimen transport unit 20 further includes a first reading part 28 and a second reading part 280. The first reading part 28 and the second reading part 280 are configured to read identification information about each of a specimen rack 2 and specimen containers 1 thereon. The first reading part 28 is disposed so as to be fixed to a frame at a position adjacent to the Y1 side of the first lifting/lowering part 27 and reads identification information about each of a specimen rack 2 and specimen containers 1 thereon on the first lifting/lowering part 27. The second reading part 280 is disposed so as to be adjacent to the Y1 side of the first transport path 31 and is configured be movable in the X direction along the first transport path 31. The second reading part 280 reads identification information about each of a specimen rack 2 and specimen containers 1 thereon at the specimen suction positions P1 and P2.

The specimen transport unit 20 further includes a base part 25 supporting the rack collection part 22 from below. The rack collection part 22 is provided on the base part 25. Each of the rack collection part 22, the ordinary specimen rack setting part 21, and the interruption specimen rack setting part 23 is mounted on a chassis 26.

Hereinafter, each of the constituents of the specimen transport unit 20 will be further described in detail.

### [Ordinary Specimen Rack Setting Part]

The ordinary specimen rack setting part 21 includes: the placement surface 21b which allows a plurality of specimen racks 2 (ordinary specimen racks 2a) to be placed thereon; and a movement mechanism 21c which is disposed below the placement surface 21b and which moves the specimen racks 2 on the placement surface 21b. A user can set a specimen rack 2 at any position on the placement surface 21b.

The movement mechanism 21c has a first claw 41 and a second claw 42 which come into contact with any of the specimen racks 2 on the placement surface 21b so as to move the specimen racks 2 in the Y1 direction. The first claw 41 is disposed on the X1 side above the placement surface 21b, and the second claw 42 is disposed on the X2 side above the placement surface 21b. The first claw 41 is attached to a rotation shaft 44 extending from a slider 43 (the same applies to the second claw 42). The slider 43 is, for example, slidably attached to a guide shaft extending in the Y direction and is fixed to a predetermined position on an endless belt extending along the guide shaft. Through drive of the belt, the first claw 41 and the second claw 42 are moved in the Y direction so as to move each of the specimen racks 2 in the Y1 direction, whereby the specimen rack 2 is relayed to the first lifting/lowering part 27.

The movement mechanism 21c includes origin sensors 48a and 48b which detect respective origin positions of the first claw 41 and the second claw 42. The origin positions are set on an end portion in the Y2 direction of the ordinary specimen rack setting part 21. The first claw 41 and the second claw 42 are configured such that, when the first claw 41 and the second claw 42 come into contact with a specimen rack 2 at the time of returning to the origin positions from an end portion in the Y1 direction of the ordinary specimen rack setting part 21, the first claw 41 and the second claw 42 are rotated owing to a reaction force from the specimen rack 2 and do not move the specimen rack 2 in the Y1 direction.

The ordinary specimen rack setting part 21 is provided with: rack presence/absence sensors 45a, 45b, 45c, and 45d for performing detection as to whether or not there is a specimen rack 2 set on the placement surface 21b; and a rear-end sensor 46 for performing detection as to whether or not there is a specimen rack 2 at a portion (rear end portion) immediately in front of a relay position for a specimen rack 2. The rack presence/absence sensors 45a and 45b are a light emitter and a light receiver of a transmission-type optical sensor, and transmit and receive detection light that obliquely crosses the space above half the placement surface 21b on the Y2 side. Likewise, the rack presence/absence sensors 45c and 45d are a light emitter and a light receiver of a transmission-type optical sensor, and transmit and receive detection light that obliquely crosses the space above half the placement surface 21b on the Y1 side. The rack presence/absence sensors 45a, 45b, 45c, and 45d perform detection as to whether or not there is a specimen rack 2, regardless of the position at which the specimen rack 2 has been set on the placement surface 21b. The rear-end sensor 46 is a reflection-type optical sensor and is disposed on a rear end portion (an end portion in the Y1 direction) of the placement surface 21b.

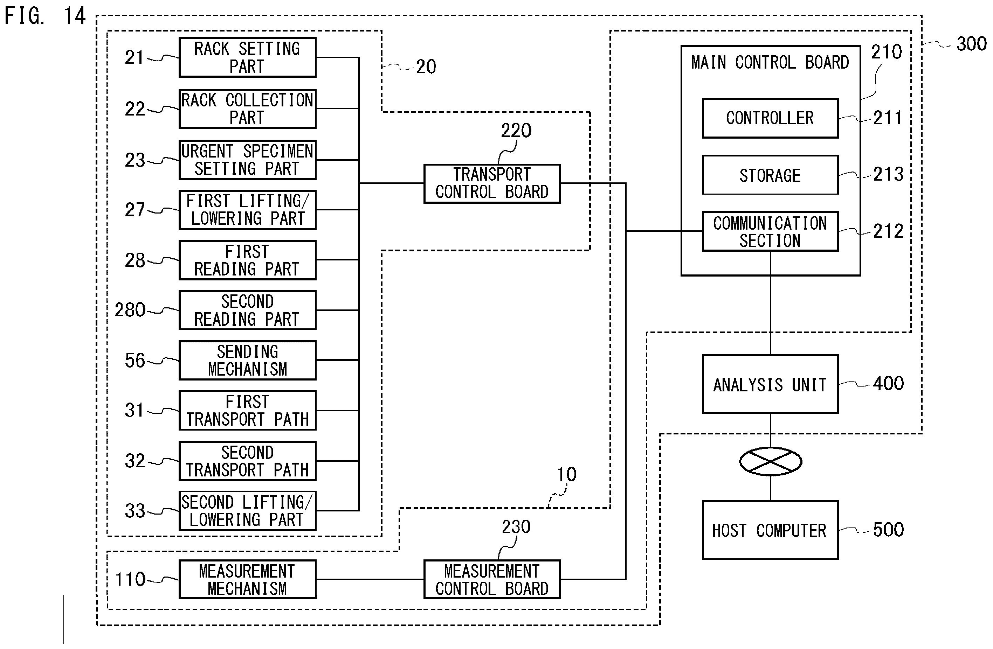

When the rack presence/absence sensors 45a to 45d detect a specimen rack 2, the ordinary specimen rack setting part 21 moves, under the control of a controller 211 (see FIG. 14) described later, the specimen rack 2 in the Y1 direction toward the first lifting/lowering part 27 present at a relay position for the ordinary specimen rack setting part 21 by the movement mechanism 21c.

The rear end portion of the ordinary specimen rack setting part 21 is provided with a rack returning mechanism. Regarding a specimen rack 2 remaining on the ordinary specimen rack setting part 21 without being relayed to the first lifting/lowering part 27, the rack returning mechanism has a function of returning the specimen rack 2 in the Y2 direction by a predetermined safety distance from the rear end portion of the ordinary specimen rack setting part 21. Consequently, the specimen rack 2 remaining on the ordinary specimen rack setting part 21 retracts to the Y2 side (specifically, to a position at which the specimen rack 2 is detected by the rear-end sensor 46), whereby the specimen rack 2 can be prevented from falling off from the rear end portion.

### [Rack Collection Part]

The rack collection part 22 includes: the placement surface 22b which allows a plurality of specimen racks 2 to be placed thereon; and a movement mechanism 22c which is disposed below the placement surface 22b and which moves the specimen racks 2 on the placement surface 22b. A user can take out a specimen rack 2 from any position on the placement surface 22b. The rack collection part 22 collects both ordinary specimen racks 2a and urgent specimen racks 2b.

The movement mechanism 22c has a structure similar to that of the movement mechanism 21c of the ordinary specimen rack setting part 21. The movement mechanism 22c has a first claw 51 and a second claw 52 which come into contact with any of the specimen racks 2 on the placement surface 22b so as to move the specimen racks 2 in the Y2 direction. The first claw 51 is attached to a rotation shaft 54 extending from a slider 53 (the same applies to the second claw 52). Through drive of a belt to which the slider 53 is fixed, the first claw 51 and the second claw 52 are moved in the Y direction so as to move each of the specimen racks 2 in the Y2 direction. A rear end portion of the rack collection part 22 is provided with origin sensors which detect respective origin positions of the first claw 51 and the second claw 52.

The rack collection part 22 is provided with an arrival detector 55 for detecting that the specimen rack 2 set on the placement surface 22b has arrived at a front end portion of the placement surface 22b. In addition, the rack collection part 22 is provided with a sending mechanism 56 (see FIG. 14) which sends a specimen rack 2 on the first lifting/lowering part 27 to the rack collection part 22. Under the control of the controller 211, when the first lifting/lowering part 27 holding a specimen rack 2 is disposed at a relay position for the rack collection part 22, the rack collection part 22 performs a sending operation of sending the specimen rack 2 by the sending mechanism 56 and, after performing the sending operation, performs a movement operation of moving the specimen rack 2 in the Y2 direction toward the front end portion by the movement mechanism 22c.

### [Interruption Specimen Rack Setting Part]

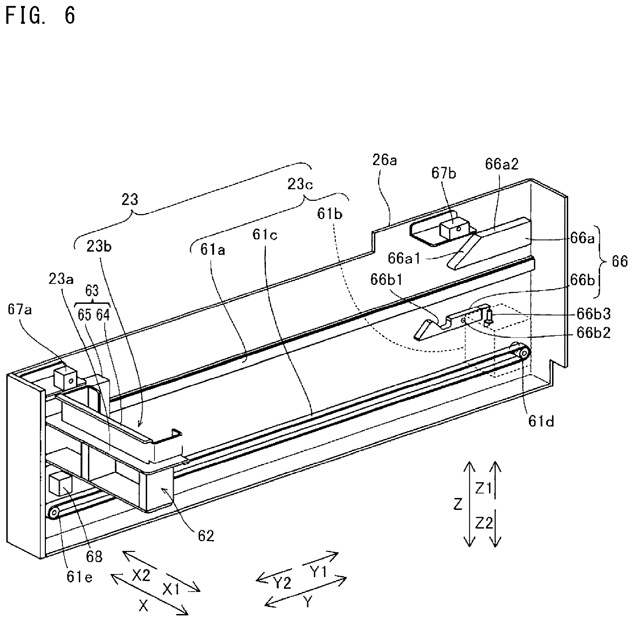

FIG. 6 is a perspective view of the interruption specimen rack setting part 23. As shown in FIG. 5 and FIG. 6, the interruption specimen rack setting part 23 includes: a placement base 23b which allows a specimen rack 2 (urgent specimen rack 2b) to be placed thereon; and a placement base movement mechanism 23c which supports the placement base 23b in a cantilever configuration and moves the placement base 23b in the Y1 direction. The placement base 23b includes a table part 62 and an arm part 63 engaged with each other. The upper surface of the table part 62 serves as the placement surface 23a, of the interruption specimen rack setting part 23, on which a specimen rack 2 is placed. The placement surface 23a of the table part 62 has such a size as to allow one specimen rack 2 to be placed thereon.

The placement base movement mechanism 23c includes a guide rail 61a, a placement base drive part 61b, and a transmission part. The guide rail 61a, the placement base drive part 61b, and the transmission part are attached to a side surface member 26a on the X2 side of the chassis 26. The guide rail 61a extends along the Y direction. The placement base drive part 61b is, for example, a stepping motor. The transmission part is a belt-pulley mechanism composed of a belt 61c and pulleys 61d and 61e. The placement base drive part 61b rotationally drives the pulley 61d, to move the belt 61c in a circulating manner.

The arm part 63 includes: an arm 64 formed on the placement surface 23a; and a support 65 provided with a slider movably engaged with the guide rail 61a. The arm 64 is formed in the shape of a frame so as to enclose the periphery of a specimen rack 2 set on the placement surface 23a and holds the specimen rack 2 so as to prevent the specimen rack 2 from falling off from the placement surface 23a. The support 65 is connected to the belt 61c. Thus, through drive of the belt 61c, the arm part 63 is moved in the Y direction. The table part 62 has a slider movably engaged with the guide rail 61a as in the arm part 63. However, the table part 62 is not connected to the belt 61c and is moved together with the arm part 63 which is in an engaged state.

The support 65 of the arm part 63 includes: a first member including the slider; and a second member including a roller which moves onto a tilted block 66a described later. The support 65 has a structure in which the second member is connected to the first member so as to be slidable relative thereto in the Z direction. The table part 62 is engaged with the roller provided to the second member of the support 65.

The interruption specimen rack setting part 23 includes an engagement switching mechanism 66 which switches the state of engagement between the table part 62 and the arm part 63. The engagement switching mechanism 66 is provided to an end portion in the Y1 direction so as to be adjacent to the first lifting/lowering part 27 present at a relay position for the interruption specimen rack setting part 23. The engagement switching mechanism 66 includes the tilted block 66a and a positioning member 66b. The tilted block 66a has: a tilted surface 66a1 tilted such that the height thereof increases in the Y1 direction from the Y2-side end of the tilted surface 66a1; and a horizontal surface 66a2 extending in the Y1 direction from the Y1-side end of the tilted surface 66a1. The positioning member 66b has an engagement recess 66b1 and is provided so as to be rotatable about a rotation shaft 66b2.

When the table part 62 and the arm part 63 are moved in the Y1 direction through drive of the belt 61c, the roller of the second member of the support 65 moves onto the tilted block 66a so that the second member is lifted, whereby the table part 62 and the arm part 63 are disengaged from each other. Then, only the arm part 63 is moved in the Y1 direction with the table part 62 being left behind. Consequently, the specimen rack 2 placed on the table part 62 is pushed and moved in the Y1 direction by the arm 64 so as to be sent out to the first lifting/lowering part 27.

The table part 62 includes a roller to be fitted into the recess 66b1 of the positioning member 66b. When the roller of the table part 62 is fitted into the recess 66b1, the table part 62 disengaged from the arm part 63 is fixed at a position adjacent to the first lifting/lowering part 27.

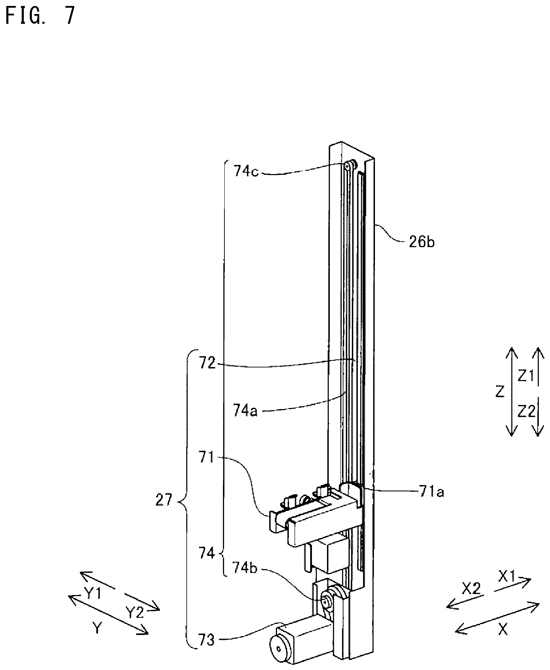

At the relay position for relaying a specimen rack 2 to the first lifting/lowering part 27, the arm 64 is located above a lifting/lowering placement part 71 (see FIG. 7 described later) of the first lifting/lowering part 27. Through movement of the lifting/lowering placement part 71 in the Z2 direction in this state, the specimen rack 2 is transported in the Z2 direction so as to pass through the inner side of the arm 64. After the specimen rack 2 passes through the arm 64, the arm part 63 is driven in the Y2 direction by the placement base drive part 61b, whereby the table part 62 and the arm part 63 are returned to the origin position. At the time of the movement from the relay position in the Y2 direction, the roller of the support 65 having moved onto the tilted block 66a moves downward on the tilted surface 66a1, whereby the table part 62 and the arm part 63 enter an engaged state again.

The interruption specimen rack setting part 23 is provided with an origin sensor 68 which is located at an end portion in the Y2 direction of the movement range of the placement base 23b (the table part 62 and the arm part 63) and which detects the placement base 23b at the origin position. In addition, the interruption specimen rack setting part 23 is provided with: a rack sensor 67a which is located at the origin position and which detects a specimen rack 2 set on the placement surface 23a; and a rack sensor 67b which is located at a position (engagement switching position) in front of the relay position and which detects the specimen rack 2 set on the placement surface 23a. As the rack sensors 67a and 67b and the origin sensor 68, reflection-type optical sensors can be used.

### [Lifting/Lowering Parts]

As shown in FIG. 5, the specimen transport unit 20 includes, as lifting/lowering parts for moving a specimen rack 2 in the up-down direction (Z direction), the first lifting/lowering part 27 and the second lifting/lowering part 33 which is a constituent of the transport device 29. The first lifting/lowering part 27 is disposed so as to be adjacent to the Y1 side of each of the ordinary specimen rack setting part 21, the rack collection part 22, and the interruption specimen rack setting part 23 and is disposed so as to be adjacent, in the X1 direction, to the first transport path 31 and the second transport path 32 which are constituents of the transport device 29. The second lifting/lowering part 33 is disposed such that the first transport path 31 and the second transport path 32 are interposed between the second lifting/lowering part 33 and the first lifting/lowering part 27.

The first lifting/lowering part 27 is configured to move in the up-down direction between the interruption specimen rack setting part 23, the ordinary specimen rack setting part 21, the rack collection part 22, the first transport path 31, and the second transport path 32 and relay a specimen rack 2. That is, the first lifting/lowering part 27 receives a specimen rack 2 from each of the interruption specimen rack setting part 23 and the ordinary specimen rack setting part 21 and relays the received specimen rack 2 to the transport mechanism 29. The first lifting/lowering part 27 receives a specimen rack 2 having been subjected to specimen suction from the second transport path 32 and relays the received specimen rack 2 to the rack collection part 22.

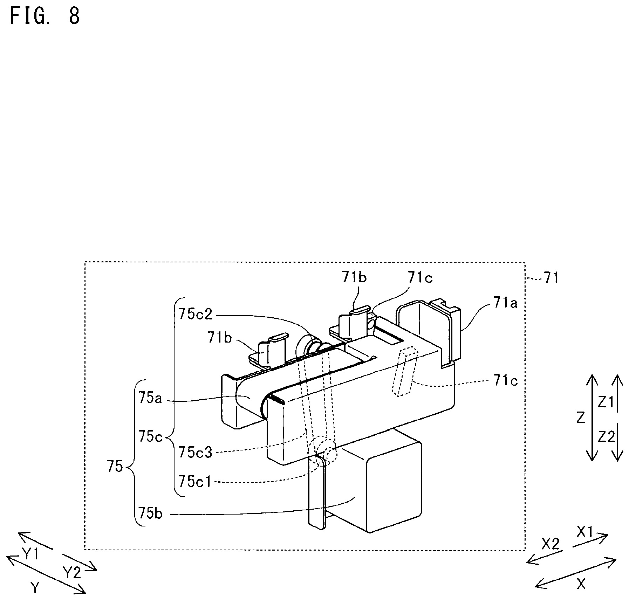

FIG. 7 and FIG. 8 are perspective views of the first lifting/lowering part 27 as seen from the Y2 side. As shown in FIG. 7 and FIG. 8, the first lifting/lowering part 27 includes the lifting/lowering placement part 71 movable upward and downward, a guide rail 72, a lifting/lowering drive part 73, and a transmission part 74. The guide rail 72, the lifting/lowering drive part 73, and the transmission part 74 are attached to a rear surface member 26b which is a portion of the chassis 26 (see FIG. 5). The guide rail 72 extends along the Z direction, and a slider 71a provided to the lifting/lowering placement part 71 is movably engaged with the guide rail 72. The lifting/lowering drive part 73 is, for example, a stepping motor. The transmission part 74 is a belt-pulley mechanism composed of a belt 74a and pulleys 74b and 74c. The lifting/lowering drive part 73 rotationally drives the pulley 74b, thereby causing the belt 74a extended onto the pulleys 74b and 74c provided on the upper and lower sides in the Z direction to move in a circulating manner. The lifting/lowering placement part 71 is fixed to a portion of the belt 74a and is moved in the Z direction along the guide rail 72 when the belt 74a is moved in a circulating manner. Consequently, the lifting/lowering placement part 71 is moved in the up-down direction (Z direction) by the lifting/lowering drive part 73.

A specimen rack 2 is placed on the lifting/lowering placement part 71. The lifting/lowering placement part 71 includes stoppers 71b, rack sensors 71c, and a laterally-sending part 75. The stoppers 71b are provided so as to be raised upward from a Y1-side end portion of the upper surface of the lifting/lowering placement part 71. A specimen rack 2 sent out in the Y1 direction from the interruption specimen rack setting part 23 or the ordinary specimen rack setting part 21 onto the lifting/lowering placement part 71 is brought into contact with the stoppers 71b so that the stoppers 71b stop the specimen rack 2. The rack sensors 71c are transmission-type light sensors. The rack sensors 71c detect that the specimen rack 2 has been placed on the lifting/lowering placement part 71.

The laterally-sending part 75 includes: a transport belt 75a to be driven in a circulating manner in the X direction; a belt drive part 75b; and a transmission part 75c. The belt drive part 75b is, for example, a stepping motor. The transmission part 75c includes: a pulley 75c1 attached to an output shaft of the belt drive part 75b; a pulley 75c2 attached to a drive shaft for the transport belt 75a; and a transmission belt 75c3 extended onto the pulleys 75c1 and 75c2. The belt drive part 75b rotates the drive shaft for the transport belt 75a via the transmission part 75c. The transport belt 75a is exposed from the upper surface of the lifting/lowering placement part 71. When the transport belt 75a is driven in a circulating manner in the X1 direction or the X2 direction by the belt drive part 75b, the specimen rack 2 placed on the lifting/lowering placement part 71 is moved in the X direction.

The second lifting/lowering part 33 is a rack reception part for receiving an ordinary specimen rack 2a having been subjected to specimen suction from the first transport path 31 and moves the received ordinary specimen rack 2a in the Z2 direction so as to relay the specimen rack 2a to the second transport path 32. The second lifting/lowering part 33 further receives an urgent specimen rack 2b from the second transport path 32 and moves the received urgent specimen rack 2b in the Z1 direction so as to place the urgent specimen rack 2b at the specimen suction positions P2. In the same manner as in the case of the ordinary specimen rack 2a, the second lifting/lowering part 33 moves, in the Z2 direction, the urgent specimen rack 2b having been subjected to specimen suction so as to relay the urgent specimen rack 2b to the second transport path 32.

The second lifting/lowering part 33 has a structure similar to that of the first lifting/lowering part 27 and includes: a lifting/lowering placement part 71 as a placement base on which a specimen rack 2 is placed; and a placement base movement part which moves the lifting/lowering placement part 71 to a position adjacent to the first transport path 31 and a position adjacent to the second transport path 32. Similar to the case of the first lifting/lowering part 27, the lifting/lowering placement part 71 includes rack sensors 71c and a laterally-sending part 75, and the placement base movement part includes a guide rail 72, a lifting/lowering drive part 73, and a transmission part 74.

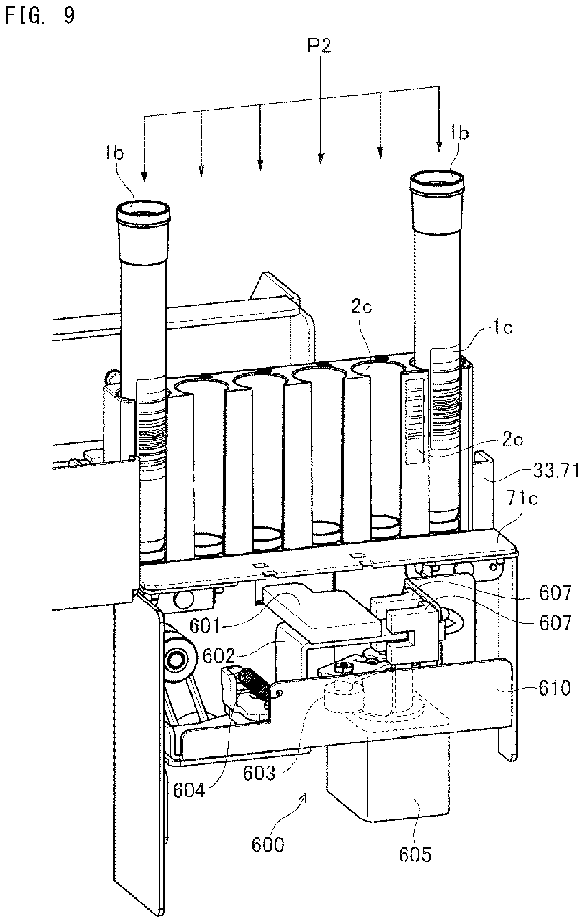

FIG. 9 is a perspective view schematically showing a rack fixation mechanism 600 in the second lifting/lowering part 33. As shown in FIG. 9, the second lifting/lowering part 33 is provided with, as an inhibiting part for inhibiting movement of an urgent specimen rack 2b on the lifting/lowering placement part 71, the rack fixation mechanism 600 including a locking plate 601 to be inserted into the engagement groove 2e (see FIG. 2) of the urgent specimen rack 2b. The rack fixation mechanism 600 is actuated at the time of suctioning a specimen from each of urgent specimen containers 1b at the corresponding specimen suction position P2 and fixes the urgent specimen rack 2b such that the urgent specimen rack 2b does not move in the X direction. Consequently, a specimen can be assuredly suctioned from the intended urgent specimen container 1b.

The rack fixation mechanism 600 includes a bracket 610 disposed on the Y1 side relative to the lifting/lowering placement part 71 and fixed to the lifting/lowering placement part 71. The bracket 610 is a metal fitting for supporting each constituent member of the rack fixation mechanism 600 and fixing the rack fixation mechanism 600 to the lifting/lowering placement part 71 and is screwed to a frame 71c of the lifting/lowering placement part 71.

The rack fixation mechanism 600 includes the locking plate 601, a locking plate bracket 602, a pressing roller 603, a pressing roller bracket 604, and a drive part 605. The locking plate 601 is fixed to the locking plate bracket 602 and is movable in the Y direction. The locking plate 601 has an end portion, in the Y2 direction, formed so as to have a width and a thickness that allow the locking plate 601 to be inserted into the engagement groove 2e of the urgent specimen rack 2b. Through movement of the locking plate 601 in the Y2 direction, the locking plate 601 is inserted into the engagement groove 2e. The drive part 605 is, for example, a motor.

The locking plate bracket 602 is fixed so as to be slidable in the Y direction relative to the bracket 610 and is moved in the Y2 direction by being pressed by the pressing roller 603. The locking plate bracket 602 is urged in the Y1 direction by an urging member 606, and, when the pressing force of the pressing roller 603 is eliminated, the locking plate bracket 602 is moved in the Y1 direction so as to return to the origin position. The urging member 606 is, for example, a tension spring and has one end fixed to the locking plate bracket 602 and another end fixed to the bracket 610.

The pressing roller 603 is fixed to a rotation shaft of the drive part 605 via the pressing roller bracket 604. The rotation shaft of the drive part 605 is rotated clockwise in a plan view, whereby the pressing roller 603 is moved in the Y2 direction so as to press the locking plate bracket 602. Consequently, the locking plate 601 is moved in the Y2 direction, whereby the locking plate 601 is inserted into the engagement groove 2e of the urgent specimen rack 2b placed on the lifting/lowering placement part 71.

The rack fixation mechanism 600 includes sensors 607 which detect the position of the locking plate 601. The sensors 607 are, for example, magnetic sensors and are disposed such that the locking plate 601 is sandwiched from both sides in the thickness direction of the locking plate 601. The sensors 607, the number of which is two, are arranged side-by-side in the Y direction and detect the origin position of the locking plate 601 and the position at which the locking plate 601 has been inserted into the engagement groove 2e of the urgent specimen rack 2b. The rack fixation mechanism 600 is operated under the control of the controller 211 when an urgent specimen rack 2b is placed at the specimen suction positions P2. Through the operation, the rack fixation mechanism 600 fixes the urgent specimen rack 2b such that the urgent specimen rack 2b does not move in the X direction. The rack fixation mechanism 600 may fix either of an ordinary specimen rack 2a and an urgent specimen rack 2b when the lifting/lowering placement part 71 is moved in the Z direction.

### [Reading Parts]

As shown in FIG. 5, the specimen transport unit 20 includes the first reading part 28 and the second reading part 280 as information reading parts for reading identification information about each of a specimen rack 2 and specimen containers 1 thereon. The first reading part 28 and the second reading part 280 are optical readers for reading identification information from each of the barcode label 2d (see FIGS. 2 and 9) of the specimen rack 2 and the barcode labels 1c (see FIGS. 2 and 9) of the specimen containers 1. In the present embodiment, the position of the first reading part 28 is fixed, whereas the second reading part 280 is configured to be movable in the X direction along the first transport path 31.

The first reading part 28 is provided at a position adjacent, in the Y1 direction, to the movement region of the first lifting/lowering part 27. When receiving a specimen rack 2 from the ordinary specimen rack setting part 21 or the interruption specimen rack setting part 23, the first lifting/lowering part 27 is moved in the Z direction so as to position the received specimen rack 2 at a reading position for the first reading part 28. Consequently, the first reading part 28 reads identification information about each of the specimen rack 2 and specimen containers 1 thereon.

A measurement order regarding a specimen is obtained on the basis of the identification information about each of the specimen rack 2 and the specimen containers 1 thereon read by the first reading part 28. In the present embodiment, the analysis unit 400 inquires of a host computer 500 (described later) about each piece of identification information and obtains a measurement order regarding the corresponding specimen. The identification information read by the second reading part 280 is used for a final check before specimen suction is performed. That is, the identification information about each of the specimen containers 1 placed at the specimen suction positions P1 and P2 and the identification information in the corresponding measurement order are compared immediately before specimen suction is performed.

The second reading part 280 is disposed so as to be adjacent to the Y1 side of the first transport path 31. The second reading part 280 includes: a reading part body 281 including an optical reader; a linear motion mechanism 282 which moves the reading part body 281 in the X direction; and a drive part 283 which drives the linear motion mechanism 282. The linear motion mechanism 282 is, for example, a belt-pulley mechanism, and the drive part 283 is, for example, a stepping motor. The second reading part 280 is disposed above the laterally-sending mechanism 36 so as not to interfere with the laterally-sending mechanism 36.

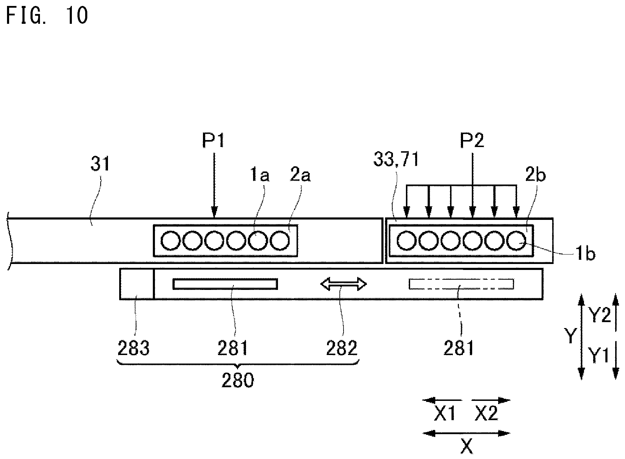

FIG. 10 is a diagram for explaining an operation of the second reading part 280. As shown in FIG. 10, the reading part body 281 of the second reading part 280 is movable in the X direction between the specimen suction position P1 on the first transport path 31 and each of the specimen suction positions P2 on the second lifting/lowering part 33. The second reading part 280 reads identification information about an ordinary specimen rack 2a at the specimen suction position P1 and reads identification information about an urgent specimen rack 2b at the specimen suction position P2. The second reading part 280 is disposed above the rack fixation mechanism 600 (see FIG. 9) of the second lifting/lowering part 33 so as not to interfere with the rack fixation mechanism 600.

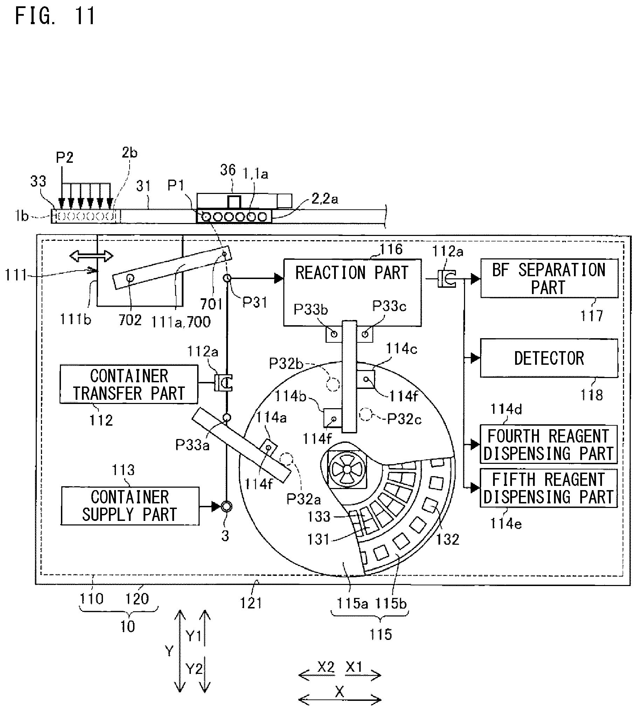

In the present embodiment, on the first transport path 31, an ordinary specimen rack 2a is moved in the X2 direction by the laterally-sending mechanism 36 such that each of ordinary specimen containers 1a on the ordinary specimen rack 2a is sequentially placed at the specimen suction position P1. Consequently, the second reading part 280 reads identification information about each of the ordinary specimen containers 1a in a state where the reading position for the reading part body 281 is fixed at the specimen suction position P1. Meanwhile, on the second lifting/lowering part 33, identification information about each of urgent specimen containers 1b is read with the reading part body 281 being moved in the X direction. As specifically described later, on the second lifting/lowering part 33, a specimen is suctioned from each of the urgent specimen containers 1b with the specimen dispensing part 111 (see FIG. 11 described later) being moved in the X direction. That is, strictly speaking, each of the positions of the holding holes 2c in the urgent specimen rack 2b is a specimen suction position P2.

### [Transport Mechanism]

As shown in FIG. 5, the transport mechanism 29 includes: the first transport path 31 and the second transport path 32 which are two transport paths arranged side-by-side in the up-down direction; and the second lifting/lowering path 33 which moves a specimen rack 2 between the two transport paths. The transport mechanism 29 is configured to: receive an ordinary specimen rack 2a from the first lifting/lowering part 27; transport the ordinary specimen rack 2a to the specimen suction position P1 on the first transport path 31; and return the ordinary specimen rack 2a having been subjected to specimen suction to the first lifting/lowering part 27. In addition, the transport mechanism 29 is configured to: receive an urgent specimen rack 2b from the first lifting/lowering part 27; transport the urgent specimen rack 2b to the specimen suction positions P2 on the second lifting/lowering part 33; and then, return the urgent specimen rack 2b having been subjected to specimen suction to the first lifting/lowering part 27 in the same manner. The configuration of the second lifting/lowering part 33 is as described above, and repetitive descriptions thereof are omitted.

Each of the first transport path 31 and the second transport path 32 includes: a drive part 34; and a transport belt 35 which is moved in a circulating manner by the drive part 34. The drive part 34 is, for example, a stepping motor. Each of the first transport path 31 and the second transport path 32 is configured to move the transport belt 35 thereof in a circulating manner so as to transport, in the X direction, a specimen rack 2 set on the upper surface of the transport belt 35. Each of the first transport path 31 and the second transport path 32 has: an X1-side end portion at which a specimen rack 2 can be relayed between said transport path and the first lifting/lowering part 27; and an X2-side end portion at which a specimen rack 2 can be relayed between said transport path and the second lifting/lowering part 33.

The first transport path 31 includes the laterally-sending mechanism 36 which is engaged with an ordinary specimen rack 2a transported onto the first transport path 31 and which moves the engaged ordinary specimen rack 2a in the X direction. The laterally-sending mechanism 36 includes: the engagement piece 36a which is engaged with the ordinary specimen rack 2a; an engagement switching part 36b which causes the engagement piece 36a to advance to a position for engagement with the ordinary specimen rack 2a on the first transport path 31 and retract to a position for disengagement from said ordinary specimen rack 2a; a linear motion mechanism 36c which moves the engagement switching part 36b in the X direction; and a drive part 36d which drives the linear motion mechanism 36c. The drive part 36d is, for example, a stepping motor. The laterally-sending mechanism 36 causes the engagement piece 36a to be engaged with the engagement groove 2e of the ordinary specimen rack 2a on the first transport path 31 and moves the ordinary specimen rack 2a such that each of the plurality of holding holes 2c of the ordinary specimen rack 2a is positioned at the specimen suction position P1 one by one. Consequently, the laterally-sending mechanism 36 sequentially moves each of the plurality of ordinary specimen containers 1a held in the respective holding holes 2c of the ordinary specimen rack 2a to the specimen suction position P1 one by one, whereby a specimen is suctioned from the ordinary specimen container 1a by the measurement unit 10.

During engagement with the laterally-sending mechanism 36, the ordinary specimen rack 2a is not moved by the transport belt 35 of the first transport path 31. Therefore, while the laterally-sending mechanism 36 is holding the first ordinary specimen rack 2a at the specimen suction position P1, the first transport path 31 can receive the second and subsequent ordinary specimen racks 2a from the first lifting/lowering part 27, and the ordinary specimen racks 2a can be transported through the first transport path 31 to the nearer side (X1 side) relative to the specimen suction position P1.

When specimens have been suctioned from all the ordinary specimen containers 1a, the laterally-sending mechanism 36 disengages the engagement piece 36a from the ordinary specimen rack 2a. The transport mechanism 29 relays the ordinary specimen rack 2a having been subjected to specimen suction from the first transport path 31 to the second lifting/lowering part 33, relays the ordinary specimen rack 2a from the second lifting/lowering part 33 to the second transport path 32, and relays the ordinary specimen rack 2a from the second transport path 32 to the first lifting/lowering part 27. Consequently, the first lifting/lowering part 27 and the transport mechanism 29 enable an ordinary specimen rack 2a to be transported from the ordinary specimen rack setting part 21 to the specimen suction position P1 and enable an ordinary specimen rack 2a having been subjected to specimen suction to be transported to the rack collection part 22.

Regarding an urgent specimen rack 2b holding urgent specimen containers 1b, the second transport path 32 receives the urgent specimen rack 2b from the first lifting/lowering part 27 and allows the urgent specimen rack 2b to be transported through the second transport path 32 to the second lifting/lowering part 33. Then, the second lifting/lowering part 33 is moved in the Z1 direction, whereby the urgent specimen rack 2b is transported to the specimen suction positions P2. That is, the urgent specimen rack 2b is transported to the specimen suction positions P2 by utilizing the path through which ordinary specimen racks 2a are collected after being subjected to specimen suction. The urgent specimen rack 2b having been subjected to specimen suction is collected from the end portion in the Z1 direction of the second lifting/lowering part 33 (specimen suction positions P2) onto the rack collection part 22 through the same path as that used in the case of ordinary specimen racks 2a.

Hereinafter, a configuration of the measurement unit 10 will be described in detail with reference to FIG. 11 to FIG. 13. FIG. 11 is a plan view schematically showing the measurement unit 10.

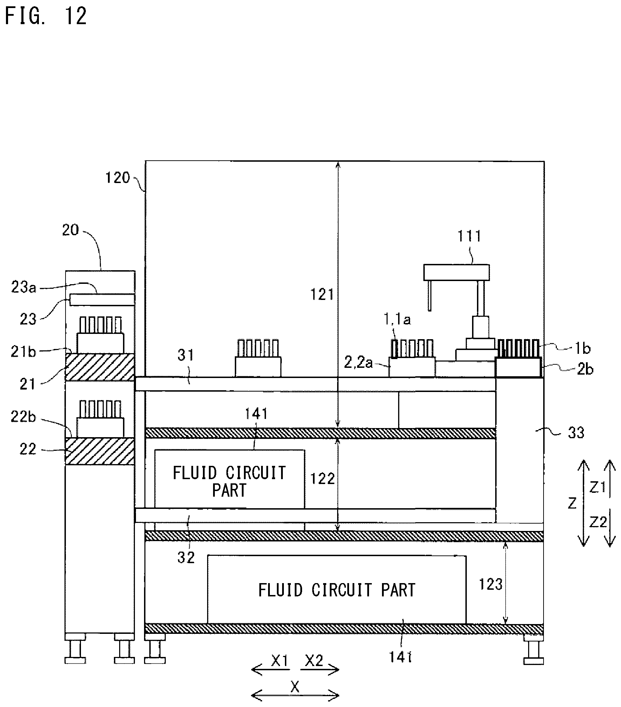

As shown in FIG. 11, the measurement unit 10 includes a measurement mechanism 110 for measuring a specimen. The measurement mechanism 110 includes the specimen dispensing part 111, a container transfer part 112, a container supply part 113, reagent dispensing parts 114a to 114e, a reagent cooling storage 115, a reaction part 116, a BF separation part 117, and a detector 118. The measurement mechanism 110 is accommodated in a first accommodation part 121 (see FIG. 12) in a housing 120. The housing 120 has the shape of a box capable of accommodating therein each of these parts of the measurement unit 10. The measurement unit 10 is configured to measure a specimen ejected into a container 3 by the specimen dispensing part 111.

The specimen dispensing part 111 is a suction part that suctions a specimen from each of an ordinary specimen container 1a present at the specimen suction position P1 and an urgent specimen container 1b present at any of the specimen suction positions P2 and that ejects the suctioned specimen into a container 3 at an ejection position. The specimen dispensing part 111 is disposed so as to face, in the Y direction, the second reading part 280 (see FIG. 5 or the like) with the first transport path 31 interposed therebetween. The specimen dispensing part 111 includes a pipette part 111a including the suction tube 701. In the present embodiment, one specimen dispensing part 111 dispenses both an ordinary specimen contained in the ordinary specimen container 1a and an urgent specimen contained in the urgent specimen container 1b.

The specimen dispensing part 111 is provided at a Y1-side (rear-surface-side) end portion in the housing 120 so as to be located near the corner on the X2 side. The specimen dispensing part 111 includes: the pipette part 111a for performing suction and ejection; and a movement mechanism 111b which moves the pipette part 111a. The movement mechanism 111b is configured to be capable of: an operation of rotating the pipette part 111a about a rotation shaft 702; an operation of moving the pipette part 111a along the up-down direction; and an operation of moving the pipette part 111a along the X direction. The specimen dispensing part 111 can move the pipette part 111a to the specimen suction position P1 on the first transport path 31 and a specimen dispensing position P31 as a specimen ejection position through the rotation about the rotation shaft 702. The specimen dispensing part 111 moves the pipette part 111a in the up-down direction, thereby causing the suction tube 701 to enter a specimen container 1 and retract from inside the specimen container 1. The suction tube 701 includes a dispensing tip 703 and a dispensing tip-mounting tube 701a on which the dispensing tip 703 is detachably mounted (see FIG. 13 described later). The suction tube 701 does not have to have a configuration in which the dispensing tip is mounted on the distal end thereof. The suction tube 701 may be a single suction tube.

With a dispensing tip 703 being mounted on the distal end of the dispensing tip-mounting tube 701a, the specimen dispensing part 111 suctions, into the dispensing tip 703, a predetermined amount of specimen in an ordinary specimen container 1a transported to the specimen suction position P1. The specimen dispensing part 111 dispenses the suctioned specimen into a container 3 placed at the specimen dispensing position P31. After the specimen is dispensed, the specimen dispensing part 111 detaches the dispensing tip 703 from the distal end of the dispensing tip-mounting tube 701a and disposes of the dispensing tip 703.

The container transfer part 112 transfers a container 3. The container transfer part 112 obtains an empty container 3 from the container supply part 113 and transfers the container 3 to each of processing positions such as the positions of the specimen dispensing part 111, the reagent dispensing parts 114a to 114e, the reaction part 116, the BF separation part 117, and the detector 118. The container transfer part 112 is composed of: a catcher 112a which grasps the container 3; and a movement mechanism which moves the catcher 112a. The movement mechanism is an orthogonal robot movable in three orthogonal axial directions which are the up-down direction and two horizontal directions. The movement mechanism may include an articulated robot mechanism and an arm mechanism to be horizontally rotated about a rotation shaft.

The container supply part 113 can store therein a plurality of unused containers 3. The container supply part 113 supplies, at a predetermined container supply position, each of the unused empty containers 3 to the container transfer part 112.

Each of the reagent dispensing parts suctions a reagent in a reagent container and dispenses the suctioned reagent into the container 3. The reagent dispensing parts include: a first reagent dispensing part 114a for dispensing an R1 reagent in a reagent container 131; a second reagent dispensing part 114b for dispensing an R2 reagent in a reagent container 132; and a third reagent dispensing part 114c for dispensing an R3 reagent in a reagent container 133. In addition, the reagent dispensing parts include a fourth reagent dispensing part 114d for dispensing an R4 reagent and a fifth reagent dispensing part 114e for dispensing an R5 reagent. The reagent containers 131, 132, and 133 are accommodated in the reagent cooling storage 115.

The first reagent dispensing part 114a can move a pipette 114f between an R1 reagent dispensing position P33a and a suction position P32a at which the R1 reagent is suctioned. The second reagent dispensing part 114b can move a pipette 114f between an R2 reagent dispensing position P33b and a suction position P32b at which the R2 reagent is suctioned. The third reagent dispensing part 114c can move a pipette 114f between an R3 reagent dispensing position P33c and a suction position P32c at which the R3 reagent is suctioned.

The fourth reagent dispensing part 114d and the fifth reagent dispensing part 114e are provided at positions away from the reagent cooling storage 115. The fourth reagent dispensing part 114d and the fifth reagent dispensing part 114e are connected via liquid sending tubes to reagent containers containing the R4 reagent and the R5 reagent, respectively, and can eject the respective reagents into the container 3 transferred by the container transfer part 112.

The reagent cooling storage 115 has a container holding part 115b in a case 115a having a heat insulation structure. The container holding part 115b holds the reagent containers. In the case 115a, the reagents in the reagent containers are kept being cooled by a cooler at a fixed temperature suitable for preservation. The upper surface of the case 115a is provided with hole portions that can be opened/closed so as to allow the pipettes 114f to enter the case 115a at the suction position P32a, the suction position P32b, and the suction position P32c.

The container holding part 115b is formed such that a plurality of the reagent containers are held side-by-side in the circumferential direction. The container holding part 115b can independently rotate, in the circumferential direction, a plurality of rows of the reagent containers concentric with one another. Consequently, the container holding part 115b allows desired reagent containers, selected from these rows of reagent containers being held, to be placed at positions directly below the respective suction positions P32a to P32c. In the container holding part 115b, the reagent containers 131, 132, and 133 respectively containing the R1 reagent, the R2 reagent, and the R3 reagent are set.

The reaction part 116 includes a heater and a temperature sensor, holds a container 3, and heats a sample contained in the container 3 so as to cause a reaction. Through the heating, the specimen and the reagents contained in the container 3 are reacted with each other.

The BF separation part 117 has a function of performing a BF separation process of separating the liquid phase and the solid phase from the container 3. In a state where magnetic particles on which an immune complex (described later) has been formed are aggregated by magnetic force, the BF separation part 117 suctions a liquid component inside the container 3 by a suction tube and supplies a washing liquid by an ejection tube. The BF separation part 117 is configured to thus remove an unnecessary substance contained in the liquid component inside the container 3 by separating the substance from the magnetic particles on which the immune complex has been formed.

The detector 118 detects, by a photodetector, light generated in the course of a reaction between a luminescent substrate and a labeled antibody bound to an antigen of the specimen and outputs a detection signal based on the amount of the detected light. The photodetector includes, for example, a photomultiplier tube.

FIG. 12 schematically shows a cross section, taken in the Z direction, of the specimen measurement apparatus 300. As shown in FIG. 12, the measurement unit 10 includes the first accommodation part 121, a second accommodation part 122 disposed below the first accommodation part 121, and a third accommodation part 123 disposed below the second accommodation part 122. Each of the accommodation parts is provided inside the housing 120.

The first accommodation part 121 is an accommodation space for accommodating the measurement mechanism 110 (see FIG. 11) for measuring a specimen. Although FIG. 12 shows only the specimen dispensing part 111, the parts of the measurement mechanism 110 are disposed inside the first accommodation part 121 and the second accommodation part 122. The second accommodation part 122 is an accommodation space for further accommodating a portion of a fluid circuit part 141 for operating the measurement mechanism 110. The fluid circuit part 141 is in fluid connection with each of the specimen dispensing part 111, the first reagent dispensing part 114a, the second reagent dispensing part 114b, the third reagent dispensing part 114c, the fourth reagent dispensing part 114d, the fifth reagent dispensing part 114e, and the BF separation part 117 which are disposed inside the first accommodation part 121. The fluid circuit part 141 includes a pump for supplying pressure and a valve for switching flow paths, in order to suction and eject a liquid in each of the dispensing parts (111 and 114a to 114e) and the BF separation part 117. The third accommodation part 123 is an accommodation space for accommodating the fluid circuit part 141.

Here, the first transport path 31 of the specimen transport unit 20 is disposed at a height position above the second accommodation part 122, and the second transport path 32 of the specimen transport unit 20 is disposed at a height position below the center of the second accommodation part 122 and above the third accommodation part 123. Consequently, a region that occupies at least half the second accommodation part 122 in the up-down direction (Z direction) is located between the first transport path 31 and the second transport path 32. In addition, the entire region of the third accommodation part 123 is located below the second transport path 32. Therefore, in the case of, for example, performing maintenance of the fluid circuit part 141 accommodated in the second accommodation part 122, the inside of the second accommodation part 122 is easily accessible from between the first transport path 31 and the second transport path 32. In addition, in the case of performing maintenance of the fluid circuit part 141 accommodated in the third accommodation part 123, neither the first transport path 31 nor the second transport path 32 hinders the maintenance. Therefore, at the time of performing maintenance of the measurement unit 10, the transport mechanism 29 does not need to be disassembled or reassembled, whereby maintenance work can be efficiently performed.

In addition, in the present embodiment, the ordinary specimen rack setting part 21 and the interruption specimen rack setting part 23 are disposed at height positions above the first transport path 31, and the rack collection part 22 is disposed at a height position above the second transport path 32.

Here, the height positions of the interruption specimen rack setting part 23, the ordinary specimen rack setting part 21, and the rack collection part 22 are desirably set to height positions that make it easy for a user to perform work. Meanwhile, the first transport path 31 and the second transport path 32 form a route for transporting specimen racks 2 to the measurement unit 10, and thus, are required to be disposed at height positions suitable for the device configuration of the measurement unit 10 in which specimens are suctioned. Considering this, the present embodiment employs a configuration in which the first lifting/lowering part 27 movable upward and downward is provided between: the interruption specimen rack setting part 23, the ordinary specimen rack setting part 21, and the rack collection part 22; and the first transport path 31 and the second transport path 32. In this configuration, the height positions of the interruption specimen rack setting part 23, the ordinary specimen rack setting part 21, and the rack collection part 22 can be set irrespective of the height positions of the first transport path 31 and the second transport path 32 (i.e., the height positions suitable for the device configuration of the measurement unit 10). As a result, the height positions of the interruption specimen rack setting part 23, the ordinary specimen rack setting part 21, and the rack collection part 22 can be set to higher positions that allow easy use by a user, whereby workability in setting/collection work for specimen racks 2 can be improved.

FIG. 13 is a perspective view schematically showing the specimen dispensing part 111. As shown in FIG. 13, the pipette part 111a which is a constituent of the specimen dispensing part 111 includes: a pipette arm 700; the suction tube 701 extending downward from the pipette arm 700; and the rotation shaft 702 by which the pipette arm 700 is rotatably supported. The pipette arm 700 has a thin and long substantially rectangular parallelepiped shape. The pipette arm 700 has: one end portion, in the long-side direction, to which the suction tube 701 is mounted; and the other end portion, in the long-side direction, to which the rotation shaft 702 is mounted. The dispensing tip 703 is mounted on the distal end of the dispensing tip-mounting tube 701a and enters a specimen container 1 through downward movement of the pipette arm 700 at each of the specimen suction positions P1 and P2.

As described above, the specimen dispensing part 111 includes the movement mechanism 111b which moves the pipette part 111a (suction tube 701). The movement mechanism 111b includes: a first movement mechanism 710 which moves the suction tube 701 along the first transport path 31 (X direction); and a second movement mechanism 720 which moves the suction tube 701 in a direction intersecting with the first transport path 31 in a plan view. The first movement mechanism 710 is composed of a drive part 711 and a transmission part 712. Likewise, the second movement mechanism 720 is also composed of a drive part 721 and a transmission part 722. The drive parts 711 and 721 are, for example, stepping motors, and transmission parts 712 and 722 are, for example, belt-pulley mechanisms.

The specimen dispensing part 111 includes a bracket 750 fixed to the chassis 26 (see FIG. 5). The bracket 750 is a metal fitting for supporting each constituent member of the specimen dispensing part 111 and fixing the specimen dispensing part 111 to the chassis 26. In addition, the movement mechanism 111b includes a third movement mechanism 730 which moves the suction tube 701 in the up-down direction (Z direction). The third movement mechanism 730 is composed of a drive part 731 and a transmission part 732. The drive part 731 is, for example, a stepping motor, and the transmission part 732 is, for example, a belt-pulley mechanism. The transmission part 732 includes an endless belt 732a extending in the Z direction. The rotation shaft 702 of the pipette part 111a is fixed to the belt 732a, and the rotation shaft 702 is moved in the Z direction through drive of the belt 732a by the drive part 731. Consequently, the pipette arm 700 and the suction tube 701 are also moved in the Z direction, and it becomes possible for the dispensing tip 703 to enter the specimen container 1.

The specimen dispensing part 111 has a structure in which a unit 705 including the pipette part 111a, the second movement mechanism 720, and the third movement mechanism 730 is movable in the X direction by the first movement mechanism 710. The bracket 750 is provided with a guide rail 706 extending in the X direction, and the unit 705 is supported so as to be slidable on the guide rail 706. The transmission part 712 of the first movement mechanism 710 includes an endless belt 712a extending in the X direction. The unit 705 is fixed to the belt 712a, and the unit 705 is moved in the X direction through drive of the belt 712a by the drive part 711. Consequently, the pipette arm 700 and the suction tube 701 are also moved in the X direction.

The second movement mechanism 720 rotates the pipette arm 700, thereby moving the suction tube 701 in a direction intersecting with the first transport path 31 in a plan view. The transmission part 722 of the second movement mechanism 720 includes: an endless belt 722a; and a large-diameter pulley 722b fixed to the rotation shaft 702 of the pipette part 111a. The belt 722a is extended onto the pulley 722b and a rotation shaft of the drive part 721. Since the large-diameter pulley 722b is used, speed reduction from the rotation speed of the drive part 721 can be achieved.

As specifically described later, the specimen dispensing part 111 can dispense specimens from both the specimen suction positions P1 and P2 through parallel movement of the pipette arm 700 in the X direction by the first movement mechanism 710 and rotation of the pipette arm 700 by the second movement mechanism 720. That is, the single suction tube 701 is used for both ordinary specimen suction and urgent specimen suction.

Hereinafter, a configuration regarding control of the specimen measurement apparatus 300 will be described with reference to FIG. 14. FIG. 14 is a block diagram showing a configuration regarding control of the specimen measurement apparatus 300.

As shown in FIG. 14, the specimen measurement apparatus 300 includes: a main control board 210 and a measurement control board 230 provided to the measurement unit 10; and a transport control board 220 provided to the specimen transport unit 20.

The main control board 210 includes the controller 211, a communication section 212, and a storage 213. The controller 211 includes: a processor implemented by a CPU; and a memory. The controller 211 executes a control program stored in the storage 213, to control each part of the measurement unit 10 and the specimen transport unit 20. The storage 213 is implemented by a semiconductor storage element and stores therein: the program to be executed by the controller 211; data of identification information and a measurement order; and data of a detection signal obtained by the detector 118. The communication section 212 includes an I/O interface and a communication interface for performing communication with the specimen transport unit 20 and the analysis unit 400. Alternatively, the controller 211 may be implemented by an FPGA.

The transport control board 220 includes: an I/O circuit which obtains a signal from a sensor provided to each part of the specimen transport unit 20; a drive circuit for a motor provided to each part of the specimen transport unit 20; and a circuit for communication with the main control board 210. The controller 211 of the main control board 210 controls, via the transport control board 220, operations of the ordinary specimen rack setting part 21, the rack collection part 22, the interruption specimen rack setting part 23, the first lifting/lowering part 27, the first reading part 28, the second reading part 280, the sending mechanism 56, the first transport path 31, the second transport path 32, and the second lifting/lowering part 33. The controller 211 obtains, via the transport control board 220, identification information about each of specimen racks 2 and specimen containers 1 obtained from the first reading part 28 and the second reading part 280.

The measurement control board 230 includes: an I/O circuit for a sensor for controlling operations of the measurement mechanism 110; a drive circuit for a motor and a valve; and a circuit for communication with the main control board 210. The controller 211 of the main control board 210 controls operations of the measurement mechanism 110 via the measurement control board 230. The controller 211 obtains, via the measurement control board 230, data of a detection signal obtained by the detector 118 through a specimen measurement process.

The analysis unit 400 is implemented by a personal computer (PC) and is mainly composed of: a body composed of a CPU, a ROM, a RAM, a solid-state drive (SSD), and the like; a display section implemented by a liquid crystal display; and input devices implemented by a keyboard and a mouse.

The analysis unit 400 is communicably connected to the host computer 500 and the communication section 212 of the main control board 210. The analysis unit 400 obtains, via the main control board 210, identification information read by the first reading part 28 of the specimen transport unit 20. The analysis unit 400 is configured to inquire of the host computer 500 about the identification information, to obtain a measurement order regarding the specimen in the specimen container 1 held by the specimen rack 2.

The analysis unit 400 transmits the obtained measurement order to the controller 211 via the communication section 212 of the main control board 210. The controller 211 controls each part of the specimen transport unit 20 and the measurement unit 10 according to the transmitted measurement order.

The controller 211 transmits a detection signal from the detector 118 obtained through measurement of the specimen in the specimen container 1 by the measurement unit 10, via the communication section 212 to the analysis unit 400. The analysis unit 400 is configured to analyze the amount of an analyte contained in the specimen or the like on the basis of the obtained detection signal. In addition, the analysis unit 400 causes a display screen to display the result of the analysis or transmits the result to the host computer 500.

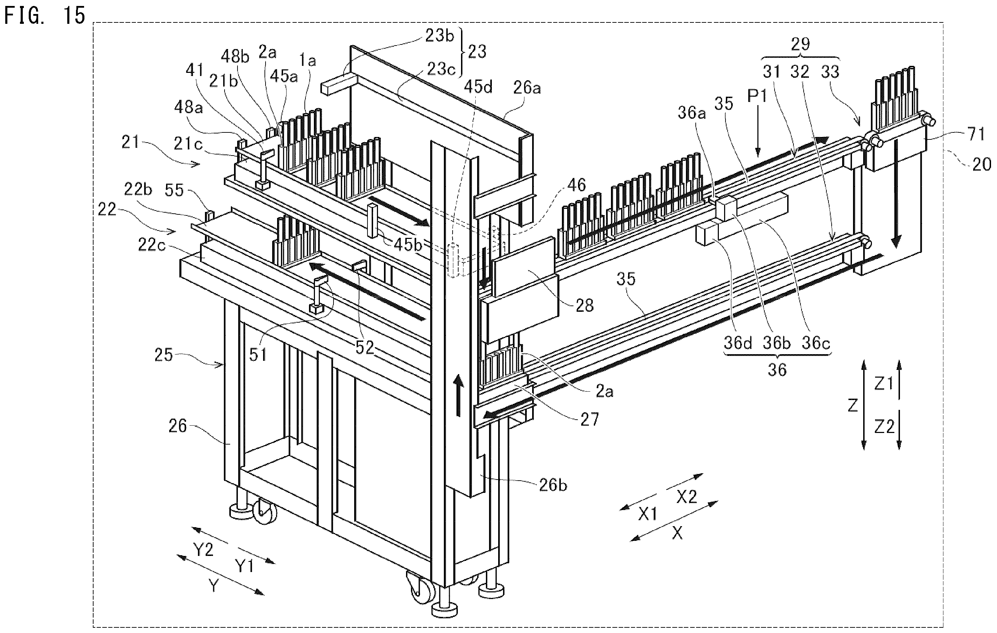

Hereinafter, an operation of the specimen measurement apparatus 300 performed in the case of transport of ordinary specimen racks 2a and specimen measurement will be described with reference to FIG. 15 to FIG. 21. The procedure of the specimen measurement is the same as that in the case of an urgent specimen, except that the specimen suction position differs.

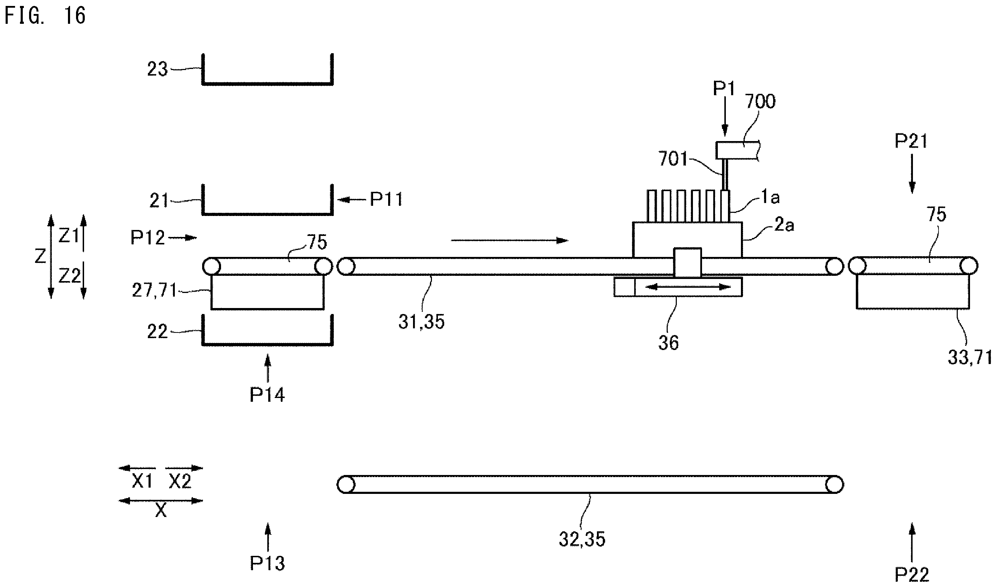

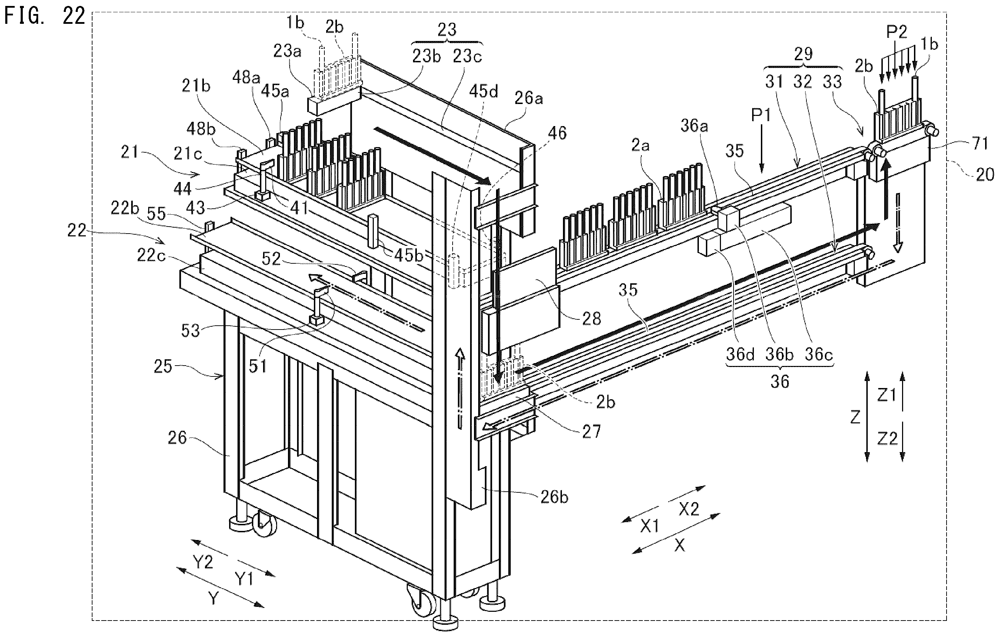

FIG. 15 and FIG. 16 show a transport path for ordinary specimen racks 2a. As shown in FIG. 15 and FIG. 16, the specimen transport unit 20 transports ordinary specimen racks 2a set on the ordinary specimen rack setting part 21 to the specimen suction position P1 on the first transport path 31 via the first lifting/lowering part 27. The ordinary specimen rack setting part 21 sends out each of the ordinary specimen racks 2a to the first lifting/lowering part 27 one by one. In FIG. 15, the second reading part 280 is not shown (the same applies to FIG. 22 described later) in order to make it easy to understand the state of the ordinary specimen racks 2a on the first transport path 31.

The first lifting/lowering part 27 receives each of the ordinary specimen racks 2a from the ordinary specimen rack setting part 21 at the relay position P11 which is at the same height as that of the placement surface 21b of the ordinary specimen rack setting part 21, and moves the ordinary specimen rack 2a to the reading position P12 at which the first reading part 28 reads identification information. Identification information about each of the ordinary specimen rack 2a and ordinary specimen containers 1a held by the ordinary specimen rack 2a is read on the first lifting/lowering part 27 by the first reading part 28. The reading position P12 is set to, for example, a position which is at the same height as that of the first transport path 31, i.e., the relay position at which a specimen rack 2 is relayed to the first transport path 31.

Through the first transport path 31, the ordinary specimen rack 2a is moved in the X2 direction by the transport belt 35. The laterally-sending mechanism 36 moves the ordinary specimen rack 2a in the X2 direction near the specimen suction position P1 on the first transport path 31 such that each of the ordinary specimen containers 1a is sequentially placed at the specimen suction position P1 one by one. When specimens have been suctioned from all the ordinary specimen containers 1a at the specimen suction position P1, the first transport path 31 allows the ordinary specimen rack 2a to move therethrough in the X2 direction by driving the transport belt 35 again, to relay the ordinary specimen rack 2a to the second lifting/lowering part 33. At this time, the lifting/lowering placement part 71 of the second lifting/lowering part 33 has been moved to a relay position P21 which is at the same height as that of the first transport path 31. The relay position P21 is the same position as each specimen suction position P2 for an urgent specimen, but suction of an ordinary specimen is not performed at the relay position P21.

The second lifting/lowering part 33 moves, in the Z2 direction, the lifting/lowering placement part 71 on which the ordinary specimen rack 2a has been placed, whereby the lifting/lowering placement part 71 is moved to a relay position P22 for the second transport path 32. The second lifting/lowering part 33 moves, by the laterally-sending part 75, the ordinary specimen rack 2a in the X1 direction at the relay position P22 which is at the same height as that of the second transport path 32, to relay the ordinary specimen rack 2a to the second transport path 32. At this time, the lifting/lowering placement part 71 of the first lifting/lowering part 27 has been moved to a relay position P13 which is at the same height as that of the second transport path 32. Then, through the second transport path 32, the ordinary specimen rack 2a is moved in the X1 direction by the transport belt 35 so as to be relayed to the lifting/lowering placement part 71 of the first lifting/lowering part 27 at the relay position P13.

The first lifting/lowering part 27 moves, in the Z1 direction, the lifting/lowering placement part 71 on which the ordinary specimen rack 2a has been placed, whereby the lifting/lowering placement part 71 is moved to a relay position P14 for the rack collection part 22. The rack collection part 22 receives, at the relay position P14, the ordinary specimen rack 2a from the first lifting/lowering part 27 by the sending mechanism 56 (see FIG. 14). Through the above series of operations, the ordinary specimen rack 2a set on the ordinary specimen rack setting part 21 is transported to the specimen suction position P1 so as to pass through the first lifting/lowering part 27 and the first transport path 31, and is subjected to specimen suction, and then, the ordinary specimen rack 2a is collected on the rack collection part 22 after passing through the second lifting/lowering part 33, the second transport path 32, and the first lifting/lowering part 27.

Operations of the specimen transport unit 20 are controlled by the controller 211. In addition, operations of the measurement unit 10 are also controlled by the controller 211. The controller 211 controls the ordinary specimen rack setting part 21, the first lifting/lowering part 27, the first transport path 31, the second lifting/lowering part 33, the second transport path 32, and the rack collection part 22 in order to execute the above series of operations. The controller 211 controls the second lifting/lowering part 33 and the second transport path 32 such that, for example, the ordinary specimen rack 2a transported to the specimen suction position P1 is collected on the rack collection part 22 via the second lifting/lowering part 33 and the second transport path 32.

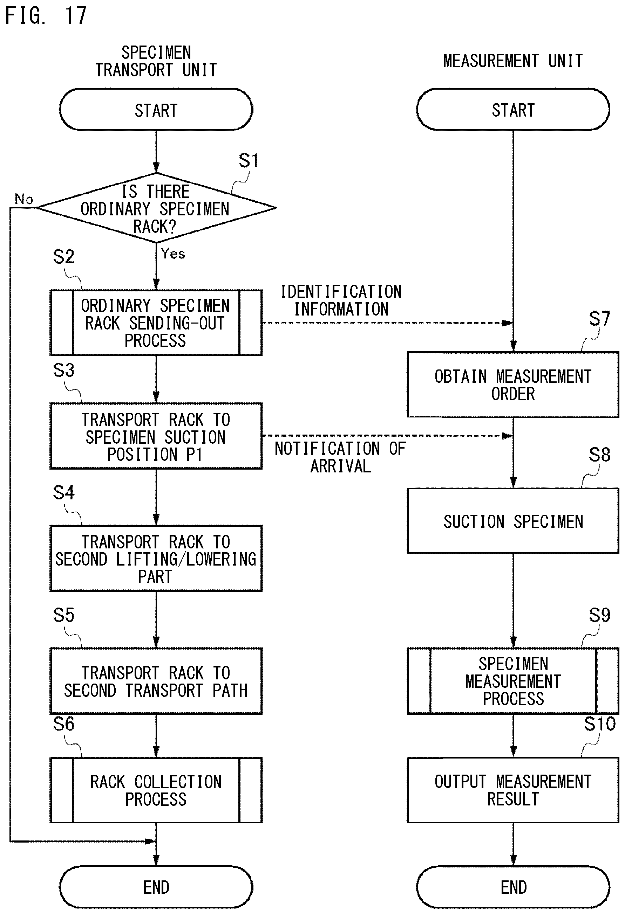

Hereinafter, each of the above transport steps and specimen measurement to be performed by the measurement unit 10 will be described in detail with reference to a flowchart. FIG. 17 is a flowchart showing a procedure for an ordinary specimen process to be performed by the specimen transport unit 20 and the measurement unit 10. The ordinary specimen process is executed by the controller 211.

In step S1, the controller 211 determines whether or not ordinary specimen racks 2a have been set on the ordinary specimen rack setting part 21. When the rack presence/absence sensors 45a to 45d have detected ordinary specimen racks 2a set on the placement surface 21b of the ordinary specimen rack setting part 21, the controller 211 advances the process to step S2.

In step S2, the controller 211 executes an ordinary specimen rack sending-out process. The ordinary specimen rack sending-out process is a process including: sending out one of the ordinary specimen racks 2a from the ordinary specimen rack setting part 21 to the first lifting/lowering part 27; reading identification information about each of the ordinary specimen rack 2a and ordinary specimen containers 1a thereon by the first reading part 28; and relaying the ordinary specimen rack 2a to the first transport path 31. The identification information about each of the ordinary specimen rack 2a and the ordinary specimen containers 1a thereon read by the first reading part 28 is transmitted to the analysis unit 400.

Meanwhile, in step S1, when no ordinary specimen rack 2a has been set on the ordinary specimen rack setting part 21, i.e., when the rack presence/absence sensors 45a to 45d have detected no ordinary specimen rack 2a on the placement surface 21b of the ordinary specimen rack setting part 21, the controller 211 ends the process.

After the ordinary specimen rack sending-out process in step S2, the controller 211 advances the process to step S3. In step S3, the controller 211 controls the first transport path 31 to transport, to the specimen suction position P1, the ordinary specimen rack 2a relayed onto the first transport path 31. Each time a specimen is suctioned from any of the ordinary specimen containers 1a that has been placed at the specimen suction position P1, the controller 211 causes the laterally-sending mechanism 36 to place the next pre-suction ordinary specimen container 1a at the specimen suction position P1. When all the ordinary specimen containers 1a held by the ordinary specimen rack 2a have been placed at the specimen suction position P1, the controller 211 advances the process to step S4.

At the specimen suction position P1, identification information about each of the specimen containers 1 may be read by the second reading part 280 and a final check for the specimen information may be performed before specimen suction is performed. For example, the controller 211 compares the identification information about the specimen container 1 located at the specimen suction position P1 and identification information about the specimen container 1 in a measurement order obtained from the analysis unit 400, and checks whether both pieces of identification information match. When both pieces of identification information do not match, the controller 211 executes a predetermined error process.

In step S4, the controller 211 executes control to relay the ordinary specimen rack 2a having been subjected to specimen suction from the first transport path 31 to the second lifting/lowering part 33. The controller 211 controls the second lifting/lowering part 33 to move the lifting/lowering placement part 71 of the second lifting/lowering part 33 to the relay position P21 for relaying between the first transport path 31 and the second lifting/lowering part 33. Then, the controller 211 controls the first transport path 31 to transport the specimen rack 2 onto the lifting/lowering placement part 71.

In step S5, the controller 211 executes control to relay the ordinary specimen rack 2a relayed to the second lifting/lowering part 33, from the second lifting/lowering part 33 to the second transport path 32. The controller 211 controls the second lifting/lowering part 33 to move the lifting/lowering placement part 71 of the second lifting/lowering part 33 to the relay position P22 for relaying between the second transport path 32 and the second lifting/lowering part 33. Then, the controller 211 controls the second lifting/lowering part 33 to laterally send the ordinary specimen rack 2a onto the second transport path 32.

In step S6, the controller 211 executes a rack collection process for the ordinary specimen rack 2a relayed to the second transport path 32. The rack collection process is a process of sending the ordinary specimen rack 2a from the second transport path 32 to the rack collection part 22 via the first lifting/lowering part 27. When the ordinary specimen rack 2a is collected on the rack collection part 22 through step S6, the process of transporting the one ordinary specimen rack 2a is completed.

In the measurement unit 10, in step S7, the controller 211 obtains a measurement order from the analysis unit 400 on the basis of the identification information read by the first reading part 28.

In step S8, the controller 211 executes control in which a specimen in the ordinary specimen container 1a transported to the specimen suction position P1 in step S3 is suctioned by the specimen dispensing part 111.

In step S9, the controller 211 causes the measurement mechanism 110 to perform a specimen measurement process on the suctioned specimen. As a result of the specimen measurement process, data of a detection signal from the detector 118 is obtained.

In step S10, the controller 211 executes control in which the obtained data of the detection signal is outputted to the analysis unit 400 via the communication section 212. The analysis unit 400 analyzes the amount of an analyte contained in the specimen or the like on the basis of the detection signal obtained from the measurement unit 10 and causes the display section to display the result of the analysis.

The controller 211 executes the process starting from step S1 again, in order to execute a transport process for the next ordinary specimen rack 2a. Therefore, when a user sets a plurality of ordinary specimen racks 2a together onto the ordinary specimen rack setting part 21, the process of steps S2 to S6 is executed on one ordinary specimen rack 2a at the head (on the Y1 direction side) on the ordinary specimen rack setting part 21. The controller 211 keeps executing the process of steps S1 to S6 until there is no more ordinary specimen rack 2a set on the ordinary specimen rack setting part 21.

Here, for describing a transport process for one ordinary specimen rack 2a, the process from sending-out to collection of the specimen rack 2 is shown as a sequential flow. In actuality, however, transport processes for a plurality of ordinary specimen racks 2a are concurrently executed at different timings as shown in FIG. 15 and FIG. 16. For example, while specimen suction is being executed on a certain ordinary specimen rack 2a in step S8, a rack sending-out process for the next ordinary specimen rack 2a or a rack collection process for the preceding ordinary specimen rack 2a can be executed.

### (Ordinary Specimen Rack Sending-Out Process)

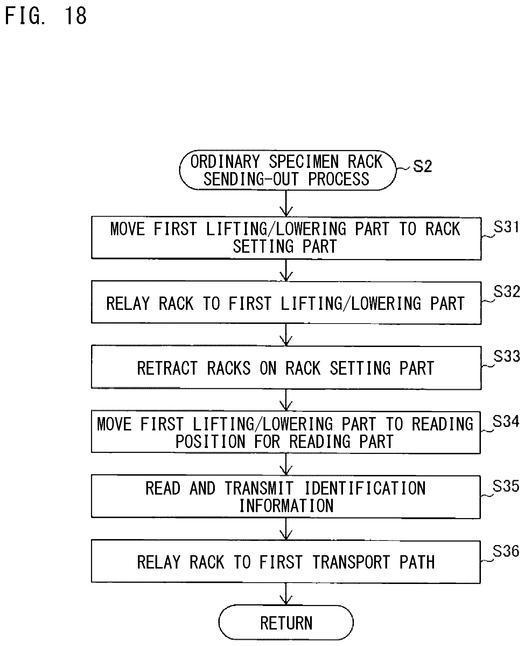

The ordinary specimen rack sending-out process in step S2 in FIG. 17 will be described with reference to FIG. 18. The ordinary specimen rack sending-out process is executed by the controller 211.

In step S31, the controller 211 controls the lifting/lowering drive part 73 to move the lifting/lowering placement part 71 of the first lifting/lowering part 27 to the relay position P11 for the ordinary specimen rack setting part 21.

In step S32, the controller 211 controls the movement mechanism 21c of the ordinary specimen rack setting part 21 to move the first claw 41 and the second claw 42 in the Y1 direction from the front end portion on the Y2 side. When the rack sensors 71c (see FIG. 8) of the lifting/lowering placement part 71 have detected the ordinary specimen rack 2a, the controller 211 causes stoppage of drive of the movement mechanism 21c. Consequently, the ordinary specimen rack 2a is relayed from the ordinary specimen rack setting part 21 to the first lifting/lowering part 27. Meanwhile, when the rack sensors 71c have not detected any ordinary specimen rack 2a even at the time of the relaying operation, the controller 211 executes a predetermined error process.

In step S33, the controller 211 actuates the rack returning mechanism of the ordinary specimen rack setting part 21. Consequently, when a plurality of ordinary specimen racks 2a are set on the ordinary specimen rack setting part 21, the second and subsequent ordinary specimen racks 2a other than the ordinary specimen rack 2a at the head that has been relayed to the first lifting/lowering part 27 are returned in the Y2 direction by the predetermined safety distance by the rack returning mechanism. When the rear-end sensor 46 has not detected any ordinary specimen rack 2a even at the time of actuating the rack returning mechanism, the controller 211 executes a predetermined error process.

In step S34, the controller 211 controls the lifting/lowering drive part 73 to move the lifting/lowering placement part 71 of the first lifting/lowering part 27 to the reading position P12 for the first reading part 28. In step S35, the controller 211 controls the first reading part 28 to read: identification information about the ordinary specimen rack 2a placed at the reading position P12; and identification information about each of ordinary specimen containers 1a held by the ordinary specimen rack 2a. When the controller 211 obtains these pieces of identification information from the first reading part 28, the controller 211 transmits the obtained pieces of identification information via the communication section 212 to the analysis unit 400.

In step S36, the controller 211 controls the laterally-sending part 75 of the first lifting/lowering part 27 to move the specimen rack 2 on the lifting/lowering placement part 71 to the first transport path 31. Thus, the specimen rack 2 is relayed from the first lifting/lowering part 27 to the first transport path 31. Through the above steps, the ordinary specimen rack sending-out process is completed, and the process is advanced to the steps subsequent to step S2 in the flowchart in FIG. 17.

### (Rack Collection Process)

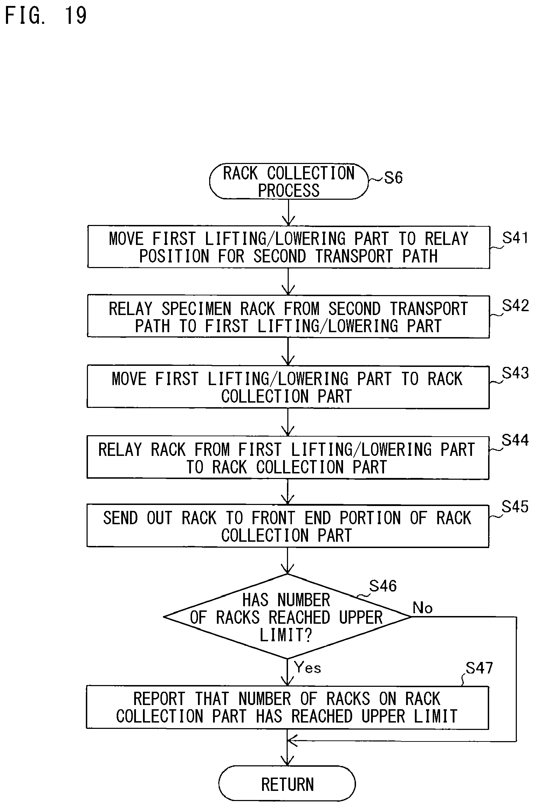

The rack collection process in step S6 in FIG. 17 will be described with reference to FIG. 19. The rack collection process is executed by the controller 211.

In step S41, the controller 211 controls the lifting/lowering drive part 73 to move the lifting/lowering placement part 71 of the first lifting/lowering part 27 to the relay position P13 for the second transport path 32.

In step S42, the controller 211 controls the second transport path 32 to transport the ordinary specimen rack 2a on the second transport path 32 in the X1 direction onto the lifting/lowering placement part 71. When the rack sensors 71c of the lifting/lowering placement part 71 have detected the ordinary specimen rack 2a, the controller 211 causes the second transport path 32 to stop performing the operation. Thus, the ordinary specimen rack 2a is relayed from the second transport path 32 to the first lifting/lowering part 27. Meanwhile, when the rack sensors 71c have not detected any ordinary specimen rack 2a even at the time of the relaying operation, the controller 211 executes a predetermined error process.

In step S43, the controller 211 controls the lifting/lowering drive part 73 to move the lifting/lowering placement part 71 of the first lifting/lowering part 27 to the relay position P14 for the rack collection part 22.

In step S44, the controller 211 controls the sending mechanism 56 to move the ordinary specimen rack 2a from the lifting/lowering placement part 71 to the rack collection part 22. Thus, the ordinary specimen rack 2a is relayed from the first lifting/lowering part 27 to the rack collection part 22. When the ordinary specimen rack 2a is kept being detected by the rack sensors 71c even after the operation of the sending mechanism 56, the controller 211 executes a predetermined error process.

In step S45, the controller 211 controls the movement mechanism 22c of the rack collection part 22 to move the first claw 51 and the second claw 52 in the Y2 direction from the origin positions on the Y1 side. Thus, the ordinary specimen rack 2a is transported toward the front end portion of the rack collection part 22 from the position to which the ordinary specimen rack 2a has been sent by the sending mechanism 56.

The rack collection part 22 transports, in the Y2 direction, the ordinary specimen rack 2a having been sent this time. When the arrival detector 55 has detected the ordinary specimen rack 2a, the controller 211 causes stoppage of drive of the movement mechanism 22c. Meanwhile, when the arrival detector 55 has not detected any ordinary specimen rack 2a even at the time of driving the movement mechanism 22c, the controller 211 executes a predetermined error process.

The controller 211 obtains the amount of drive, of the movement mechanism 22c, from the origin positions to the position at which the arrival detector 55 has detected a specimen rack 2. The controller 211 obtains the number of the specimen racks 2 stored on the rack collection part 22, on the basis of the obtained amount of drive.

In step S46, the controller 211 determines whether or not the obtained number of the specimen racks 2 is equal to a preset upper limit value. When the number of the specimen racks 2 stored on the rack collection part 22 has not reached the upper limit value, the rack collection process is ended, and the present time of transport process for the specimen rack 2 is ended.

Meanwhile, when the number of the specimen racks 2 stored on the rack collection part 22 has reached the upper limit value, the controller 211 advances the process to step S47. In step S47, the controller 211 causes the communication section 212 to report, to the analysis unit 400, that the number of the specimen racks 2 stored on the rack collection part 22 has reached the upper limit value. Then, the controller 211 ends the rack collection process.

When receiving the report that the number of the specimen racks 2 has reached the upper limit value, the analysis unit 400 causes the display section to display, for example, notice information that prompts execution of work of taking out the specimen racks 2 from the rack collection part 22. Consequently, a user can notice, from the display screen of the analysis unit 400, that the specimen racks 2 need to be taken out from the rack collection part 22.

### (Specimen Measurement Process)

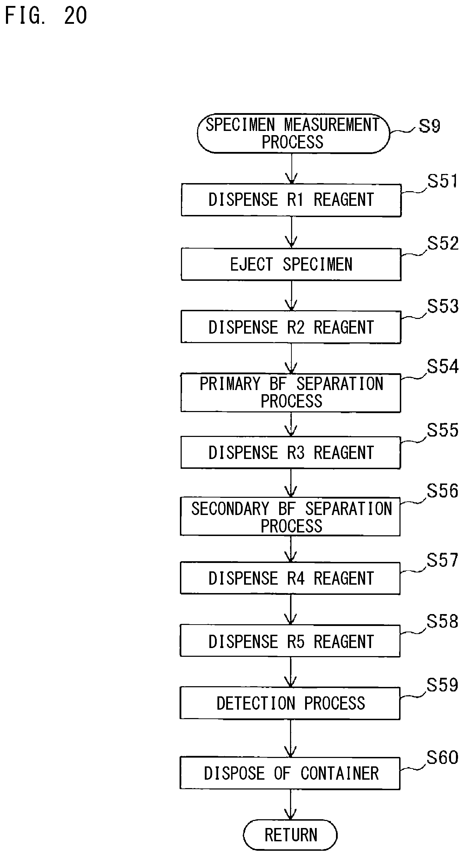

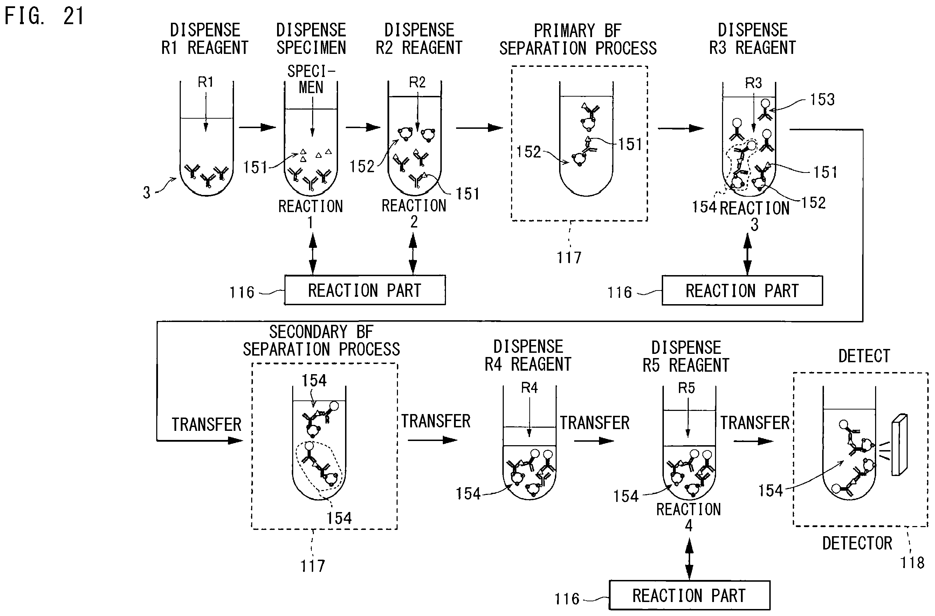

The specimen measurement process in step S9 in FIG. 17 will be described with reference to FIG. 20 and FIG. 21. The specimen measurement process is executed by the controller 211. A case in which an analyte 151 contained in the specimen is a hepatitis B surface antigen (HBsAg) will be described as an example of immunoassay.

In step S51, the controller 211 executes control in which the R1 reagent is dispensed into a container 3. The controller 211 executes control in which: the container transfer part 112 is caused to transfer a container 3 to the R1 reagent dispensing position P33a; and the first reagent dispensing part 114a is caused to dispense the R1 reagent into the container 3.

In step S52, the controller 211 executes control in which the specimen is ejected into the container 3. The controller 211 causes the container transfer part 112 to transfer the container 3 to the specimen dispensing position P31. The controller 211 causes the specimen dispensing part 111 having suctioned the specimen in step S8 to: rotate to the specimen dispensing position P31; and eject the suctioned specimen into the container 3 at the specimen dispensing position P31. As shown in FIG. 21, the R1 reagent contains a capture substance and is reacted with and bound to the analyte 151 in the specimen. The capture substance is, for example, an antibody modified with biotin (biotin antibody).

In step S53, the controller 211 executes control in which: the container transfer part 112 is caused to transfer the container 3 to the R2 reagent dispensing position P33b; and the second reagent dispensing part 114b is caused to dispense the R2 reagent into the container 3. After the R2 reagent is dispensed, the controller 211 causes the container transfer part 112 to transfer the container 3 to the reaction part 116. The controller 211 causes the reaction part 116 to heat the container 3 for a predetermined time. As shown in FIG. 21, the R2 reagent contains magnetic particles 152 to be bound to the capture substance. The magnetic particles 152 are, for example, magnetic particles on which streptavidin to be bound to biotin has been immobilized (StAvi-bound magnetic particles). As a result of the heating, the analyte 151 and the capture substance are bound to each of the magnetic particles 152.

In step S54, the controller 211 controls the BF separation part 117 to perform a primary BF separation process. First, the controller 211 causes the container transfer part 112 to transfer the container 3 to the BF separation part 117. The BF separation part 117 is controlled to perform the primary BF separation process on the sample in the container 3. As shown in FIG. 21, unnecessary components such as an unreacted capture substance are removed from inside the container 3 through the primary BF separation process.

In step S55, the controller 211 executes control in which: the container transfer part 112 is caused to transfer the container 3 to the R3 reagent dispensing position P33c; and the third reagent dispensing part 114c is caused to dispense the R3 reagent into the container 3. After the R3 reagent is dispensed, the controller 211 causes the container transfer part 112 to transfer the container 3 to the reaction part 116. The controller 211 causes the reaction part 116 to heat the container 3 for a predetermined time. As shown in FIG. 21, the R3 reagent contains a labeled substance 153 and is reacted with and bound to the analyte 151. The labeled substance 153 is, for example, an alkaline phosphatase (ALP) labeled antibody. As a result of the heating, an immune complex 154 including the analyte 151, the labeled substance 153, and the capture substance is formed on the magnetic particle 152.

In step S56, the controller 211 controls the BF separation part 117 to perform a secondary BF separation process. First, the controller 211 causes the container transfer part 112 to transfer the container 3 to the BF separation part 117. The BF separation part 117 is controlled to perform the secondary BF separation process on the sample in the container 3. As shown in FIG. 21, unnecessary components such as an unreacted labeled substance 153 are removed from inside the container 3 through the secondary BF separation process.

In step S57, the controller 211 executes control in which the R4 reagent is dispensed into the container 3. The controller 211 causes the container transfer part 112 to transfer the container 3 to the fourth reagent dispensing part 114d and causes the fourth reagent dispensing part 114d to dispense the R4 reagent into the container 3. The R4 reagent contains a buffer solution. The immune complexes 154 bound to the magnetic particles 152 in the container 3 are dispersed in the buffer solution.

In step S58, the controller 211 executes control in which the R5 reagent is dispensed into the container 3. The controller 211 causes the container transfer part 112 to transfer the container 3 to the fifth reagent dispensing part 114e and causes the fifth reagent dispensing part 114e to dispense the R5 reagent into the container 3. After the R5 reagent is dispensed, the controller 211 causes the container transfer part 112 to transfer the container 3 to the reaction part 116. The controller 211 causes the reaction part 116 to heat the container 3 for a predetermined time. As shown in FIG. 21, the R5 reagent contains a chemiluminescent substrate. The buffer solution contained in the R4 reagent has a composition that promotes a reaction between the substrate and the label (enzyme) of the labeled substance 153 included in the immune complex 154. The substrate is reacted with the label through the heating, whereby light is generated.

In step S59, the controller 211 executes control in which a process of detecting the immune complex 154 is performed. The controller 211 causes the container transfer part 112 to transfer the container 3 to the detector 118. The controller 211 causes the detector 118 to measure the intensity of the light generated by reacting the substrate with the label. A detection signal from the detector 118 is outputted to the controller 211. The controller 211 transmits data of the detection signal from the detector 118 via the communication section 212 to the analysis unit 400.

After the detection is ended, the container transfer part 112 is controlled in step S60 to: take out the post-measurement container 3 from the detector 118; and dispose of the container 3 into a disposal port.

Hereinafter, an operation of the specimen measurement apparatus 300 performed in the case of transporting an urgent specimen rack 2b for urgent specimens will be described with reference to FIG. 22 to FIG. 26.

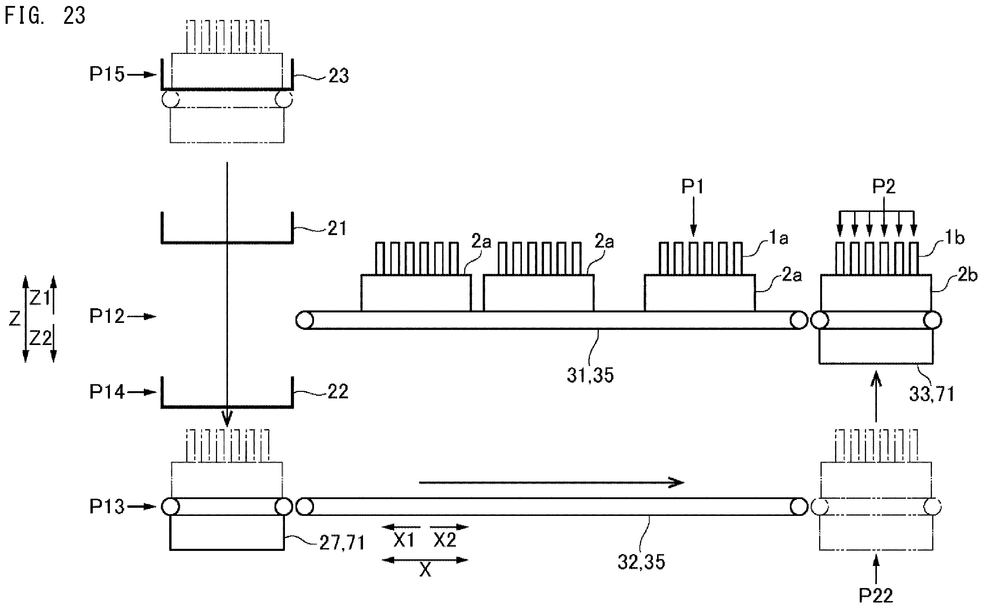

FIG. 22 and FIG. 23 show a transport path for an urgent specimen rack 2b. As shown in FIG. 22 and FIG. 23, the specimen transport unit 20 transports an urgent specimen rack 2b set on the interruption specimen rack setting part 23 to the specimen suction positions P2 on the second lifting/lowering part 33 via the first lifting/lowering part 27 and the second transport path 32. The interruption specimen rack setting part 23 sends out the urgent specimen rack 2b to the first lifting/lowering part 27.

Identification information about each of the urgent specimen rack 2b and urgent specimen containers 1b held by the urgent specimen rack 2b is read on the first lifting/lowering part 27 by the first reading part 28 in the same manner as in the case of ordinary specimens. The first lifting/lowering part 27 moves the lifting/lowering placement part 71, on which the urgent specimen rack 2b has been placed, in the Z2 direction from a relay position P15 for the interruption specimen rack setting part 23 and temporarily stops the lifting/lowering placement part 71 at the reading position P12. Then, the first lifting/lowering part 27 moves the urgent specimen rack 2b to the relay position P13 which is at the same height as that of the second transport path 32.

Through the second transport path 32, the urgent specimen rack 2b is moved in the X2 direction by the transport belt 35 so as to be relayed to the second lifting/lowering part 33 at the relay position P22. The second lifting/lowering part 33 moves the lifting/lowering placement part 71, on which the urgent specimen rack 2b has been placed, in the Z1 direction to the specimen suction positions P2 each of which is at the same height as that of the first transport path 31. When specimens have been suctioned from all the urgent specimen containers 1b at the specimen suction positions P2, the second lifting/lowering part 33 moves the lifting/lowering placement part 71 in the Z2 direction so as to return the lifting/lowering placement part 71 to the relay position P22. Then, the urgent specimen rack 2b is collected on the rack collection part 22 through the same path as that used in the case of ordinary specimen racks 2a. After the urgent specimen rack 2b is relayed to the first lifting/lowering part 27, the first lifting/lowering part 27 may move the lifting/lowering placement part 71 in the Z1 direction so as to dispose the lifting/lowering placement part 71 at the relay position P15, and may relay the urgent specimen rack 2b to the interruption specimen rack setting part 23. Thus, the urgent specimen rack 2b is collected at a position different from the position for ordinary specimen racks 2a. Consequently, an operator can easily distinguish the urgent specimen rack 2b having been collected.

That is, the first transport path 31 is not used for transporting an urgent specimen rack 2b. Therefore, the urgent specimen rack 2b is transported to the second suction positions P2 not via the first suction position P1. Consequently, even when an ordinary specimen rack 2a is present on the first transport path 31, the urgent specimen rack 2b can be transported to the specimen suction positions P2. However, transport of ordinary specimen racks 2a to the rack collection part 22 needs to be prohibited as described later. Specimen suction from ordinary specimen containers 1a may be continued until the urgent specimen rack 2b arrives at the specimen suction positions P2. Alternatively, the specimen suction may be prohibited when the rack sensor 67a of the interruption specimen rack setting part 23 has detected an urgent specimen rack 2b or when the urgent specimen rack 2b is sent out from the interruption specimen rack setting part 23 to the first lifting/lowering part 27.

Operations of the specimen transport unit 20 and the measurement unit 10 are controlled by the controller 211 as described above. The controller 211 controls the interruption specimen rack setting part 23, the first lifting/lowering part 27, the second transport path 32, and the second lifting/lowering part 33 to transport the urgent specimen rack 2b from the interruption specimen rack setting part 23 to the specimen suction positions P2. In addition, the controller 211 controls the specimen dispensing part 111 of the measurement unit 10 such that: the suction tube 701 suctions a specimen from each of the urgent specimen containers 1b at the corresponding specimen suction position P2; the suction tube 701 is moved from the specimen suction position P2 to the specimen dispensing position P31; and the suction tube 701 ejects the specimen into a container 3 placed at the specimen dispensing position P31.

The controller 211 controls the first transport path 31 and the second transport path 32 such that, when the rack sensor 67a of the interruption specimen rack setting part 23 has detected an urgent specimen rack 2b, transport of an ordinary specimen rack 2a present at the specimen suction position P1 on the first transport path 31 is prohibited and the urgent specimen rack 2b is transported to the specimen suction positions P2 via the second transport path 32. In addition, the controller 211 also prohibits sending-out of an ordinary specimen rack 2a from the ordinary specimen rack setting part 21 to the first lifting/lowering part 27. Since the first transport path 31 is not used for transporting urgent specimen racks 2b to the specimen suction positions P2, an ordinary specimen rack 2a on the first transport path 31 does not need to be shunted to another place and only has to stand by on the first transport path 31 until urgent specimen suction at each of the specimen suction positions P2 is completed.

Meanwhile, there is a case where an ordinary specimen rack 2a is present on the first lifting/lowering part 27 which is a transport path for an urgent specimen rack 2b. In this case, when the ordinary specimen rack 2a has yet to be subjected to specimen suction, the ordinary specimen rack 2a needs to be transported to the first transport path 31, whereas, when the ordinary specimen rack 2a has been subjected to specimen suction, the ordinary specimen rack 2a needs to be collected on the rack collection part 22. In addition, there is a case where an ordinary specimen rack 2a having been subjected to specimen suction is present on the second lifting/lowering part 33 or the second transport path 32. In this case as well, the ordinary specimen rack 2a needs to be transported to the rack collection part 22 so as to clear the transport path for an urgent specimen rack 2b.

The controller 211 controls the second lifting/lowering part 33, the second transport path 32, the first lifting/lowering part 27, and the rack collection part 22 such that, when specimen suction from all the urgent specimen containers 1b at the specimen suction positions P2 is completed, the urgent specimen rack 2b is collected on the rack collection part 22 via the second transport path 32.

The controller 211 may cause ordinary specimen suction to be restarted at the specimen suction position P1 when specimen suction from all the urgent specimen containers 1b is completed. In addition, the controller 211 may cancel the prohibition of sending-out of an ordinary specimen rack 2a from the ordinary specimen rack setting part 21 and the prohibition of transport of an ordinary specimen rack 2a from the first transport path 31 when specimen suction from all the urgent specimen containers 1b is completed or when the urgent specimen rack 2b is collected on the rack collection part 22.

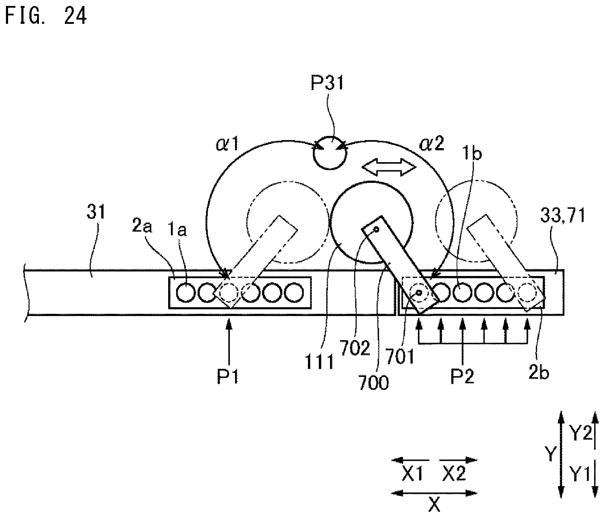

FIG. 24 is a diagram for explaining an operation of the specimen dispensing part 111. As shown in FIG. 24, the specimen dispensing part 111 can dispense specimens from both the specimen suction positions P1 and P2 by the one suction tube 701 mounted on the distal end portion of the pipette arm 700. As described above, the pipette arm 700 of the specimen dispensing part 111 is rotatably supported by the rotation shaft 702. The pipette arm 700 is rotated clockwise and anticlockwise about the rotation shaft 702 in a plan view. The pipette arm 700 is movable also in the X direction.

The rotation shaft 702 for the pipette arm 700 is disposed between the specimen suction positions P1 and P2 in the X direction. The suction tube 701 mounted on the distal end portion of the pipette arm 700 is moved to the specimen dispensing position P31 through clockwise rotation in a plan view, from the specimen suction position P1 for an ordinary specimen. Meanwhile, the suction tube 701 is moved to the specimen dispensing position P31 through anticlockwise rotation in a plan view, from any of the specimen suction positions P2 for urgent specimens.

That is, the specimen suction position P1 is a position away from a region below a movement path α2 through which the suction tube 701 is moved from the specimen suction position P2 to the specimen dispensing position P31. Likewise, the specimen suction position P2 is also a position away from a region below a movement path α1 through which the suction tube 701 is moved from the specimen suction position P1 to the specimen dispensing position P31. Therefore, there is no concern that the specimen suctioned from the dispensing tip 703 mounted on the distal end of the dispensing tip-mounting tube 701a falls off so as to be mixed in another specimen container.

On the first transport path 31, the laterally-sending mechanism 36 moves an ordinary specimen rack 2a such that each of ordinary specimen containers 1a on the ordinary specimen rack 2a is placed at the specimen suction position P1 one by one. Thus, at the time of suctioning a specimen from the ordinary specimen container 1a, the pipette arm 700 does not need to be moved in the X direction. Meanwhile, on the second lifting/lowering part 33, the urgent specimen rack 2b is fixed by the rack fixation mechanism 600. Thus, at the time of suctioning a specimen from each of the urgent specimen containers 1b, the specimen suction is performed while the pipette arm 700 is being moved in the X direction. That is, the position of each of the holding holes 2c in the urgent specimen rack 2b can be regarded as a specimen suction position P2. In this manner, specimens can be dispensed from both the specimen suction positions P1 and P2 through rotation of the pipette arm 700 and parallel movement thereof in the X direction.

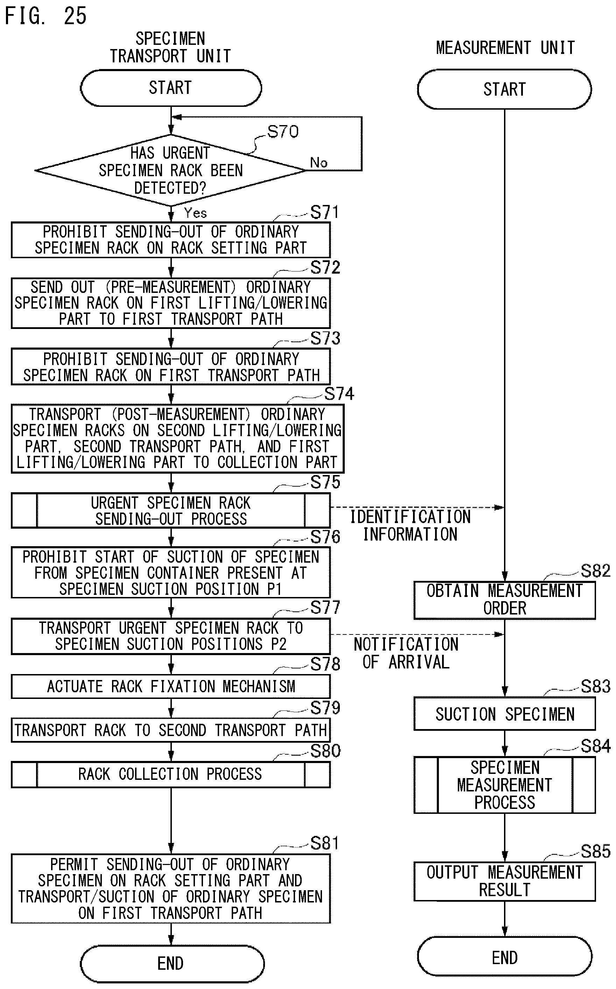

Hereinafter, each of the transport steps for an urgent specimen rack 2b will be described in detail with reference to a flowchart. FIG. 25 is a flowchart showing a procedure for an urgent specimen process.

In step S70, the controller 211 determines whether or not an urgent specimen rack 2b has been set on the interruption specimen rack setting part 23. When the rack sensor 67a of the interruption specimen rack setting part 23 has detected an urgent specimen rack 2b set on the placement base 23b of the interruption specimen rack setting part 23, the controller 211 advances the process to step S71. The setting of an urgent specimen rack 2b onto the interruption specimen rack setting part 23 does not need to be detected by a sensor and may be detected by means of notification, of the setting of an urgent specimen rack 2b, that is performed through operation of the analysis unit 400 by a user. The processing in step S70 is interruption processing, and thus the determination processing in step S70 is continuously executed also during execution of the following steps S71 to S85 or during execution of the ordinary specimen process.

In step S71, the controller 211 prohibits sending-out of an ordinary specimen rack 2a set on the ordinary specimen rack setting part 21, i.e., sending-out of the ordinary specimen rack 2a from the ordinary specimen rack setting part 21 to the first lifting/lowering part 27. When an ordinary specimen rack 2a having yet to be subjected to specimen suction is present on the first lifting/lowering part 27, the controller 211 causes the ordinary specimen rack 2a to be sent out to the first transport path 31 in step S72.

In step S73, the controller 211 prohibits sending-out of an ordinary specimen rack 2a on the first transport path 31 to the second lifting/lowering part 33. When an ordinary specimen rack 2a having been subjected to specimen suction is present on any of the second lifting/lowering part 33, the second transport path 32, and the first lifting/lowering part 27, the controller 211 causes the ordinary specimen rack 2a to be transported to the rack collection part 22 in step S74.

The sequence of steps S71 to S74 is not particularly limited, and steps S71 to S74 may be simultaneously executed. Through steps S71 to S74, the transport path for an urgent specimen rack 2b can be cleared, and the urgent specimen rack 2b can be transported to the specimen suction positions P2 on the second lifting/lowering part 33. Since the first transport path 31 is not included in the transport path for the urgent specimen rack 2b, an ordinary specimen rack 2a may be present on the first transport path 31 and does not need to be shunted from the first transport path 31. However, when the space in which ordinary specimen racks 2a stand by is not present any more on the first transport path 31 as a result of transporting an ordinary specimen rack 2a to the first transport path 31 in step S72, a process for one ordinary specimen rack 2a needs to be advanced so as to transport the ordinary specimen rack 2a to the rack collection part 22.

In step S75, the controller 211 executes a sending-out process for the urgent specimen rack 2b. The urgent specimen rack sending-out process is a process including: sending out the urgent specimen rack 2b from the interruption specimen rack setting part 23 to the first lifting/lowering part 27; reading identification information about each of the urgent specimen rack 2b and specimen containers 1b thereon by the first reading part 28; and relaying the urgent specimen rack 2b to the second transport path 32. The identification information about each of the urgent specimen rack 2b and the urgent specimen containers 1b thereon read by the first reading part 28 is transmitted to the analysis unit 400.

The controller 211 advances the process to step S76 after the urgent specimen rack sending-out process in step S75. In step S76, the controller 211 prohibits start of specimen suction from a specimen container 1 present at the specimen suction position P1. When a suction operation for a specimen has already been started, the process is advanced until the suction operation is completed.

In step S77, the controller 211 controls the second transport path 32 to transport, to the specimen suction positions P2 on the second lifting/lowering part 33, the urgent specimen rack 2b relayed onto the second transport path 32. The controller 211 controls the second lifting/lowering part 33 to move the lifting/lowering placement part 71, on which the urgent specimen rack 2b has been placed, in the Z1 direction and place the urgent specimen rack 2b at the specimen suction positions P2 each of which is at the same height as that of the specimen suction position P1 for an ordinary specimen. When the urgent specimen rack 2b arrives at the specimen suction positions P2, the controller 211 actuates the rack fixation mechanism 600 so as not to allow the urgent specimen rack 2b to move in the X direction in step S78.

At each of the specimen suction positions P2, identification information about the corresponding specimen container 1b may be read by the second reading part 280 and a final check for the specimen information may be performed before specimen suction is performed. For example, the controller 211 compares the identification information about the specimen container 1b located at the specimen suction position P2 and identification information about the specimen container 1b in a measurement order obtained from the analysis unit 400, and checks whether both pieces of identification information match. When both pieces of identification information do not match, the controller 211 executes a predetermined error process.

At the specimen suction position P2, an urgent specimen is suctioned after the pipette arm 700 (suction tube 701) of the specimen dispensing part 111 is moved in the X direction. When specimen suction from all the specimen containers 1b held by the urgent specimen rack 2b is completed, the controller 211 advances the process to step S79.

In step S79, the controller 211 controls the second lifting/lowering part 33 to transport the urgent specimen rack 2b having been subjected to specimen suction to the second transport path 32. The controller 211 causes the lifting/lowering placement part 71 of the second lifting/lowering part 33 to be moved to the relay position P22 which is at the same height as that of the second transport path 32. Then, the controller 211 causes the urgent specimen rack 2b to be laterally sent and moved onto the second transport path 32.

In step S80, the controller 211 executes a collection process for the urgent specimen rack 2b. The rack collection process is a process of collecting the urgent specimen rack 2b having been subjected to specimen suction from the second transport path 32 onto the rack collection part 22 via the first lifting/lowering part 27. The rack collection process is the same as the collection process for ordinary specimen racks 2a.

In step S81, the controller 211 permits sending-out of the ordinary specimen rack 2a on the ordinary specimen rack setting part 21, transport of the ordinary specimen rack 2a on the first transport path 31, and ordinary specimen suction at the specimen suction position P1. Ordinary specimen suction may be permitted upon completion of specimen suction from all urgent specimen racks 2b.

The measurement unit 10 performs a process of steps S82 to S85. The process of steps S82 to S85 is the same as the process (steps S7 to S10 in FIG. 17) in the case of ordinary specimens.

### (Urgent Specimen Rack Sending-Out Process)

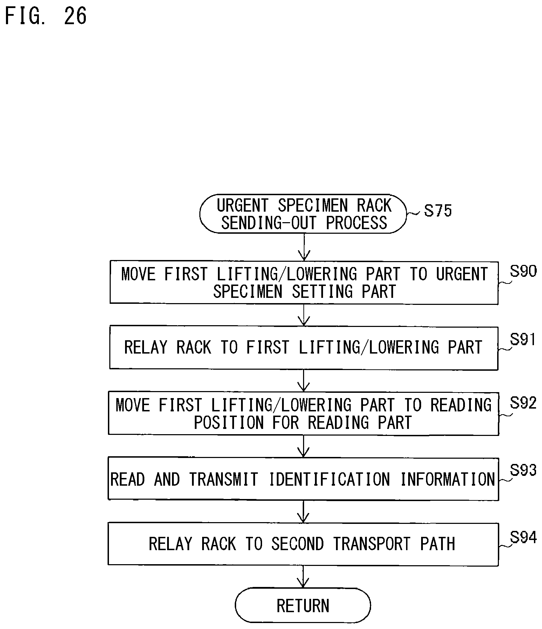

The urgent specimen rack sending-out process in step S75 in FIG. 25 will be described with reference to FIG. 26. The urgent specimen rack sending-out process is executed by the controller 211.

In step S90, the controller 211 controls the lifting/lowering drive part 73 of the first lifting/lowering part 27 to move the lifting/lowering placement part 71 to the relay position P15 for the interruption specimen rack setting part 23.

In step S91, the controller 211 controls the placement base drive part 61b of the interruption specimen rack setting part 23 to move the placement base 23b, on which the urgent specimen rack 2b has been set, in the Y1 direction. When the rack sensors 71c of the lifting/lowering placement part 71 have detected the urgent specimen rack 2b, the controller 211 causes the placement base drive part 61b to stop performing the drive. Thus, the urgent specimen rack 2b is relayed from the interruption specimen rack setting part 23 to the first lifting/lowering part 27. Meanwhile, when the rack sensors 71c have not detected any urgent specimen rack 2b even at the time of the relaying operation, the controller 211 executes a predetermined error process.

In step S92, the controller 211 controls the lifting/lowering drive part 73 to move the lifting/lowering placement part 71 to the reading position P12 for the first reading part 28. In step S93, the controller 211 controls the first reading part 28 to read: identification information about the urgent specimen rack 2b placed at the reading position P12; and identification information about each of the specimen containers 1b held by the urgent specimen rack 2b. When the controller 211 obtains these pieces of identification information from the first reading part 28, the controller 211 transmits the obtained pieces of identification information via the communication section 212 to the analysis unit 400.

In step S94, the controller 211 controls the laterally-sending part 75 to move the urgent specimen rack 2b on the lifting/lowering placement part 71 to the second transport path 32. Thus, the urgent specimen rack 2b is relayed from the first lifting/lowering part 27 to the second transport path 32. Through the above steps, the urgent specimen rack sending-out process is completed, and the process is advanced to the steps subsequent to step S75 in the flowchart in FIG. 25.

As described above, in the specimen measurement apparatus 300 having the above configuration, an ordinary specimen rack 2a present at the specimen suction position P1 on the first transport path 31 does not need to be shunted from the first transport path 31 at the time of measuring an urgent specimen so as to interrupt measurement of an ordinary specimen. Therefore, interruption measurement of the urgent specimen can be swiftly performed. In addition, the measurement of the ordinary specimen can be swiftly restarted after the measurement of the urgent specimen. Furthermore, the suction tube 701 which dispenses the urgent specimen does not pass through the position above the specimen suction position P1 for an ordinary specimen during movement of the suction tube 701 to the specimen dispensing position P31, whereby there is no concern that the urgent specimen falls off so as to be mixed in the ordinary specimen container 1a during the movement of the suction tube 701.

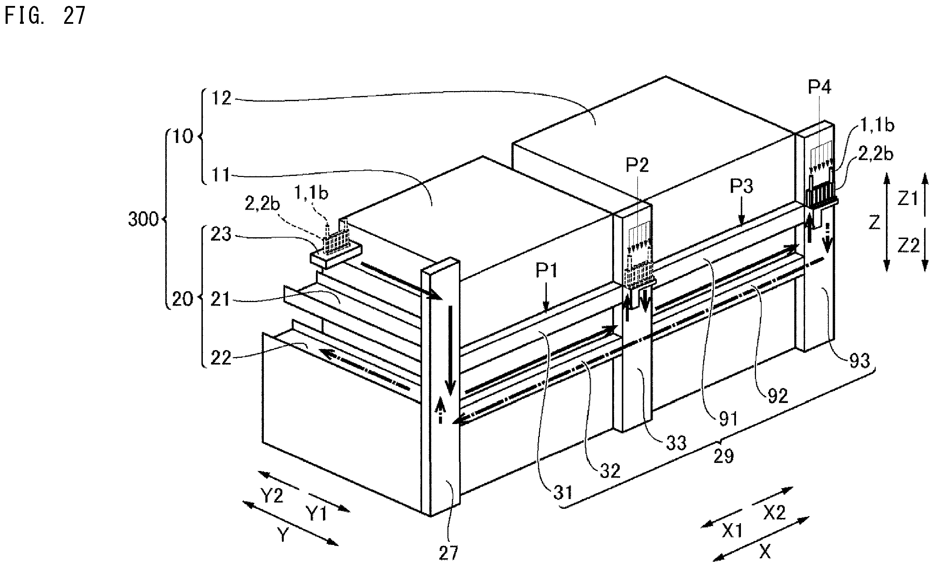

The design in the above embodiment can be changed as appropriate unless the object of the present disclosure is impaired. FIG. 27 to FIG. 31 show modifications of the above embodiment. Hereinafter, the constituents common to those in the above embodiment are denoted by the same reference characters, and repetitive descriptions thereof are omitted.

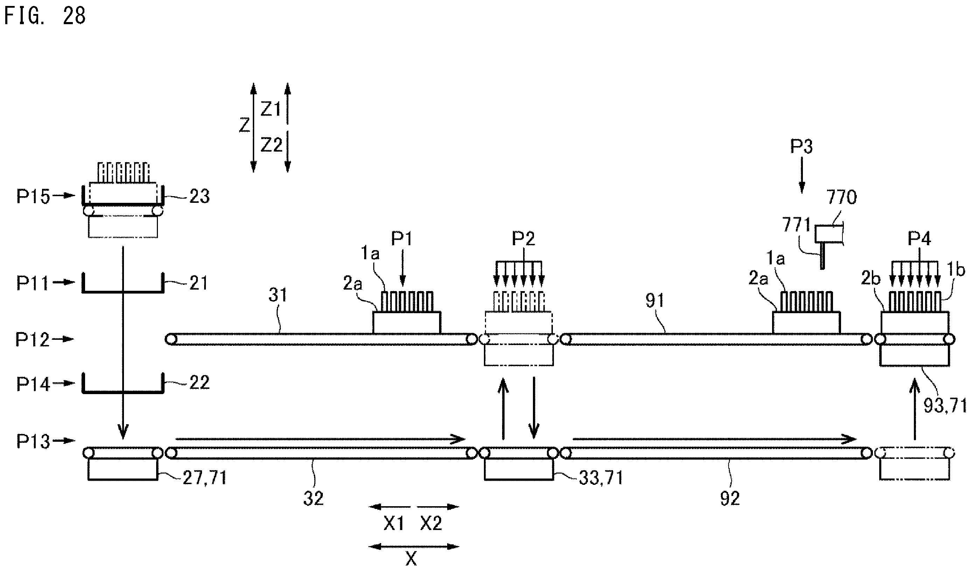

FIG. 27 and FIG. 28 show a first modification and show an example of a transport path for an urgent specimen rack 2b. As shown in FIG. 27 and FIG. 28, the measurement unit 10 may include a first measurement unit 11 and a second measurement unit 12. The first measurement unit 11 and the second measurement unit 12 may be of different kinds but, in the present modification, are of the same kind. At least some of measurement items differ between the measurement units. Similar to the case of the above embodiment, the specimen transport unit 20 includes the ordinary specimen rack setting part 21, the rack collection part 22, the interruption specimen rack setting part 23, and the transport device 29, and the transport device 29 includes the first transport path 31, the second transport path 32, and the second lifting/lowering part 33.

The transport device 29 further includes: a third transport path 91 adjacent to a movement region of the second lifting/lowering part 33; a fourth transport path 92 disposed below the third transport path 91 and adjacent to the movement region of the second lifting/lowering part 33; and a third lifting/lowering part 93 which is moved in the up-down direction and which relays a specimen rack 2 between the third transport path 91 and the fourth transport path 92. The configurations of the third transport path 91, the fourth transport path 92, and the third lifting/lowering part 93 are substantially the same as the configurations of the first transport path 31, the second transport path 32, and the second lifting/lowering part 33, respectively.

The first measurement unit 11 is such that, as described above, a predetermined position on the first transport path 31 is the specimen suction position P1 for an ordinary specimen, and positions on the second lifting/lowering part 33 each of which is at the same height as that of the specimen suction position P1 are the specimen suction positions P2 for urgent specimens. The second measurement unit 12 is such that a predetermined position on the third transport path 91 is a specimen suction position P3 for an ordinary specimen, and positions on the third lifting/lowering part 93 each of which is at the same height as that of the specimen suction position P3 are specimen suction positions P4 for urgent specimens. The third transport path 91 and the fourth transport path 92 respectively lead to the first transport path 31 and the second transport path 32 with the second lifting/lowering part 33 interposed therebetween, and thus specimen racks 2 can be relayed from the transport paths on the first measurement unit 11 side to the transport paths on the second measurement unit 12 side.

The controller 211 performs, on the basis of the identification information read by the first reading part 28, control to select a measurement unit to which the specimen rack 2 is to be supplied out of the first measurement unit 11 and the second measurement unit 12. That is, when a specimen rack 2 is relayed from the ordinary specimen rack setting part 21 or the interruption specimen rack setting part 23 to the first lifting/lowering part 27, and then identification information about each of the specimen rack 2 and specimen containers 1 thereon is read at the reading position P12 by the first reading part 28, the controller 211 transmits the read identification information to the analysis unit 400. The analysis unit 400 inquires of the host computer 500 about the identification information, obtains a measurement order corresponding to the identification information, and transmits the obtained measurement order to the controller 211. The controller 211 performs selection on the basis of the obtained measurement order, as to whether to transport the specimen rack 2 on the first lifting/lowering part 27 to the specimen suction position P1 or P2 corresponding to the first measurement unit 11 or transport the specimen rack 2 to the specimen suction position P3 or P4 corresponding to the second measurement unit 12. The controller 211 executes control in which the specimen rack 2 is transported to the selected transport destination.

In the first modification, while specimen suction from the ordinary specimen containers 1a held by the ordinary specimen rack 2a on the first transport path 31 is being performed by the first measurement unit 11, another specimen rack 2 is transported to the third transport path 91 or the fourth transport path 92 via the second transport path 32 and the second lifting/lowering part 33. Consequently, specimen suction from specimen containers 1 held by the other specimen rack 2 is performed by the second measurement unit 12. Meanwhile, while specimen suction is not being performed on the first transport path 31 by the first measurement unit 11, the specimen rack 2 can also be transported to the third transport path 91 or the fourth transport path 92 via the first transport path 31 and the second lifting/lowering part 33.

Through the third transport path 91, an ordinary specimen rack 2a having passed through at least one of the first transport path 31 and the second transport path 32 is transported via the specimen suction position P3. At the specimen suction position P3, a specimen is suctioned from each of the ordinary specimen containers 1a held by the ordinary specimen rack 2a on the basis of the measurement order. The ordinary specimen rack 2a having been subjected to specimen suction is collected on the rack collection part 22 after passing through the third lifting/lowering part 93, the fourth transport path 92, the second lifting/lowering part 33, the second transport path 32, and the first lifting/lowering part 27.

Through the fourth transport path 92, an urgent specimen rack 2b having passed through at least one of the first transport path 31 and the second transport path 32 is transported toward the specimen suction positions P4. When the fourth transport path 92 receives the urgent specimen rack 2b from the second lifting/lowering part 33, the urgent specimen rack 2b is moved through the fourth transport path 92 in the X2 direction so as to be relayed to the third lifting/lowering part 93. The third lifting/lowering part 93 moves the urgent specimen rack 2b in the Z1 direction so as to place the urgent specimen rack 2b at the specimen suction positions P4. When suction of all the urgent specimens at the specimen suction positions P4 is completed, the urgent specimen rack 2b is collected on the rack collection part 22. The path for the collection is the same path as that used in the case of ordinary specimen racks 2a.

When a measurement order regarding an urgent specimen includes a measurement item regarding which measurement is to be performed by the first measurement unit 11 and the second measurement unit 12, the urgent specimen rack 2b is transported to the specimen suction positions P4 corresponding to the second measurement unit 12 via the specimen suction positions P2 corresponding to first measurement unit 11. Meanwhile, when the measurement order does not include any measurement item regarding which measurement is to be performed by the first measurement unit 11, the urgent specimen rack 2b is transported across the second lifting/lowering part 33 to the specimen suction positions P4 not via the specimen suction positions P2. Likewise, when the measurement order does not include any measurement item regarding which measurement is to be performed by the second measurement unit 12, the urgent specimen rack 2b is not transported to the second measurement unit 12 side and is collected on the rack collection part 22 after passing through the second transport path 32 from the specimen suction positions P2.

As shown in FIG. 28, the second measurement unit 12 includes a specimen dispensing part 770 including a suction tube 771 which suctions a specimen from each of the ordinary specimen containers 1a held by the ordinary specimen rack 2a at the specimen suction position P3 and which ejects the specimen into a container 3 at a specimen dispensing position P31. Furthermore, the specimen dispensing part 770 suctions a specimen from each of the urgent specimen containers 1b held by the urgent specimen rack 2b at the corresponding specimen suction position P4 and ejects the specimen into a container 3 at the specimen dispensing position P31. The second measurement unit 12 measures the specimen ejected into the container 3.

In the first modification as well, the specimen suction position P3 is a position away from a region below a movement path through which the suction tube 771 is moved from the specimen suction position P4 to the specimen dispensing position P31. Therefore, there is no concern that the urgent specimen falls off so as to be mixed in the ordinary specimen container 1a during movement of the suction tube 771. In addition, ordinary specimen racks 2a present on the first transport path 31 and the third transport path 91 do not need to be shunted to other places at the time of measuring an urgent specimen in preference. Consequently, interruption measurement of the urgent specimen can be swiftly performed, and measurement of ordinary specimens can be swiftly restarted after the measurement of the urgent specimen.

In the case of the first modification as well, sending-out of ordinary specimen racks 2a from the ordinary specimen rack setting part 21 and sending-out of ordinary specimen racks 2a from the first transport path 31 and the third transport path 91 are prohibited when an urgent specimen rack 2b is detected on the interruption specimen rack setting part 23. In addition, when an ordinary specimen rack 2a is present on the transport path for an urgent specimen rack 2b, the ordinary specimen rack 2a is transported to the first transport path 31 or the third transport path 91 or collected on the rack collection part 22.

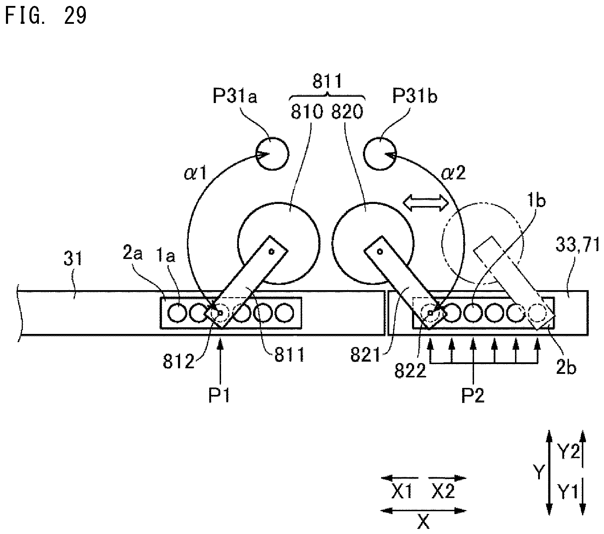

FIG. 29 shows a second modification. As shown in FIG. 29, the specimen dispensing part 111 may include a first specimen dispensing part 810 and a second specimen dispensing part 820. The first specimen dispensing part 810 and the second specimen dispensing part 820 include pipette arms 811 and 821 rotatable clockwise and anticlockwise in a plan view and suction tubes 812 and 822 mounted on the distal end portions of the pipette arms 811 and 821, respectively. In the above embodiment, the one suction tube 701 is used in common for ordinary specimen suction and urgent specimen suction. Meanwhile, in the second modification, the suction tube 812 of the first specimen dispensing part 810 is used for ordinary specimen suction, and the suction tube 822 of the second specimen dispensing part 820 is used for urgent specimen suction.

Furthermore, in the second modification, a specimen dispensing position P31a at which an ordinary specimen is ejected and a specimen dispensing position P31b at which an urgent specimen is ejected are present at different positions. The specimen dispensing positions P31a and P31b are, for example, arranged in the X direction such that the specimen dispensing position P31a is on the X1 direction side relative to the specimen dispensing position P31b. The suction tube 812 of the first specimen dispensing part 810 is moved to the specimen dispensing position P31a through clockwise rotation in a plan view, from the specimen suction position P1 for an ordinary specimen. The suction tube 822 of the second specimen dispensing part 820 is moved to the specimen dispensing position P31b through anticlockwise rotation in a plan view, from each of the specimen suction positions P2 for urgent specimens.

In the second modification as well, no specimen containers other than the ordinary specimen container 1a from which a specimen has been suctioned are present below the movement path α1 for the suction tube 812, and no specimen containers other than the urgent specimen container 1b from which a specimen has been suctioned are present below the movement path α2 for the suction tube 822. Therefore, there is no concern that either of the suctioned specimens falls off so as to be mixed in another specimen container during movement of the corresponding one of the suction tubes 812 and 822.

The first specimen dispensing part 810 has such a structure as not to be moved in the X direction. On the first transport path 31, the laterally-sending mechanism 36 moves an ordinary specimen rack 2a such that each of ordinary specimen containers 1a on the ordinary specimen rack 2a is placed at the specimen suction position P1 one by one. Thus, the first specimen dispensing part 810 does not need to be moved in the X direction. Meanwhile, the second specimen dispensing part 820 has a movement mechanism movable in the X direction. The second lifting/lowering part 33 is not provided with any movement mechanism such as the laterally-sending mechanism 36, and thus urgent specimen suction is performed while the pipette arm 821 is being moved in the X direction.

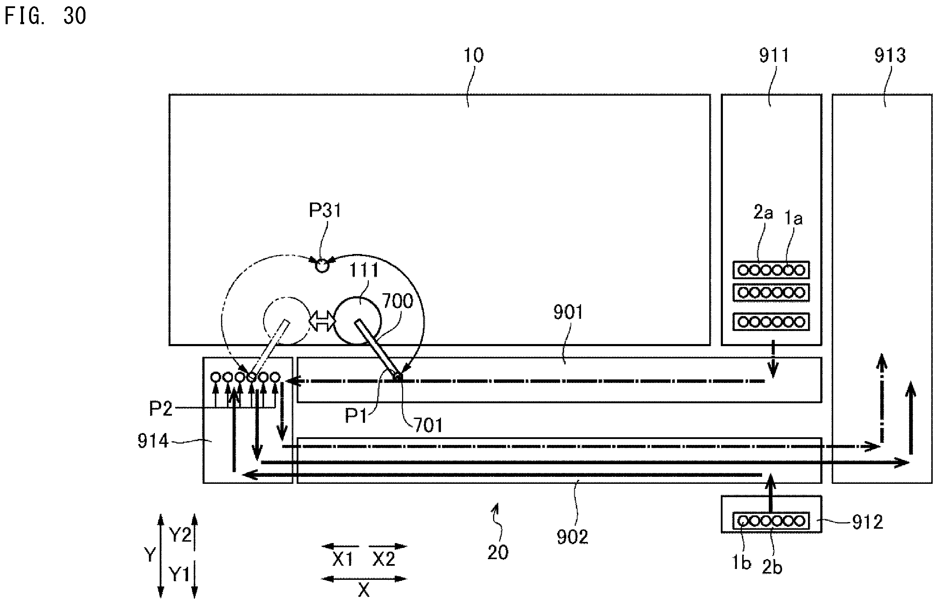

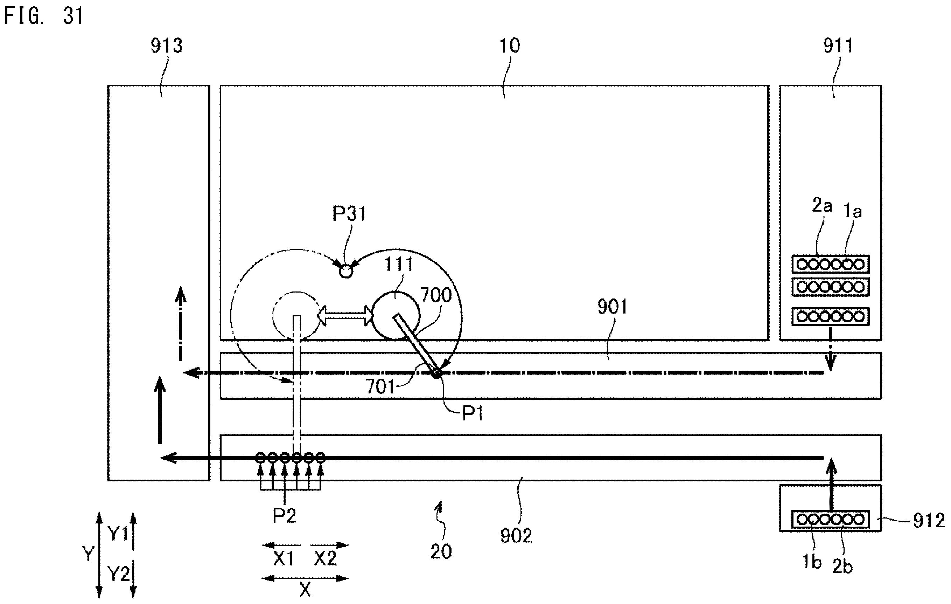

FIG. 30 shows a third modification, and FIG. 31 shows a fourth modification. As shown in FIG. 30 and FIG. 31, a first transport path 901 through which an ordinary specimen rack 2a is transported to the specimen suction position P1 and a second transport path 902 through which an urgent specimen rack 2b is transported to the specimen suction positions P2 may be arranged at the same height side-by-side in the Y direction. The first transport path 901 and the second transport path 902 are arranged so as to be parallel to each other along the X direction.

In the third modification shown in FIG. 30, the specimen transport unit 20 includes: an ordinary specimen rack setting part 911 which allows an ordinary specimen rack 2a to be set thereon; an interruption specimen rack setting part 912 which allows an urgent specimen rack 2b to be set thereon; a rack collection part 913; and a connection path 914. The rack collection part 913 is configured to be able to receive the ordinary specimen rack 2a and the urgent specimen rack 2b from the second transport path 902 and is disposed so as to be adjacent to an end portion in the X2 direction of the second transport path 902. The connection path 914 is a transport part that can relay the specimen racks 2 between the first transport path 901 and the second transport path 902 and is disposed so as to be adjacent to end portions in the X1 direction of the first transport path 901 and the second transport path 902.

The specimen transport unit 20 has a structure in which the first transport path 901, the second transport path 902, the ordinary specimen rack setting part 911, the interruption specimen rack setting part 912, the rack collection part 913, and the connection path 914 are arranged on the same plane. The ordinary specimen rack setting part 911 is disposed so as to be adjacent to the Y2 side of the first transport path 901 at an end portion in the X2 direction of the first transport path 901 and is configured to be able to send out an ordinary specimen rack 2a to the first transport path 901. The interruption specimen rack setting part 912 is disposed so as to be adjacent to the Y1 side of the second transport path 902 at the end portion in the X2 direction of the second transport path 902 and is configured to be able to send out an urgent specimen rack 2b to the second transport path 902. The interruption specimen rack setting part 912 only has to be able to allow one urgent specimen rack 2b to be set thereon. Meanwhile, the ordinary specimen rack setting part 911 preferably allows a plurality of ordinary specimen racks 2a to be set thereon.

The third modification is the same as the above embodiment in that: the specimen suction position P1 for an ordinary specimen and the specimen suction positions P2 for urgent specimens are arrayed in the X direction; and the one suction tube 701 is used in common for ordinary specimen suction and urgent specimen suction. The pipette arm 700 of the specimen dispensing part 111 is movable in the X direction, and urgent specimens are suctioned from the respective urgent specimen containers 1b held by the urgent specimen rack 2b at the specimen suction positions P2 while the pipette arm 700 is being moved in the X direction. The specimen suction position P1 for an ordinary specimen is a position on the first transport path 901, and the specimen suction positions P2 for urgent specimens are positions at an end portion in the Y2 direction of the connection path 914.

The ordinary specimen rack setting part 911 sends out an ordinary specimen rack 2a to the first transport path 901, and, through the first transport path 901, the received ordinary specimen rack 2a is moved in the X1 direction so as to be placed at the specimen suction position P1. The ordinary specimen rack 2a having been subjected to specimen suction such that a specimen has been suctioned therefrom by the suction tube 701 at the specimen suction position P1 is transported to the rack collection part 913 so as to pass through the connection path 914 and the second transport path 902. That is, the connection path 914 and the second transport path 902 form a collection path for the ordinary specimen rack 2a having been subjected to specimen suction.

The interruption specimen rack setting part 912 sends out an urgent specimen rack 2b to the second transport path 902, and, through the second transport path 902, the received urgent specimen rack 2b is moved in the X1 direction so as to be relayed to the connection path 914. Through the connection path 914, the urgent specimen rack 2b is moved in the Y2 direction so as to be placed at the specimen suction positions P2. The urgent specimen rack 2b having been subjected to specimen suction is transported to the rack collection part 913 so as to pass through the connection path 914 and the second transport path 902 in the same manner as in the case of ordinary specimen racks 2a.

The third modification is the same as the above embodiment in that an urgent specimen rack 2b is transported to the specimen suction positions P2 by using the collection path for ordinary specimen racks 2a. That is, the first transport path 901 is not used for transporting an urgent specimen rack 2b to the specimen suction positions P2. Consequently, an ordinary specimen rack 2a present at the specimen suction position P1 on the first transport path 901 does not need to be shunted from the first transport path 901 at the time of measuring an urgent specimen in preference. Furthermore, the suction tube 701 which dispenses the urgent specimen does not pass through the position above the specimen suction position P1 for an ordinary specimen during movement of the suction tube 701 to the specimen dispensing position P31, whereby there is no concern that the urgent specimen falls off so as to be mixed in an ordinary specimen container 1a during the movement of the suction tube 701.

The fourth modification shown in FIG. 31 is the same as the third modification in that: the first transport path 901 and the second transport path 902 are arranged so as to be parallel to each other; the ordinary specimen rack setting part 911 is connected to the end portion in the X2 direction of the first transport path 901; and the interruption specimen rack setting part 912 is connected to the end portion in the X2 direction of the second transport path 902. Meanwhile, the specimen transport unit 20 in the fourth modification differs from the specimen transport unit 20 in the third modification in that the rack collection part 913 is provided so as to be adjacent to the end portions in the X1 direction of the first transport path 901 and the second transport path 902. The specimen suction positions P2 for urgent specimens are set on the second transport path 902.

That is, in the fourth modification, the second transport path 902 is not a collection path for ordinary specimen racks 2a but is a transport path dedicated to urgent specimen racks 2b. In this case as well, the first transport path 901 is not used for transporting an urgent specimen rack 2b to the specimen suction positions P2. Consequently, an ordinary specimen rack 2a present at the specimen suction position P1 on the first transport path 901 does not need to be shunted from the first transport path 901 at the time of measuring an urgent specimen in preference.

In the fourth modification, the specimen suction position P1, for ordinary specimens, on the first transport path 901 and the specimen suction position P2, for urgent specimens, on the second transport path 902 are not aligned in the Y direction but are away from each other in the X direction. The specimen dispensing part 111 is configured to be movable in the X direction. When moving the suction tube 701 from the specimen suction position P1 to the specimen dispensing position P31, the specimen dispensing part 111 rotates the pipette arm 700 clockwise in a plan view. Meanwhile, when moving the suction tube 701 from any of the specimen suction positions P2 to the specimen dispensing position P31, the specimen dispensing part 111 rotates the pipette arm 700 anticlockwise in a plan view.

In the fourth modification, the pipette arm 700 has, for example, a stretchable structure that enables the length thereof to be changed. The pipette arm 700 is stretched to become long at the time of suctioning an urgent specimen at the specimen suction position P2, and the pipette arm 700 is shortened at the time of suctioning an ordinary specimen at the specimen suction position P1. The suction tube 701 reaches the specimen suction position P2 through the stretching so as to pass through a position above the first transport path 901. However, the suction tube 701 does not pass through a position above the specimen suction position P1 during the movement of the suction tube 701 to the specimen dispensing position P31. Therefore, there is no concern that the urgent specimen falls off so as to be mixed in an ordinary specimen container 1a during the movement of the suction tube 701.

## Claims

1. A specimen measurement apparatus (300) comprising:
a specimen rack setting part (21, 23) configured to allow a first specimen rack (2a) and a second specimen rack (2b) to be set thereon, the first specimen rack (2a) holding a first specimen container (1a), the second specimen rack (2b) holding a second specimen container (1b) to be subjected to specimen measurement in preference to the first specimen container (1a);
a first transport path (31) through which the first specimen rack (2a) set on the specimen rack setting part (23) is transported via a first suction position (P1) at which a specimen is to be suctioned from the first specimen container (1a);
a second transport path (32) through which the second specimen rack (2b) set on the specimen rack setting part (23) is transported not via the first suction position (P1); and
a measurement unit (10) including a suction part (111) configured to suction a specimen by causing a suction tube (701, 703) to enter the second specimen container (1b) that is present at a second suction position (P2) and that is held by the second specimen rack (2b) transported through the second transport path (32), the suction part (701) being further configured to move the suction tube (701, 703) to an ejection position (P31), the suction part (701) being further configured to eject the suctioned specimen into a container at the ejection position (P31), the measurement unit (10) being configured to measure the specimen, wherein
the first suction position (P1) is a position away from a region below a movement path through which the suction tube (701, 703) is moved from the second suction position (P2) to the ejection position (P31),
**characterised in that**
the first transport path (31) and the second transport path (32) are arranged side-by-side in an up-down direction, and
the specimen measurement apparatus (300) further comprises a rack reception part configured to receive the second specimen rack (2b) from the second transport path (32) and place, at the second suction position (P2), the second specimen container (1b) held by the received second specimen rack (2b).

2. The specimen measurement apparatus (300) of claim 1, wherein
the rack reception part further receives the first specimen rack (2a) from the first transport path (31) and relays the received first specimen rack (2a) to the second transport path (32).

3. The specimen measurement apparatus (300) of claim 1, wherein
the rack reception part includes
a placement base (23b) configured to allow a rack to be placed thereon, and
a placement base movement part configured to move the placement base (23b) to a position adjacent to the first transport path (31) and a position adjacent to the second transport path (32).

4. The specimen measurement apparatus (300) of claim 1, further comprising
a controller (211) configured to control a transport operation that is performed through each of the first transport path (31) and the second transport path (32).

5. The specimen measurement apparatus (300) of claim 4, further comprising
a detector configured to detect the second specimen rack (2b) set on the specimen rack setting part (23) or the second specimen container (1b) held by the second specimen rack (2b), wherein
the controller (211) controls, when the detector has detected the second specimen rack (2b) or the second specimen container (1b), the first transport path (31) and the second transport path (32) to: prohibit sending-out of the first specimen rack (2a) present on the specimen rack setting part (23); and transport the second specimen rack (2b) to the second suction position (P2) via the second transport path (32).

6. The specimen measurement apparatus (300) of claim 4, further comprising
a detector configured to detect the second specimen rack (2b) set on the specimen rack setting part (23) or the second specimen container (1b) held by the second specimen rack (2b), wherein
the controller (211) controls, when the detector has detected the second specimen rack (2b) or the second specimen container (1b), the first transport path (31) and the second transport path (32) to: prohibit sending-out of the first specimen rack (2a) present on the first transport path (31); and transport the second specimen rack (2b) to the second suction position (P2) via the second transport path (32).

7. The specimen measurement apparatus (300) of claim 4, further comprising
a rack collection part (22) configured to collect the second specimen rack (2b), wherein
the controller (211) controls the second transport path (32) such that the second specimen rack (2b) transported to the second suction position (P2) is collected on the rack collection part (22) via the second transport path (32).

8. The specimen measurement apparatus (300) of claim 7, further comprising
a rack reception part configured to receive the second specimen rack (2b) from the second transport path (32), place, at the second suction position (P2), the second specimen container (1b) held by the received second specimen rack (2b), receive the first specimen rack (2a) from the first transport path (31), and relay the received first specimen rack (2a) to the second transport path (32), wherein
the controller (211) controls the rack reception part and the second transport part such that the first specimen rack (2a) transported to the first suction position (P1) is collected on the rack collection part (22) via the rack reception part and the second transport path (32).

9. The specimen measurement apparatus (300) of claim 8, further comprising
a detector configured to detect the second specimen rack (2b) set on the specimen rack setting part (23) or the second specimen container (1b) held by the second specimen rack (2b), wherein
the controller (211) controls, when the detector has detected the second specimen rack (2b) or the second specimen container (1b), the rack reception part and the second transport path (32) such that the first specimen rack (2a) present on each of the rack reception part and the second transport path (32) is collected on the rack collection part (22).

10. The specimen measurement apparatus (300) of claim 1, wherein
the suction part (111) suctions a specimen by causing the suction tube (701, 703) to enter the first specimen container (1a) present at the first suction position (P1).

11. The specimen measurement apparatus (300) of claim 1, wherein
the suction part (111) suctions a specimen by causing a suction tube (701, 703) other than the suction tube (701, 703) to enter the first specimen container (1a) present at the first suction position (P1).

12. The specimen measurement apparatus (300) of claim 10 or 11, wherein
the second suction position (P2) is a position away from a region below a movement path through which the suction tube (701, 703) or a suction tube (701, 703) other than the suction tube (701, 703) is moved from the first suction position (P1) to an ejection position (P31) at which the suctioned specimen is ejected into a container.

13. The specimen measurement apparatus (300) of claim 1, wherein
the first transport path (31) and the second transport path (32) are arranged side-by-side so as to be parallel to each other.

14. The specimen measurement apparatus (300) of claim 1, wherein
the first transport path (31) is disposed above the second transport path (32).

15. The specimen measurement apparatus (300) of claim 1, wherein
the rack reception part includes a movement inhibiting part configured to inhibit movement of the second specimen rack (2b) on the rack reception part.

16. The specimen measurement apparatus (300) of claim 1, wherein
the suction part (111) includes the suction tube (701, 703) and a suction tube (701, 703) movement part configured to move the suction tube (701, 703).

17. The specimen measurement apparatus (300) of claim 16, wherein
the suction tube (701, 703) movement part includes
a first movement mechanism (710) configured to move the suction tube (701) along the first transport path (31), and
a second movement mechanism (720) configured to move the suction tube (701) in a direction intersecting with the first transport path (31) in a plan view.

18. The specimen measurement apparatus (300) of claim 1, wherein
the specimen rack setting part (23) includes
a first setting part configured to allow the first specimen rack (2a) to be set thereon and
a second setting part configured to allow the second specimen rack (2b) to be set thereon, and
the specimen measurement apparatus (300) further comprises a transport part configured to receive the first specimen rack (2a) from the first setting part, relay the received first specimen rack (2a) to the first transport path (31), receive the second specimen rack (2b) from the second setting part, and relay the received second specimen rack (2b) to the second transport path (32).

19. The specimen measurement apparatus (300) of claim 1, further comprising:
a third transport path (91) through which the first specimen rack (2a) having passed through at least one of the first transport path (31) and the second transport path (32) is transported via a third suction position at which a specimen is to be suctioned;
a fourth transport path (92) through which the second specimen rack (2b) having passed through at least one of the first transport path (31) and the second transport path (32) is transported not via the third suction position; and
a second measurement unit (12) including a second suction part (770) configured to suction a specimen by causing a second suction tube to enter the second specimen container (1b) that is present at a fourth suction position and that is held by the second specimen rack (2b) transported through the fourth transport path (92), the second suction part (701) being further configured to move the second suction tube to a second ejection position (P31), the second suction part (701) being further configured to eject the suctioned specimen into a container at the second ejection position (P31), the second measurement unit (10) being configured to measure the specimen, wherein
the third suction position is a position away from a region below a movement path through which the second suction tube is moved from the fourth suction position to the second ejection position (P31).

20. A specimen measurement method comprising:
transporting, by a first transport path (31), a first specimen rack (2a) holding a first specimen container (1a) to a first suction position (P1) at which a specimen is to be suctioned;
detecting that a second specimen rack (2b) holding a second specimen container (1b) to be subjected to specimen measurement in preference to the first specimen container (1a) has been set;
transporting, by a second transport path (32) and a rack reception part, when detecting that the second specimen rack (2b) has been set, the set second specimen rack (2b) not via the first suction position (P1) so as to place, at a second suction position (P2), the second specimen container (1b) held by the second specimen rack (2b);
suctioning a specimen from the second specimen container (1b) present at the second suction position (P2), by causing a suction tube (701, 703) to enter the second specimen container (1b);
moving the suction tube (701, 703) from the second suction position (P2) to an ejection position (P31) not via a position above the first suction position (P1);
ejecting the specimen into a container at the ejection position (P31); and
measuring the specimen ejected into the container,
**characterised in that**
the first transport path (31) and the second transport path (32) are arranged side-by-side in an up-down direction, and
the rack reception part is configured to receive the second specimen rack (2b) from the second transport path (32) and place, at the second suction position (P2), the second specimen container (1b) held by the received second specimen rack (2b).

21. A specimen measurement apparatus (300) comprising:
a specimen rack setting part (23) configured to allow a first specimen rack (2a) and a second specimen rack (2b) to be set thereon, the first specimen rack (2a) holding a first specimen container (1a), the second specimen rack (2b) holding a second specimen container (1b) to be subjected to specimen measurement in preference to the first specimen container (1a);
a rack collection part (22) configured to collect the first specimen rack (2a);
a first transport path (31) through which the first specimen rack (2a) set on the specimen rack setting part (23) is transported via a first suction position (P1) at which a specimen is to be suctioned from the first specimen container (1a);
a second transport path (32) through which the first specimen rack (2a) holding the first specimen container (1a), from which a specimen has been suctioned, is transported toward the rack collection part (22), and the second specimen rack (2b) set on the specimen rack setting part (23) is transported not via the first suction position (P1); and
a measurement unit (10) configured to
suction a specimen from the first specimen container (1a) that is present at the first suction position (P1) and that is held by the first specimen rack (2a) transported through the first transport path (31),
measure the specimen suctioned from the first specimen container (1a),
suction a specimen from the second specimen container (1b) that is present at a second suction position (P2) and that is held by the second specimen rack (2b) transported through the second transport path (32), and
measure the specimen suctioned from the second specimen container (1b).

22. A specimen measurement method comprising:
transporting a first specimen rack (2a) holding a first specimen container (1a) to a first suction position (P1) at which a specimen is to be suctioned;
suctioning a specimen from the first specimen container (1a) present at the first suction position (P1) and measuring the specimen;
transporting the first specimen rack (2a) holding the first specimen container (1a), from which the specimen has been suctioned, to a rack collection part (22) via a transport path;
detecting that a second specimen rack (2b) holding a second specimen container (1b) to be subjected to specimen measurement in preference to the first specimen container (1a) has been set;
transporting, when detecting that the second specimen rack (2b) has been set, the set second specimen rack (2b) not via the first suction position (P1) but via the transport path so as to place, at a second suction position (P2), the second specimen container (1b) held by the second specimen rack (2b); and
suctioning a specimen from the second specimen container (1b) present at the second suction position (P2) and measuring the specimen in preference to the first specimen container (1a) present at the first suction position (P1).

## Patentansprüche

1. Probenmessvorrichtung (300), umfassend:
ein Proben-Gestell-Einsetzteil (21, 23), das konfiguriert ist, um ein Einsetzen eines ersten Proben-Gestells (2a) und eines zweiten Proben-Gestells (2b) darauf zu ermöglichen, wobei das erste Proben-Gestell (2a) einen ersten Probenbehälter (1a) hält, wobei das zweite Proben-Gestell (2b) einen zweiten Probenbehälter (1b) hält, der bevorzugt vor dem ersten Probenbehälter (1a) einer Probenmessung zu unterziehen ist;
einen ersten Transportpfad (31), durch den das auf dem Proben-Gestell-Einsetzteil (23) eingesetzte erste Proben-Gestell (2a) über eine erste Saugposition (P1) transportiert wird, an der eine Probe aus dem ersten Probenbehälter (1a) anzusaugen ist;
einen zweiten Transportpfad (32), durch den das auf dem Proben-Gestell-Einsetzteil (23) eingesetzte zweite Proben-Gestell (2b) nicht über die erste Saugposition (P1) transportiert wird; und
eine Messeinheit (10), die ein Saugteil (111) umfasst, das konfiguriert ist, um eine Probe anzusaugen, indem ein Saugrohr (701, 703) veranlasst wird, in den zweiten Probenbehälter (1b) einzutreten, der sich an einer zweiten Saugposition (P2) befindet und der von dem zweiten Proben-Gestell (2b) gehalten wird, das durch den zweiten Transportpfad (32) transportiert wird, wobei das Saugteil (701) ferner konfiguriert ist, um das Saugrohr (701, 703) in eine Ausstoßposition (P31) zu bewegen, wobei das Saugteil (701) ferner konfiguriert ist, um die angesaugte Probe in einen Behälter an der Ausstoßposition (P31) auszustoßen, wobei die Messeinheit (10) konfiguriert ist, um die Probe zu messen, wobei
die erste Saugposition (P1) eine Position entfernt von einem Bereich unterhalb eines Bewegungspfads ist, durch den das Saugrohr (701, 703) von der zweiten Saugposition (P2) in die Ausstoßposition (P31) bewegt wird,
**dadurch gekennzeichnet, dass**
der erste Transportpfad (31) und der zweite Transportpfad (32) nebeneinander in einer Oben-Unten-Richtung angeordnet sind, und
die Probenmessvorrichtung (300) ferner ein Gestell-Empfangsteil umfasst, das konfiguriert ist, um das zweite Proben-Gestell (2b) von dem zweiten Transportpfad (32) zu empfangen und den von dem empfangenen zweiten Proben-Gestell (2b) gehaltenen zweiten Probenbehälter (1b) an der zweiten Saugposition (P2) anzuordnen.

2. Probenmessvorrichtung (300) nach Anspruch 1, wobei
das Gestell-Empfangsteil ferner das erste Proben-Gestell (2a) von dem ersten Transportpfad (31) empfängt und das empfangene erste Proben-Gestell (2a) an den zweiten Transportpfad (32) weiterleitet.

3. Probenmessvorrichtung (300) nach Anspruch 1, wobei
das Gestell-Empfangsteil aufweist
eine Anordnungsbasis (23b), die konfiguriert ist, um ein Anordnen eines Gestells darauf zu ermöglichen, und
ein Anordnungsbasis-Bewegungsteil, das konfiguriert ist, um die Anordnungsbasis (23b) an eine Position benachbart zu dem ersten Transportpfad (31) und eine Position benachbart zu dem zweiten Transportpfad (32) zu bewegen.

4. Probenmessvorrichtung (300) nach Anspruch 1, ferner umfassend
eine Steuerung (211), die konfiguriert ist, um einen Transportvorgang zu steuern, der durch jeden von dem ersten Transportpfad (31) und dem zweiten Transportpfad (32) durchgeführt wird.

5. Probenmessvorrichtung (300) nach Anspruch 4, ferner umfassend
einen Detektor, der konfiguriert ist, um das zweite Proben-Gestell (2b), das auf dem Proben-Gestell-Einsetzteil (23) eingesetzt ist, oder den zweiten Probenbehälter (1b), der von dem zweiten Proben-Gestell (2b) gehalten wird, zu detektieren, wobei
die Steuerung (211), wenn der Detektor das zweite Proben-Gestell (2b) oder den zweiten Probenbehälter (1b) detektiert hat, den ersten Transportpfad (31) und den zweiten Transportpfad (32) steuert zum: Verbieten eines Heraussendens des ersten Proben-Gestells (2a), das auf dem Proben-Gestell-Einsetzteil (23) vorhanden ist; und Transportieren des zweiten Proben-Gestells (2b) zu der zweiten Saugposition (P2) über den zweiten Transportpfad (32).

6. Probenmessvorrichtung (300) nach Anspruch 4, ferner umfassend
einen Detektor, der konfiguriert ist, um das zweite Proben-Gestell (2b), das auf dem Proben-Gestell-Einsetzteil (23) eingesetzt ist, oder den zweiten Probenbehälter (1b), der von dem zweiten Proben-Gestell (2b) gehalten wird, zu detektieren, wobei
die Steuerung (211), wenn der Detektor das zweite Proben-Gestell (2b) oder den zweiten Probenbehälter (1b) detektiert hat, den ersten Transportpfad (31) und den zweiten Transportpfad (32) steuert zum: Verbieten eines Heraussendens des ersten Proben-Gestells (2a), das auf dem ersten Transportpfad (31) vorhanden ist; und Transportieren des zweiten Proben-Gestells (2b) zu der zweiten Saugposition (P2) über den zweiten Transportpfad (32).

7. Probenmessvorrichtung (300) nach Anspruch 4, ferner umfassend
ein Gestell-Sammelteil (22), das konfiguriert ist, um das zweite Proben-Gestell (2b) zu sammeln,
wobei
die Steuerung (211) den zweiten Transportpfad (32) so steuert, dass das zu der zweiten Saugposition (P2) transportierte zweite Proben-Gestell (2b) an dem Gestell-Sammelteil (22) über den zweiten Transportpfad (32) gesammelt wird.

8. Probenmessvorrichtung (300) nach Anspruch 7, ferner umfassend
ein Gestell-Empfangsteil, das konfiguriert ist, um das zweite Proben-Gestell (2b) von dem zweiten Transportpfad (32) zu empfangen, den von dem empfangenen zweiten Proben-Gestell (2b) gehaltenen zweiten Probenbehälter (1b) an der zweiten Saugposition (P2) anzuordnen, das erste Proben-Gestell (2a) von dem ersten Transportpfad (31) zu empfangen, und das empfangene erste Proben-Gestell (2a) an den zweiten Transportpfad (32) weiterzuleiten, wobei
die Steuerung (211) das Gestell-Empfangsteil und das zweite Transportteil so steuert, dass das zu der ersten Saugposition (P1) transportierte erste Proben-Gestell (2a) an dem Gestell-Sammelteil (22) über das Gestell-Empfangsteil und den zweiten Transportpfad (32) gesammelt wird.

9. Probenmessvorrichtung (300) nach Anspruch 8, ferner umfassend
einen Detektor, der konfiguriert ist, um das zweite Proben-Gestell (2b), das auf dem Proben-Gestell-Einsetzteil (23) eingesetzt ist, oder den zweiten Probenbehälter (1b), der von dem zweiten Proben-Gestell (2b) gehalten wird, zu detektieren, wobei
die Steuerung (211), wenn der Detektor das zweite Proben-Gestell (2b) oder den zweiten Probenbehälter (1b) detektiert hat, das Gestell-Empfangsteil und den zweiten Transportpfad (32) so steuert, dass das erste Proben-Gestell (2a), das jeweils auf dem Gestell-Empfangsteil und dem zweiten Transportpfad (32) vorhanden ist, an dem Gestell-Sammelteil (22) gesammelt wird.

10. Probenmessvorrichtung (300) nach Anspruch 1, wobei
das Saugteil (111) eine Probe ansaugt, indem das Saugrohr (701, 703) veranlasst wird, in den ersten Probenbehälter (1a) einzutreten, der an der ersten Saugposition (P1) vorhanden ist.

11. Probenmessvorrichtung (300) nach Anspruch 1, wobei
das Saugteil (111) eine Probe ansaugt, indem ein von dem Saugrohr (701, 703) verschiedenes Saugrohr (701, 703) veranlasst wird, in den ersten Probenbehälter (1a) einzutreten, der an der ersten Saugposition (P1) vorhanden ist.

12. Probenmessvorrichtung (300) nach Anspruch 10 oder 11, wobei
die zweite Saugposition (P2) eine Position entfernt von einem Bereich unterhalb eines Bewegungspfads ist, durch den das Saugrohr (701, 703) oder ein von dem Saugrohr (701, 703) verschiedenes Saugrohr (701, 703) von der ersten Saugposition (P1) in eine Ausstoßposition (P31) bewegt wird, an der die angesaugte Probe in einen Behälter ausgestoßen wird.

13. Probenmessvorrichtung (300) nach Anspruch 1, wobei
der erste Transportpfad (31) und der zweite Transportpfad (32) so nebeneinander angeordnet sind, dass sie parallel zueinander sind.

14. Probenmessvorrichtung (300) nach Anspruch 1, wobei
der erste Transportpfad (31) oberhalb des zweiten Transportpfads (32) angebracht ist.

15. Probenmessvorrichtung (300) nach Anspruch 1, wobei
das Gestell-Empfangsteil ein Bewegungsverhinderungsteil aufweist, das konfiguriert ist, um eine Bewegung des zweiten Proben-Gestells (2b) auf dem Gestell-Empfangsteil zu verhindern.

16. Probenmessvorrichtung (300) nach Anspruch 1, wobei
das Saugteil (111) das Saugrohr (701, 703) und ein Saugrohr (701, 703)-Bewegungsteil aufweist, das konfiguriert ist, um das Saugrohr (701, 703) zu bewegen.

17. Probenmessvorrichtung (300) nach Anspruch 16, wobei
das Saugrohr (701, 703)-Bewegungsteil aufweist
einen ersten Bewegungsmechanismus (710), der konfiguriert ist, um das Saugrohr (701) entlang des ersten Transportpfads (31) zu bewegen, und
einen zweiten Bewegungsmechanismus (720), der konfiguriert ist, um das Saugrohr (701) in einer Richtung zu bewegen, die den ersten Transportpfad (31) in einer Draufsicht schneidet.

18. Probenmessvorrichtung (300) nach Anspruch 1, wobei
das Proben-Gestell-Einsetzteil (23) enthält
ein erstes Einsetzteil, das konfiguriert ist, um ein Einsetzen des ersten Proben-Gestells (2a) darauf zu ermöglichen, und
ein zweites Einsetzteil, das konfiguriert ist, um ein Einsetzen des zweiten Proben-Gestells (2b) darauf zu ermöglichen, und
die Probenmessvorrichtung (300) ferner ein Transportteil umfasst, das konfiguriert ist, um das erste Proben-Gestell (2a) von dem ersten Einsetzteil zu empfangen, das empfangene erste Proben-Gestell (2a) an den ersten Transportpfad (31) weiterzuleiten, das zweite Proben-Gestell (2b) von dem zweiten Einsetzteil zu empfangen, und das empfangene zweite Proben-Gestell (2b) an den zweiten Transportpfad (32) weiterzuleiten.

19. Probenmessvorrichtung (300) nach Anspruch 1, ferner umfassend:
einen dritten Transportpfad (91), durch den das erste Proben-Gestell (2a), das mindestens einen von dem ersten Transportpfad (31) und dem zweiten Transportpfad (32) passiert hat, über eine dritte Saugposition transportiert wird, an der eine Probe anzusaugen ist;
einen vierten Transportpfad (92), durch den das zweite Proben-Gestell (2b), das mindestens einen von dem ersten Transportpfad (31) und dem zweiten Transportpfad (32) passiert hat, nicht über die dritte Saugposition transportiert wird; und
eine zweite Messeinheit (12), die ein zweites Saugteil (770) umfasst, das konfiguriert ist, um eine Probe anzusaugen, indem ein zweites Saugrohr veranlasst wird, in den zweiten Probenbehälter (1b) einzutreten, der sich an einer vierten Saugposition befindet und der von dem zweiten Proben-Gestell (2b) gehalten wird, das durch den vierten Transportpfad (92) transportiert wird, wobei das zweite Saugteil (701) ferner konfiguriert ist, um das zweite Saugrohr in eine zweite Ausstoßposition (P31) zu bewegen, wobei das zweite Saugteil (701) ferner konfiguriert ist, um die angesaugte Probe in einen Behälter an der zweiten Ausstoßposition (P31) auszustoßen, wobei die zweite Messeinheit (10) konfiguriert ist, um die Probe zu messen, wobei die dritte Saugposition eine Position entfernt von einem Bereich unterhalb eines Bewegungspfads ist, durch den das zweite Saugrohr von der vierten Saugposition in die zweite Ausstoßposition (P31) bewegt wird.

20. Probenmessverfahren, umfassend:
Transportieren, durch einen ersten Transportpfad (31), eines ersten Proben-Gestells (2a), das einen ersten Probenbehälter (1a) hält, zu einer ersten Saugposition (P1), an der eine Probe anzusaugen ist;
Detektieren, dass ein zweites Proben-Gestell (2b) eingesetzt wurde, das einen zweiten Probenbehälter (1b) hält, der bevorzugt vor dem ersten Probenbehälter (1a) einer Probenmessung zu unterziehen ist;
Transportieren, durch einen zweiten Transportpfad (32) und ein Gestell-Empfangsteil, wenn detektiert wird, dass das zweite Proben-Gestell (2b) eingesetzt wurde, des eingesetzten zweiten Proben-Gestells (2b) nicht über die erste Saugposition (P1), um den von dem zweiten Proben-Gestell (2b) gehaltenen zweiten Probenbehälter (1b) an einer zweiten Saugposition (P2) anzuordnen;
Ansaugen einer Probe aus dem an der zweiten Saugposition (P2) vorhandenen zweiten Probenbehälter (1b), indem ein Saugrohr (701, 703) veranlasst wird, in den zweiten Probenbehälter (1b) einzutreten;
Bewegen des Saugrohrs (701, 703) von der zweiten Saugposition (P2) in eine Ausstoßposition (P31) nicht über eine Position oberhalb der ersten Saugposition (P1); Ausstoßen der Probe in einen Behälter an der Ausstoßposition (P31); und
Messen der in den Behälter ausgestoßenen Probe,
**dadurch gekennzeichnet, dass**
der erste Transportpfad (31) und der zweite Transportpfad (32) nebeneinander in einer Oben-Unten-Richtung angeordnet sind, und
das Gestell-Empfangsteil konfiguriert ist, um das zweite Proben-Gestell (2b) von dem zweiten Transportpfad (32) zu empfangen und den von dem empfangenen zweiten Proben-Gestell (2b) gehaltenen zweiten Probenbehälter (1b) an der zweiten Saugposition (P2) anzuordnen.

21. Probenmessvorrichtung (300), umfassend:
ein Proben-Gestell-Einsetzteil (23), das konfiguriert ist, um ein Einsetzen eines ersten Proben-Gestells (2a) und eines zweiten Proben-Gestells (2b) darauf zu ermöglichen, wobei das erste Proben-Gestell (2a) einen ersten Probenbehälter (1a) hält, wobei das zweite Proben-Gestell (2b) einen zweiten Probenbehälter (1b) hält, der bevorzugt vor dem ersten Probenbehälter (1a) einer Probenmessung zu unterziehen ist;
ein Gestell-Sammelteil (22), das konfiguriert ist, um das erste Proben-Gestell (2a) zu sammeln;
einen ersten Transportpfad (31), durch den das auf dem Proben-Gestell-Einsetzteil (23) eingesetzte erste Proben-Gestell (2a) über eine erste Saugposition (P1) transportiert wird, an der eine Probe aus dem ersten Probenbehälter (1a) anzusaugen ist;
einen zweiten Transportpfad (32), durch den das erste Proben-Gestell (2a), das den ersten Probenbehälter (1a) hält, aus dem eine Probe angesaugt wurde, in Richtung des Gestell-Sammelteils (22) transportiert wird, und das auf dem Proben-Gestell-Einsetzteil (23) eingesetzte zweite Proben-Gestell (2b) nicht über die erste Saugposition (P1) transportiert wird; und
eine Messeinheit (10), die konfiguriert ist zum
Ansaugen einer Probe aus dem ersten Probenbehälter (1a), der an der ersten Saugposition (P1) vorhanden ist und der von dem durch den ersten Transportpfad (31) transportierten ersten Proben-Gestell (2a) gehalten wird,
Messen der aus dem ersten Probenbehälter (1a) angesaugten Probe,
Ansaugen einer Probe aus dem zweiten Probenbehälter (1b), der an einer zweiten Saugposition (P2) vorhanden ist und der von dem durch den zweiten Transportpfad (32) transportierten zweiten Proben-Gestell (2b) gehalten wird, und
Messen der aus dem zweiten Probenbehälter (1b) angesaugten Probe.

22. Probenmessverfahren, umfassend:
Transportieren eines ersten Proben-Gestells (2a), das einen ersten Probenbehälter (1a) hält, zu einer ersten Saugposition (P1), an der eine Probe anzusaugen ist;
Ansaugen einer Probe aus dem an der ersten Saugposition (P1) vorhandenen ersten Probenbehälter (1a) und Messen der Probe;
Transportieren des ersten Proben-Gestells (2a), das den ersten Probenbehälter (1a) hält, aus dem die Probe angesaugt wurde, zu einem Gestell-Sammelteil (22) über einen Transportpfad;
Detektieren, dass ein zweites Proben-Gestell (2b) eingesetzt wurde, das einen zweiten Probenbehälter (1b) hält, der bevorzugt vor dem ersten Probenbehälter (1a) einer Probenmessung zu unterziehen ist;
Transportieren, wenn detektiert wird, dass das zweite Proben-Gestell (2b) eingesetzt wurde, des eingesetzten zweiten Proben-Gestells (2b) nicht über die erste Saugposition (P1), sondern über den Transportpfad, um den von dem zweiten Proben-Gestell (2b) gehaltenen zweiten Probenbehälter (1b) an einer zweiten Saugposition (P2) anzuordnen; und
Ansaugen einer Probe aus dem an der zweiten Saugposition (P2) vorhandenen zweiten Probenbehälter (1b) und Messen der Probe bevorzugt vor dem an der ersten Saugposition (P1) vorhandenen ersten Probenbehälter (1a).

## Revendications

1. Appareil de mesure d'échantillon (300) comprenant :
une partie de mise en place de portoir d'échantillons (21, 23) configurée pour permettre à un premier portoir d'échantillons (2a) et à un deuxième portoir d'échantillons (2b) d'être mis en place sur celle-ci, le premier portoir d'échantillons (2a) contenant un premier récipient d'échantillon (1a), le deuxième portoir d'échantillons (2b) contenant un deuxième récipient d'échantillon (1b) devant être soumis à une mesure d'échantillon de préférence au premier récipient d'échantillon (1a) ;
un premier trajet de transport (31) à travers lequel le premier portoir d'échantillons (2a) mis en place sur la partie de mise en place de portoir d'échantillons (23) est transporté via une première position d'aspiration (P1) à laquelle un échantillon doit être aspiré à partir du premier récipient d'échantillon (1a) ;
un deuxième trajet de transport (32) à travers lequel le deuxième portoir d'échantillons (2b) mis en place sur la partie de mise en place de portoir d'échantillons (23) est transporté sans passer par la première position d'aspiration (P1) ; et
une unité de mesure (10) comprenant une partie d'aspiration (111) configurée pour aspirer un échantillon en amenant un tube d'aspiration (701, 703) à entrer dans le deuxième récipient d'échantillon (1b) qui est présent à une deuxième position d'aspiration (P2) et qui est contenu par le deuxième portoir d'échantillons (2b) transporté à travers le deuxième trajet de transport (32), la partie d'aspiration (701) étant en outre configurée pour déplacer le tube d'aspiration (701, 703) vers une position d'éjection (P31), la partie d'aspiration (701) étant en outre configurée pour éjecter l'échantillon aspiré dans un récipient à la position d'éjection (P31), l'unité de mesure (10) étant configurée pour mesurer l'échantillon, dans lequel
la première position d'aspiration (P1) est une position éloignée d'une région située sous un trajet de mouvement à travers lequel le tube d'aspiration (701, 703) est déplacé de la deuxième position d'aspiration (P2) vers la position d'éjection (P31),
**caractérisé en ce que**
le premier trajet de transport (31) et le deuxième trajet de transport (32) sont agencés côte à côte dans une direction de haut en bas, et
l'appareil de mesure d'échantillon (300) comprend en outre une partie de réception de portoir configurée pour recevoir le deuxième portoir d'échantillons (2b) en provenance du deuxième trajet de transport (32) et placer, à la deuxième position d'aspiration (P2), le deuxième récipient d'échantillon (1b) contenu par le deuxième portoir d'échantillons (2b) reçu.

2. Appareil de mesure d'échantillon (300) selon la revendication 1, dans lequel
la partie de réception de portoir reçoit en outre le premier portoir d'échantillons (2a) en provenance du premier trajet de transport (31) et relaie le premier portoir d'échantillons (2a) reçu vers le deuxième trajet de transport (32).

3. Appareil de mesure d'échantillon (300) selon la revendication 1, dans lequel la partie de réception de portoir comprend
une base de placement (23b) configurée pour permettre à un portoir d'être placé sur celle-ci, et
une partie de mouvement de base de placement configurée pour déplacer la base de placement (23b) vers une position adjacente au premier trajet de transport (31) et une position adjacente au deuxième trajet de transport (32).

4. Appareil de mesure d'échantillon (300) selon la revendication 1, comprenant en outre
un contrôleur (211) configuré pour contrôler une opération de transport qui est effectuée à travers chacun parmi le premier trajet de transport (31) et le deuxième trajet de transport (32).

5. Appareil de mesure d'échantillon (300) selon la revendication 4, comprenant en outre
un détecteur configuré pour détecter le deuxième portoir d'échantillons (2b) mis en place sur la partie de mise en place de portoir d'échantillons (23) ou le deuxième récipient d'échantillon (1b) contenu par le deuxième portoir d'échantillons (2b), dans lequel
le contrôleur (211) contrôle, lorsque le détecteur a détecté le deuxième portoir d'échantillons (2b) ou le deuxième récipient d'échantillon (1b), le premier trajet de transport (31) et le deuxième trajet de transport (32) pour : interdire l'envoi du premier portoir d'échantillons (2a) présent sur la partie de mise en place de portoir d'échantillons (23) ; et transporter le deuxième portoir d'échantillons (2b) vers la deuxième position d'aspiration (P2) via le deuxième trajet de transport (32).

6. Appareil de mesure d'échantillon (300) selon la revendication 4, comprenant en outre
un détecteur configuré pour détecter le deuxième portoir d'échantillons (2b) mis en place sur la partie de mise en place de portoir d'échantillons (23) ou le deuxième récipient d'échantillon (1b) contenu par le deuxième portoir d'échantillons (2b), dans lequel
le contrôleur (211) contrôle, lorsque le détecteur a détecté le deuxième portoir d'échantillons (2b) ou le deuxième récipient d'échantillon (1b), le premier trajet de transport (31) et le deuxième trajet de transport (32) pour : interdire l'envoi du premier portoir d'échantillons (2a) présent sur le premier trajet de transport (31) ; et transporter le deuxième portoir d'échantillons (2b) vers la deuxième position d'aspiration (P2) via le deuxième trajet de transport (32).

7. Appareil de mesure d'échantillon (300) selon la revendication 4, comprenant en outre
une partie de collecte de portoir (22) configurée pour collecter le deuxième portoir d'échantillons (2b),
dans lequel
le contrôleur (211) contrôle le deuxième trajet de transport (32) de sorte que le deuxième portoir d'échantillons (2b) transporté vers la deuxième position d'aspiration (P2) est collecté sur la partie de collecte de portoir (22) via le deuxième trajet de transport (32).

8. Appareil de mesure d'échantillon (300) selon la revendication 7, comprenant en outre
une partie de réception de portoir configurée pour recevoir le deuxième portoir d'échantillons (2b) en provenance du deuxième trajet de transport (32), placer, à la deuxième position d'aspiration (P2), le deuxième récipient d'échantillon (1b) contenu par le deuxième portoir d'échantillons (2b) reçu, recevoir le premier portoir d'échantillons (2a) en provenance du premier trajet de transport (31), et relayer le premier portoir d'échantillons (2a) reçu vers le deuxième trajet de transport (32), dans lequel
le contrôleur (211) contrôle la partie de réception de portoir et la deuxième partie de transport de sorte que le premier portoir d'échantillons (2a) transporté vers la première position d'aspiration (P1) est collecté sur la partie de collecte de portoir (22) via la partie de réception de portoir et le deuxième trajet de transport (32).

9. Appareil de mesure d'échantillon (300) selon la revendication 8, comprenant en outre
un détecteur configuré pour détecter le deuxième portoir d'échantillons (2b) mis en place sur la partie de mise en place de portoir d'échantillons (23) ou le deuxième récipient d'échantillon (1b) contenu par le deuxième portoir d'échantillons (2b), dans lequel
le contrôleur (211) contrôle, lorsque le détecteur a détecté le deuxième portoir d'échantillons (2b) ou le deuxième récipient d'échantillon (1b), 1a partie de réception de portoir et le deuxième trajet de transport (32) de sorte que le premier portoir d'échantillons (2a) présent sur chacun parmi la partie de réception de portoir et le deuxième trajet de transport (32) est collecté sur la partie de collecte de portoir (22).

10. Appareil de mesure d'échantillon (300) selon la revendication 1, dans lequel
la partie d'aspiration (111) aspire un échantillon en amenant le tube d'aspiration (701, 703) à entrer dans le premier récipient d'échantillon (1a) présent à la première position d'aspiration (P1).

11. Appareil de mesure d'échantillon (300) selon la revendication 1, dans lequel
la partie d'aspiration (111) aspire un échantillon en amenant un tube d'aspiration (701, 703) autre que le tube d'aspiration (701, 703) à entrer dans le premier récipient d'échantillon (1a) présent à la première position d'aspiration (P1).

12. Appareil de mesure d'échantillon (300) selon la revendication 10 ou 11, dans lequel
la deuxième position d'aspiration (P2) est une position éloignée d'une région située sous un trajet de mouvement à travers lequel le tube d'aspiration (701, 703) ou
un tube d'aspiration (701, 703) autre que le tube d'aspiration (701, 703) est déplacé de la première position d'aspiration (P1) vers une position d'éjection (P31) à laquelle l'échantillon aspiré est éjecté dans un récipient.

13. Appareil de mesure d'échantillon (300) selon la revendication 1, dans lequel
le premier trajet de transport (31) et le deuxième trajet de transport (32) sont agencés côte à côte de manière à être parallèles l'un par rapport à l'autre.

14. Appareil de mesure d'échantillon (300) selon la revendication 1, dans lequel
le premier trajet de transport (31) est disposé au-dessus du deuxième trajet de transport (32).

15. Appareil de mesure d'échantillon (300) selon la revendication 1, dans lequel
la partie de réception de portoir comprend une partie d'inhibition de mouvement configurée pour inhiber le mouvement du deuxième portoir d'échantillons (2b) sur la partie de réception de portoir.

16. Appareil de mesure d'échantillon (300) selon la revendication 1, dans lequel
la partie d'aspiration (111) comprend le tube d'aspiration (701, 703) et une partie de mouvement de tube d'aspiration (701, 703) configurée pour déplacer le tube d'aspiration (701, 703).

17. Appareil de mesure d'échantillon (300) selon la revendication 16, dans lequel
la partie de mouvement de tube d'aspiration (701, 703) comprend
un premier mécanisme de mouvement (710) configuré pour déplacer le tube d'aspiration (701) le long du premier trajet de transport (31), et
un deuxième mécanisme de mouvement (720) configuré pour déplacer le tube d'aspiration (701) dans une direction croisant le premier trajet de transport (31) dans une vue en plan.

18. Appareil de mesure d'échantillon (300) selon la revendication 1, dans lequel
la partie de mise en place de portoir d'échantillons (23) comprend
une première partie de mise en place configurée pour permettre au premier portoir d'échantillons (2a) d'être mis en place sur celle-ci et
une deuxième partie de mise en place configurée pour permettre au deuxième portoir d'échantillons (2b) d'être mis en place sur celle-ci, et
l'appareil de mesure d'échantillon (300) comprend en outre une partie de transport configurée pour recevoir le premier portoir d'échantillons (2a) en provenance de la première partie de mise en place, relayer le premier portoir d'échantillons (2a) reçu vers le premier trajet de transport (31), recevoir le deuxième portoir d'échantillons (2b) en provenance de la deuxième partie de mise en place, et relayer le deuxième portoir d'échantillons (2b) reçu vers le deuxième trajet de transport (32).

19. Appareil de mesure d'échantillon (300) selon la revendication 1, comprenant en outre :
un troisième trajet de transport (91) à travers lequel le premier portoir d'échantillons (2a) ayant traversé au moins l'un parmi le premier trajet de transport (31) et le deuxième trajet de transport (32) est transporté via une troisième position d'aspiration à laquelle un échantillon doit être aspiré ;
un quatrième trajet de transport (92) à travers lequel le deuxième portoir d'échantillons (2b) ayant traversé au moins l'un parmi le premier trajet de transport (31) et le deuxième trajet de transport (32) est transporté sans passer par la troisième position d'aspiration ; et
une deuxième unité de mesure (12) comprenant une deuxième partie d'aspiration (770) configurée pour aspirer un échantillon en amenant un deuxième tube d'aspiration à entrer dans le deuxième récipient d'échantillon (1b) qui est présent à une quatrième position d'aspiration et qui est contenu par le deuxième portoir d'échantillons (2b) transporté à travers le quatrième trajet de transport (92), la deuxième partie d'aspiration (701) étant en outre configurée pour déplacer le deuxième tube d'aspiration vers une deuxième position d'éjection (P31), la deuxième partie d'aspiration (701) étant en outre configurée pour éjecter l'échantillon aspiré dans un récipient à la deuxième position d'éjection (P31), la deuxième unité de mesure (10) étant configurée pour mesurer l'échantillon, dans lequel
la troisième position d'aspiration est une position éloignée d'une région située sous un trajet de mouvement à travers lequel le deuxième tube d'aspiration est déplacé de la quatrième position d'aspiration vers la deuxième position d'éjection (P31).

20. Procédé de mesure d'échantillon comprenant :
transporter, par un premier trajet de transport (31), un premier portoir d'échantillons (2a) contenant un premier récipient d'échantillon (1a) vers une première position d'aspiration (P1) à laquelle un échantillon doit être aspiré ;
détecter qu'un deuxième portoir d'échantillons (2b) contenant un deuxième récipient d'échantillon (1b) devant être soumis à une mesure d'échantillon de préférence au premier récipient d'échantillon (1a) a été mis en place ;
transporter, par un deuxième trajet de transport (32) et une partie de réception de portoir, lorsqu'il est détecté que le deuxième portoir d'échantillons (2b) a été mis en place, le deuxième portoir d'échantillons (2b) mis en place sans passer par la première position d'aspiration (P1) de manière à placer, à une deuxième position d'aspiration (P2), le deuxième récipient d'échantillon (1b) contenu par le deuxième portoir d'échantillons (2b) ;
aspirer un échantillon à partir du deuxième récipient d'échantillon (1b) présent à la deuxième position d'aspiration (P2), en amenant un tube d'aspiration (701, 703) à entrer dans le deuxième récipient d'échantillon (1b) ;
déplacer le tube d'aspiration (701, 703) de la deuxième position d'aspiration (P2) vers une position d'éjection (P31) sans passer par une position au-dessus de la première position d'aspiration (P1) ;
éjecter l'échantillon dans un récipient à la position d'éjection (P31) ; et mesurer l'échantillon éjecté dans le récipient,
**caractérisé en ce que**
le premier trajet de transport (31) et le deuxième trajet de transport (32) sont agencés côte à côte dans une direction de haut en bas, et
la partie de réception de portoir est configurée pour recevoir le deuxième portoir d'échantillons (2b) en provenance du deuxième trajet de transport (32) et placer, à la deuxième position d'aspiration (P2), le deuxième récipient d'échantillon (1b) contenu par le deuxième portoir d'échantillons (2b) reçu.

21. Appareil de mesure d'échantillon (300) comprenant :
une partie de mise en place de portoir d'échantillons (23) configurée pour permettre à un premier portoir d'échantillons (2a) et à un deuxième portoir d'échantillons (2b) d'être mis en place sur celle-ci, le premier portoir d'échantillons (2a) contenant un premier récipient d'échantillon (1a), le deuxième portoir d'échantillons (2b) contenant un deuxième récipient d'échantillon (1b) devant être soumis à une mesure d'échantillon de préférence au premier récipient d'échantillon (1a) ;
une partie de collecte de portoir (22) configurée pour collecter le premier portoir d'échantillons (2a) ;
un premier trajet de transport (31) à travers lequel le premier portoir d'échantillons (2a) mis en place sur la partie de mise en place de portoir d'échantillons (23) est transporté via une première position d'aspiration (P1) à laquelle un échantillon doit être aspiré à partir du premier récipient d'échantillon (1a) ;
un deuxième trajet de transport (32) à travers lequel le premier portoir d'échantillons (2a) contenant le premier récipient d'échantillon (1a), à partir duquel un échantillon a été aspiré, est transporté vers la partie de collecte de portoir (22), et le deuxième portoir d'échantillons (2b) mis en place sur la partie de mise en place de portoir d'échantillons (23) est transporté sans passer par la première position d'aspiration (P1) ; et
une unité de mesure (10) configurée pour
aspirer un échantillon à partir du premier récipient d'échantillon (1a) qui est présent à la première position d'aspiration (P1) et qui est contenu par le premier portoir d'échantillons (2a) transporté à travers le premier trajet de transport (31), mesurer l'échantillon aspiré à partir du premier récipient d'échantillon (1a),
aspirer un échantillon à partir du deuxième récipient d'échantillon (1b) qui est présent à une deuxième position d'aspiration (P2) et qui est contenu par le deuxième portoir d'échantillons (2b) transporté à travers le deuxième trajet de transport (32), et mesurer l'échantillon aspiré à partir du deuxième récipient d'échantillon (1b).

22. Procédé de mesure d'échantillon comprenant :
transporter un premier portoir d'échantillons (2a) contenant un premier récipient d'échantillon (1a) vers une première position d'aspiration (P1) à laquelle un échantillon doit être aspiré ;
aspirer un échantillon à partir du premier récipient d'échantillon (1a) présent à la première position d'aspiration (P1) et mesurer l'échantillon ;
transporter le premier portoir d'échantillons (2a) contenant le premier récipient d'échantillon (1a), à partir duquel l'échantillon a été aspiré, vers une partie de collecte de portoir (22) via un trajet de transport ;
détecter qu'un deuxième portoir d'échantillons (2b) contenant un deuxième récipient d'échantillon (1b) devant être soumis à une mesure d'échantillon de préférence au premier récipient d'échantillon (1a) a été mis en place ;
transporter, lorsqu'il est détecté que le deuxième portoir d'échantillons (2b) a été mis en place, le deuxième portoir d'échantillons (2b) mis en place sans passer par la première position d'aspiration (P1) mais via le trajet de transport de manière à placer, à une deuxième position d'aspiration (P2), le deuxième récipient d'échantillon (1b) contenu par le deuxième portoir d'échantillons (2b) ; et
aspirer un échantillon à partir du deuxième récipient d'échantillon (1b) présent à la deuxième position d'aspiration (P2) et mesurer l'échantillon de préférence au premier récipient d'échantillon (1a) présent à la première position d'aspiration (P1).
